Europäisches Patentamt

European Patent Office

Office européen des brevets

(11) Publication number: 0 460 216 A1

# EUROPEAN PATENT APPLICATION
## published in accordance with Art. 158(3) EPC

(21) Application number: 90913227.6

(22) Date of filing: 11.09.90

(86) International application number:
PCT/JP90/01163

(87) International publication number:
WO 91/04533 (04.04.91 91/08)

(51) Int. Cl.⁵: G06F 12/00

(30) Priority: 12.09.89 JP 236051/89
12.09.89 JP 236054/89
17.10.89 JP 270044/89
13.12.89 JP 323096/89
13.12.89 JP 323097/89
13.12.89 JP 323098/89
07.03.90 JP 56042/90
16.03.90 JP 66155/90
16.03.90 JP 66158/90
20.03.90 JP 71609/90
20.03.90 JP 71612/90

(43) Date of publication of application:
11.12.91 Bulletin 91/50

(84) Designated Contracting States:
DE FR GB

(71) Applicant: FUJITSU LIMITED
1015, Kamikodanaka Nakahara-ku
Kawasaki-shi Kanagawa 211(JP)

(72) Inventor: KAKEHI, Gen
20-9-101, Edaminami 5-chome Midori-ku
Yokohama-shi Kanagawa 227(JP)
Inventor: RYU, Tadamitsu 1-604 Konandai
Kotohausu
1151-121, Kamigocho Sakae-ku
Yokohama-shi Kanagawa 247(JP)
Inventor: MOGI, Yoshio
102-4, Hiraicho
Tochigi-shi Tochigi 328(JP)
Inventor: FUKATSU, Takanori 101 Sankei
Manshon
665, Miyazaki Miyamae-ku
Kawasaki-shi Kanagawa 213(JP)
Inventor: ARAKI, Hiroshi 458 Fujitsu
Shimonogeryo

3-9-1, Shimonoge Takatsu-ku
Kawasaki-shi Kanagawa 213(JP)
Inventor: KUSABA, Yoshiaki 271 Fujitsu
Shimonogeryo
3-9-1, Shimonoge Takatsu-ku
Kawasaki-shi Kanagawa 213(JP)
Inventor: MURAKAWA, Masahiko 421 Fujitsu
Dainiyurigaokaryo
2-7-5, Chiyogaoka Asao-ku
Kawasaki-shi Kanagawa 215(JP)
Inventor: TAKAHARA, Toshio
578-1, Futago
Takatsu-ku Kawasaki-shi Kanagawa 213(JP)
Inventor: HIRONO, Shingo
3-23-6-403, Nerima
Nerima-ku Tokyo 176(JP)
Inventor: OHSHIRO, Takashi W-8-210 Fujitsu
Nakaharahausu
532, Shimokodanaka Nakahara-ku
Kawasaki-shi Kanagawa 211(JP)
Inventor: MATSUMOTO, Tohru
1156-1, Nagatsutacho Midori-ku
Yokohama-shi Kanagawa 227(JP)
Inventor: OHISHI, Jiroh
1124, Aotocho Midori-ku
Yokohama-shi Kanagawa 226(JP)
Inventor: ENDO, Mamoru
2-8-1-110, Minamidai Sagamihara-shi
Kanagawa 228(JP)
Inventor: GAMOH, Mineo
27-5, Uenashi Yuki-shi
Ibaragi 307(JP)
Inventor: TANIDA, Toshitsugu
577, Oaza Tagawa Oyama-shi
Tochigi 307-02(JP)
Inventor: OHYA, Takashi
2464, Oaza Ko Fujiokamachi
Shimotsuga-gun Tochigi 349-13(JP)

Inventor: **HAGIYA, Tomohiro 502**
**Banhausukyomachi Sangureisu**
**6-13, Wateridasannocho Nakahara-ku**
**Kawasaki-shi Kanagawa 210(JP)**

(74) Representative: **Lehn, Werner, Dipl.-Ing. et al**

**Hoffmann, Eitle & Partner Patentanwälte**

**Arabellastrasse 4**

**W-8000 München 81(DE)**

(54) **SECURITY MANAGEMENT METHOD IN A DECENTRALIZED DATA BASE SYSTEM.**

(57) A security management method of terminals and data base in a decentralized data base system. The object is to further improve reliability of security for terminals and data base, and to grant access by a user by a method simpler than conventional ones and in an easy-to-use flexible form. To achieve this, the present invention provides a system comprising means for controlling terminals in groups, for setting a terminal for group management, and for reinforcing and making flexible the security by multiplexing the permission conditions of access to the terminals and to the data base with respect to a password and the like.

# Fig.5

[Field of the invention]

This invention deals with security control in a distributed database system connected to a communication network such as a public network. Security control prevents data from being destroyed and assures security when an attempt is made to access resources, such as a terminal and database, within the system.

Security control controls access to communication terminal or database by managing the levels of the terminals and database, by managing the access rights of users and passwords, and by protecting data in the database.

[Background of the invention]

Prior database systems can be classified into centralized database systems and distributed database systems according to the control method.

In a centralized database system, the center host controls all data, and each terminal in the network must access the center host to retrieve necessary information. This facilitates database management and retrieval. Since the database is basically controlled in the open mode, which means a request for accessing the database is generally accepted and rejected only in special cases, complex security control for the database can be performed readily, but is also liable to make errors.

In a distributed network system, the database is divided into several database groups and each group is distributed to and controlled by the corresponding terminal in the network. A request to access a database must be issued to the terminal that controls it. While database management and retrieval involve more than one terminal and become more difficult than in a centralized database system, a distributed network system has the advantage of easy security control because the database in each terminal is controlled in the closed mode, which means that an access request from any other terminal is generally rejected and accepted only when special permission is given. However, since each terminal controls the database distributed to it independently, a prior distributed network system must perform the difficult tedious of setting and updating security control information in each of the terminals in order to control security so that access to the database is enabled or disabled in a group consisting of several terminals.

Recently, construction of different distributed database systems connected to a nationwide public network has begun. In these systems data is managed and stored in the terminal that generated it, and only a part of or all of the data is shared within a specific terminal group divided according to the regional block, job type and so forth. The need to perform effective security control for databases shared by a group consisting of several terminals has been increasing.

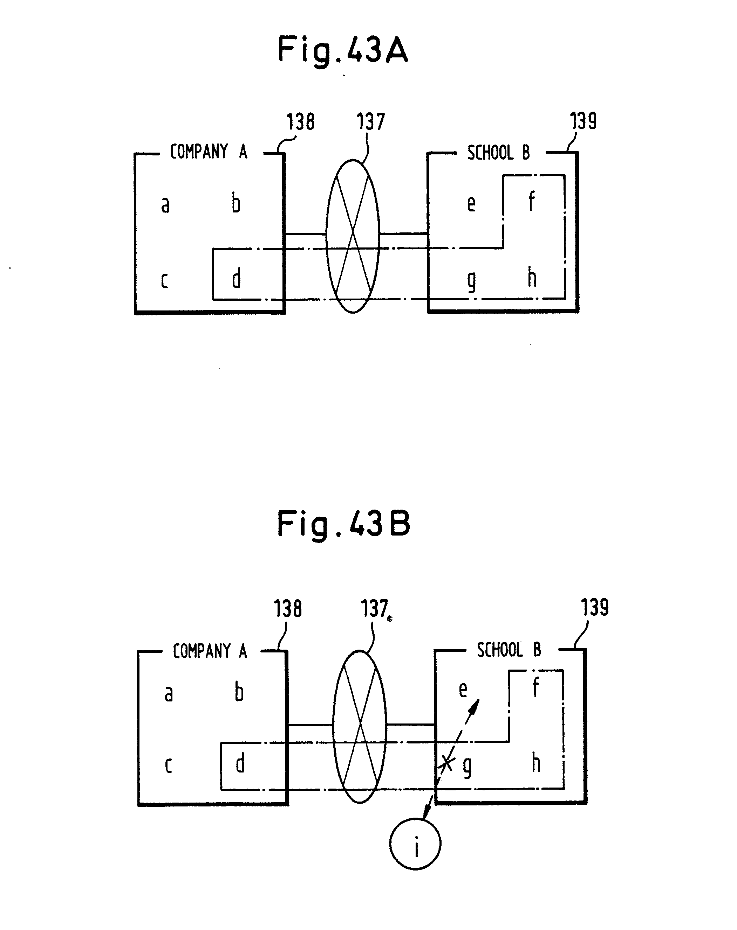

FIG. 43A illustrates the prior technologies.

In FIG. 43A, the number 137 indicates a public network, numbers 138 and 139 indicate group labels, and the number 140 indicates a member label.

As shown in the figure, in prior database systems connected to public networks the group label method and member label method are provided to ensure security.

The group label method uses a label (name), determined by each system of a group (company or school), to define that group. For example, the system (2) of company A is given 138 as its group label and the system (3) of school B is given 139 as its group label. To access the system of company A, or the group label 138, the user must enter a password that satisfies group label 138.

The member label method uses a label that defines the members from different groups who share common characteristics and want to define a system different from a system of a group. For example, if certain members from group labels 138 and 139 have organized a group to carry out the X project, the group is given 140 as its member label. A user whose password satisfies member label 140 can access the system of member label 140 from the system of label 139.

In the figure, each of the lower-case letters a to h indicates a password used by a user for security, or a terminal in which a user has input the password (called simply a password hereinafter). In short, they indicate a user who has (knows) the password and uses the terminal.

According to the figure, passwords a, b c, and d of the group label 138 can access each other via public network 137. Similarly, the passwords e, f, g, and h of the group label 138 can also access each other via public network 137. Although access is normally disabled between group labels 138 and 139, the passwords d, f, g, and h of member label 140 can access each other via public network 137.

However, if password i, which belongs to neither group label 138 nor 139 (that is, the password i is undefined), needs to communicate with a password of either group label 138 or 139, (e for example, as shown in FIG. 43B), the following problem will occur: Password i cannot access group label 139, and even if it can access group label 139 (system of school B), the security for the other passwords within group label 139 (f, g, and h), may not be guaranteed.

In communication by a personal computer connected to a public network, the method of starting communication by entering private IDs and passwords is well known. LAN and WAN, which use a leased line to establish connection with other terminals within a closed user group, are also well known.

If a public network is used, an entire country may constitute a group, and the resources owned by each terminal are released to all of the users who know the password necessary to establish communication. If a LAN or WAN is used, the terminals which can establish communication are restricted regionally or locally because leased lines are used.

Communication between a public network and leased line becomes more complicated. So does communication between a network connected to one leased line and another network connected to another leased line. Therefore, a method for sending a large amount of data, such as image information, easily without it being affected by the type of communication line must be invented.

In prior distributed database systems, the authority of a user has been checked in one of the following ways:

① Checked by the computer of the terminal operated directly by the user himself

② Checked by the computer of one specific terminal within the system

If the terminal operated directly by the user using system 1 or 2 above is not always the same, the following problems may occur:

If the systems is ① , the authority information for all users must be kept in every terminal within the system. It is also difficult to maintain information consistency between terminals.

If the system is ② , changing authority information when using a terminal having no authority information becomes more complicated.

In a prior system, security is provided by assigning a rank, according to priority of security level to each program, data item, job, or other database operation stored in the database.

In this type of security control system, in order to specify the users who can access each process, a rank is assigned to each process based on its priority, security level, or necessity and in accordance with the organization's course of action.

As an example, assume the following: Five ranks (1, 2, 3, 4, and 5) are set with 1 as the lowest and 5 as the highest. They are assigned to the processes S1, S2, S3, S4, S5, S6, and S7 as shown below:

| Process | S1 | S2 | S3 | S4 | S5 | S6 | S7 |
|---------|----|----|----|----|----|----|----|
| Rank | 1 | 2 | 4 | 3 | 5 | 4 | 1 |

(Lower <--1 2 3 4 5 --> Higher)

It is assumed that the rank of user A is "3," and that of user B is "2."

In this example, user A can execute processes S1, S2, S4, and S7 because their rank is 3 or below and user B can execute processes S1, S2, and S7 because their rank is 2 or below.

Suppose that a job requires user B (rank 2) to execute the process S3 (rank 4). By raising the rank of user B to "4," you enable him to access processes S1, S2, S3, S4, S6, and S7 because their rank is 4 or below. But, S3, S4, and S6 are processes user B was not allowed to access (protected) initially. Therefore, even though it is necessary to enable user B to execute the process S3, he should not be allowed to access the processes S4 and S6.

As described above, this prior system has not been a successful method for changing the protection of a process with a higher rank so that access is properly enabled only when the occasion demands it.

In the prior system, user ID (user identification code) and password check the authority of a user.

However, if one's ID number and password are decoded or leaked, a stranger who has no authority could access the system easily and steal data.

Since only one password was assigned to each user and the authority was checked only when a request for accessing the system was issued, the possibility of having one's password stolen was very high.

A person who has found another user's ID and/or password could wrongfully access the system and request its database just as if he were an authorized user. The prior system failed to offer the users adequate security, because somebody else could gain access to their database and data (resources) by obtaining their user ID and/or password.

An authority check is performed by password between a user and terminal, between a user and system

4

resource, and so forth. In a database system, an authority check is performed between a user and a database. This check is performed by comparing the password entered by the user with the one previously set for each system resource or database (resource).

A typical example of a password is a personal identification number. Each user remembers his own password as a string consisting of characters and/or numbers.

By using personal identification numbers, the configuration of the system for authority checks can be made relatively simple and can be realized at a low cost.

However, users are likely to choose their own birth date, telephone number or something that has some meaning to them as their identification number. This makes it easier for others to guess their identification number and increases the possibility of password leakage. Therefore, the problem of failing to offer adequate security for the system resources still remains.

This problem has been too important to ignore in distributed database systems, particularly those that connect database terminals via a switched network (public network), because an unauthorized user who uses the public network may gain access to and use the database.

In a system which uses both user ID and passwords to access the database, users are allowed to use their simplified ID to enter the system because it is tiresome to input one's ID and password each time one accesses the system. Especially if one uses the database frequently. However, the simplified ID method rejected a registration request if the entered ID was the same as one of the IDs already registered. This indicated that the request could not be accepted because that simplified ID had been already registered. This could disclose the registered simplified IDs to strangers who might use them unfairly.

In a database system consisting of file units, a file is usually duplicated and file data is saved (copied) because the maintenance of data must be assured in case any trouble occurs in the system. In order to save file data, a free file area larger than the file size required for saving must be allocated.

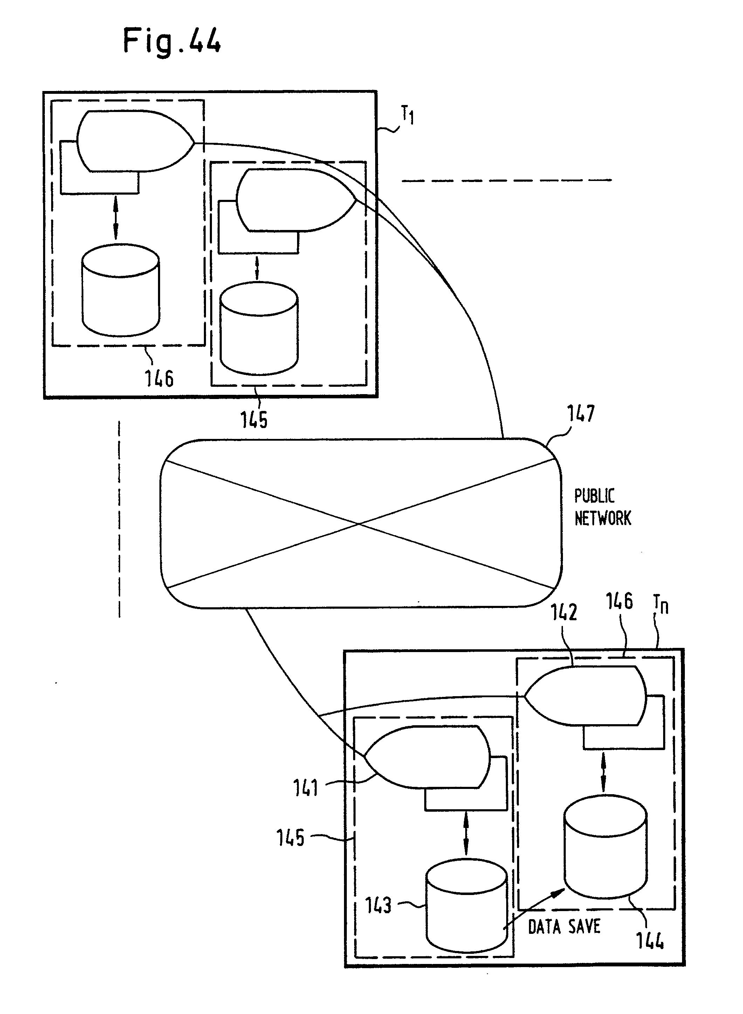

A prior file saving method in a network system in which each of the terminals consists of an electronic data-processing system and is connected to a public network is illustrated in FIG. 44.

Terminals $T_1$ to $T_n$ are connected to public network 147, and each terminal is provided with current processing section 145 and secondary processing section 146. These processing sections also have 141 and 142, each of which consists of the application program, the database management system, operating system and so forth. These processing stations also have the database file units, 143 and 144. The file data stored in file unit 143 of the current processing section 145 is saved periodically, or when necessary, into file unit 144 of the secondary processing section 146.

In the prior file saving method, in a network system in which several terminals are connected to a public network the cost of the entire system increases because secondary processing section 146 can save files for each terminal.

In prior distributed database systems, if a terminal requests the terminal managing the database to transmit a program, the requesting terminal must store the transmitted program (called the requested program) in secondary storage and install it as a system resource in the terminal before it can be used. Since the requested program remains in the secondary storage of the requesting terminal even after processing termination, and can be used again, the number of times the program is used cannot be counted.

[Object of the invention]

It is an object of the present invention to provide a method that facilitates security control at the terminal group level for the database distributed to each terminal in a distributed database system connected to a communication network such as a public network.

It is another object of the invention to provide communication with a remote terminal within the access range, regardless of the type of the communication network, when a large amount of data is transmitted via a communication network.

The invention also intends to provide security control that enables communication with a remote terminal having a different group or member label.

It is a further object of the invention to provide a method for managing authority information in a distributed database system in which registration and change of authority information of the users can be facilitated and a reliable authority check can be performed.

It is a still further object of the invention to provide a method which enables a user to access the resources easier without being restricted by the previous access enable/disable relationships fixed according to the rank of an established hierarchy.

It is another object of the invention to provide security control that can increase data security according

5

to the priority of the data in the database or according to the rank of the user.

A further object of the invention is to provide a method which prevents unauthorized access to the system more securely than in the prior method.

The invention also intends to provide a method which enables effective use of simplified IDs without rejecting duplicate registration.

It is yet another object of the invention to provide a file unit to which data can be effectively saved when it needs to be.

Still another object of the invention is to provide a method which performs accounting in accordance with the number of times a program is used. (If the program is used as data of the database.)

This invention solves the aforementioned problems as follows:

A centralized database system has the advantage of easy database management. In order to also offer this advantage to a distributed database system connected to a public network, this invention groups several terminals sharing distributed databases and treats them as if they were a centralized database system. The security control function is provided to one of the terminals in each group. If a request to access the database on a terminal is issued, the terminal inquires the other terminal with the control function to see whether access can be enabled or disabled.

This invention can also enable hierarchical security control which deals with data extending over several groups by ranking a terminal with another security control function ever the terminal with the security control function in each group.

In this invention, a label information holding section and a level information holding section are provided for each terminal of a distributed database system. The terminals are configured in such a way that when they try to communicate with each ether, communication is performed only when communication for the said label and access to the said level is enabled.

An advantage of this invention in a system in which both group label and member label are defined, is to enable terminals belonging to different groups to communicate with each other if they enter the same keyword. In order to do this, a keyword to be shared between different groups (between keywords having different group labels) must be defined in advance.

Still another advantage of this invention is the ability to enable distributed control of authority information of the terminals in the system so that the terminals can exchange their information and perform an authority check as necessary. In order to make use of this advantage, authority information of a user in the system is registered only in the terminal which the user mainly uses. The terminal in which the user's authority information is registered is identified by the user's user identification code (user ID).

This invention can still offer another advantage if the key code of the terminal attempting to access is registered in the label of each rank in a hierarchical structure assigned to each of the terminals to be accessed. If the key code is input, the accessed data of the label specified by the key code can be made available without being restricted by the original rank of the accessing terminal.

A further advantage of this invention is the ability to enable two or more passwords to be registered for each user in advance. According to the current time or elapsed time, the valid password is replaced or changed. A user is asked to enter a password at the issuance of an access request or during processing and only when the entered password matches the one valid at the time, can the user can gain access.

A still further advantage of this invention is to enable setting of the number of passwords that should be entered to access each data item in the database according to its security level. An access permission is given only when the entered user identification code and the number of the entered passwords and the passwords themselves are all correct.

Another advantage of this invention is to enable setting of the number of passwords that should be entered to access data according to the rank of each user. Access permission is given only when the number of passwords entered by the user and the passwords themselves are correct.

It is still another advantage of this invention to enable adding the time required by the user to enter the password as one of the check conditions. If the period of time required by the user to enter the password is longer than that defined in advance, the system can reject the access request, assuming that it may be an unauthorized access.

It is a further advantage of this invention to assure data security by registering every simplified ID whose registration is requested and by making it a rule to ask a user who has requested the registration of a simplified ID that has already been registered to enter the normal ID in addition to the simplified ID.

If a request to save the file data into a terminal is issued, this invention can make it possible to search for the terminal having the free file size necessary to save the file data and can make that terminal save the file data.

If a request to access a program from the database is issued, this invention can also make it possible to add the erasing program or automatically corrupting program to the terminal that has issued the access request so that the requested program can be erased or corrupted at termination of program processing. This disables reuse of the program.

[Brief description of the drawings]

FIGs. 1A to 43B illustrate this invention.
FIG. 1A is a configuration diagram of security control in a group,
FIG. 1B is a configuration diagram of security control in a hierarchical structure,
FIG. 2 is a configuration diagram of an inter-group managing terminal in a hierarchical structure,
FIG. 3 illustrates terminal group processing,
FIG. 4 illustrates the inter-terminal communication protocol,
FIG. 5 illustrates security control that uses label information and level information,
FIG. 6 is a flowchart of FIG. 5,
FIGs. 7A, 7B, and 7C illustrate the concept of security control that uses group labels, member labels, and keywords, respectively,
FIG. 8 is a detail configuration diagram of FIGs 7A to 7C,
FIG. 9 is a flowchart of data transmission illustrated in FIG. 8,
FIG. 10 illustrates the concept of distributed control of authority information,
FIG. 11 illustrates user identification codes,
FIG. 12 details the illustration in FIG. 10,
FIG. 13 illustrates security control using group labels that associate the accessed terminal in a hierarchical structure to the key code of the accessed terminal,
FIG. 14 illustrates the hierarchical structure of a processing label,
FIG. 15 illustrates the assignment of a hierarchy to a processing label,
FIG. 16 illustrates hierarchical memory,
FIG. 17 is a flowchart of a security check,
FIG. 18 is a flowchart of a protect labeling procedure,
FIG. 19 illustrates the overall configuration of FIG. 13,
FIG. 20 is a configuration diagram in which a valid password is switched according to time,
FIG. 21 is an image diagram of the configuration of a storage file,
FIG. 22 is a flowchart of registration of new passwords,
FIG. 23 is a flowchart of entry into a system,
FIG. 24 is a flowchart of processing after entry into a system,
FIG. 25A illustrates the concept in which the number of passwords is changed according to the priority of data,
FIG. 25B is a detailed configuration diagram of the illustration in FIG. 25A,
FIG. 25C illustrates private information,
FIG. 25D illustrates data information,
FIG. 26 is a flowchart of data reference processing illustrated in FIG. 25A,
FIG. 27A illustrates the concept in which the number of passwords is changed according to the rank of the data and that of the user,
FIG. 27B is a detail configuration diagram of the illustration in FIG. 27A,
FIG. 27C illustrates private information,
FIG. 27D illustrates data information,
FIG. 28 is a flowchart of data reference processing illustration in FIG. 27B,
FIG. 29 illustrates the concept in which the password input time is added as a check condition,
Each of FIGs. 30A, 30B, and 30C illustrates password input control,
FIG. 31 is a flowchart of password input processing,
FIG. 32 is a flowchart of password check processing,
FIG. 33 is a flowchart of password input processing in an diagram different from the one of FIG. 31,
FIG. 34 is a configuration diagram in which a function to deal with duplicate registration of simplified IDs is provided,
FIG. 35 illustrates an ID storage file,
FIG. 36 illustrates a simplified ID duplication check file,
FIG. 37 is a flowchart of registration of a simplified ID,
FIG. 38 is a flowchart of entry into a system,
FIG. 39 illustrates the concept in which an interterminal empty file is used during save of file data,

FIG. 40 is a flowchart of the procedure for saving file data,

FIG. 41 illustrates the concept in which a function to automatically erase or corrupt the program that has been used is provided,

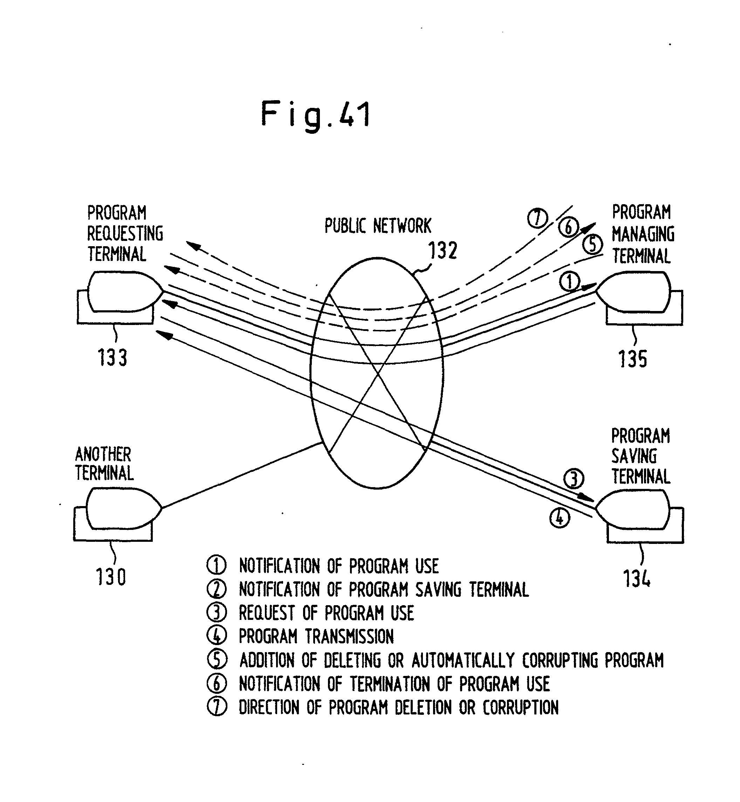

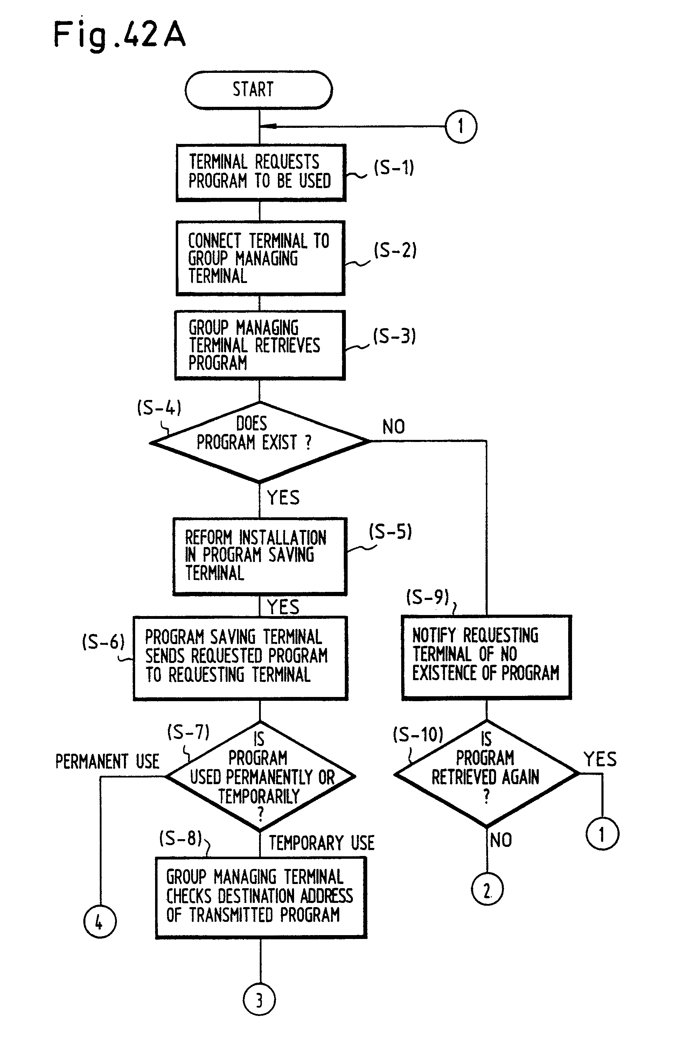

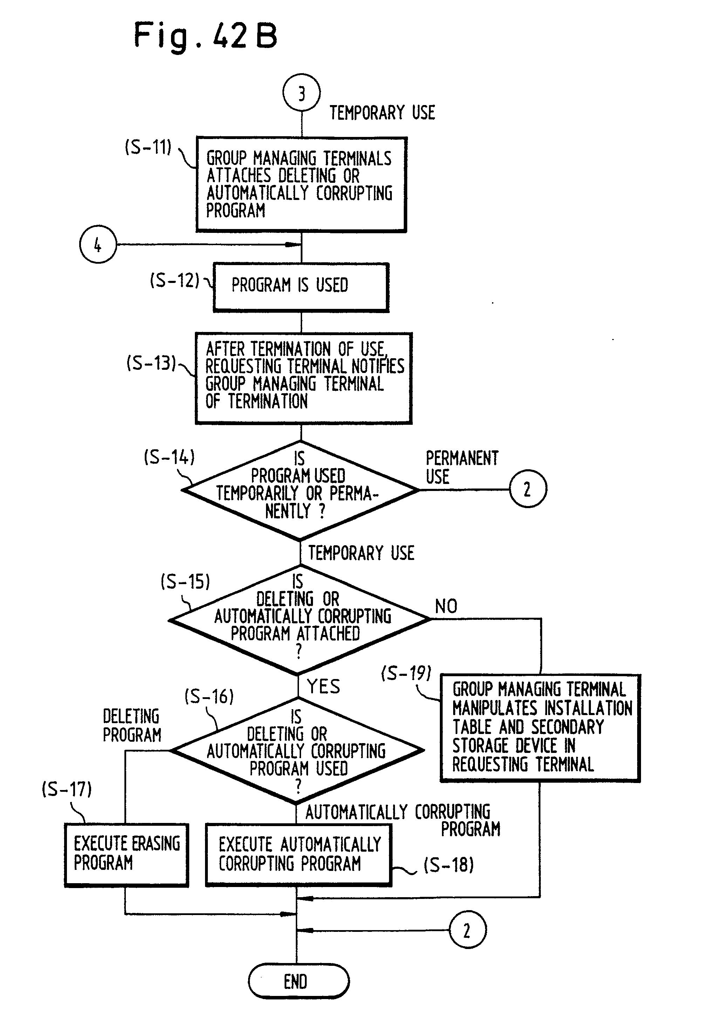

Each of FIGs. 42A and 42B is a detailed flowchart of the illustration in FIG. 41,

FIGs. 43A and 43B illustrate prior security control with the use of group labels, and

FIG. 44 illustrates the prior method for saving file data.

[Description of the preferred embodiment]

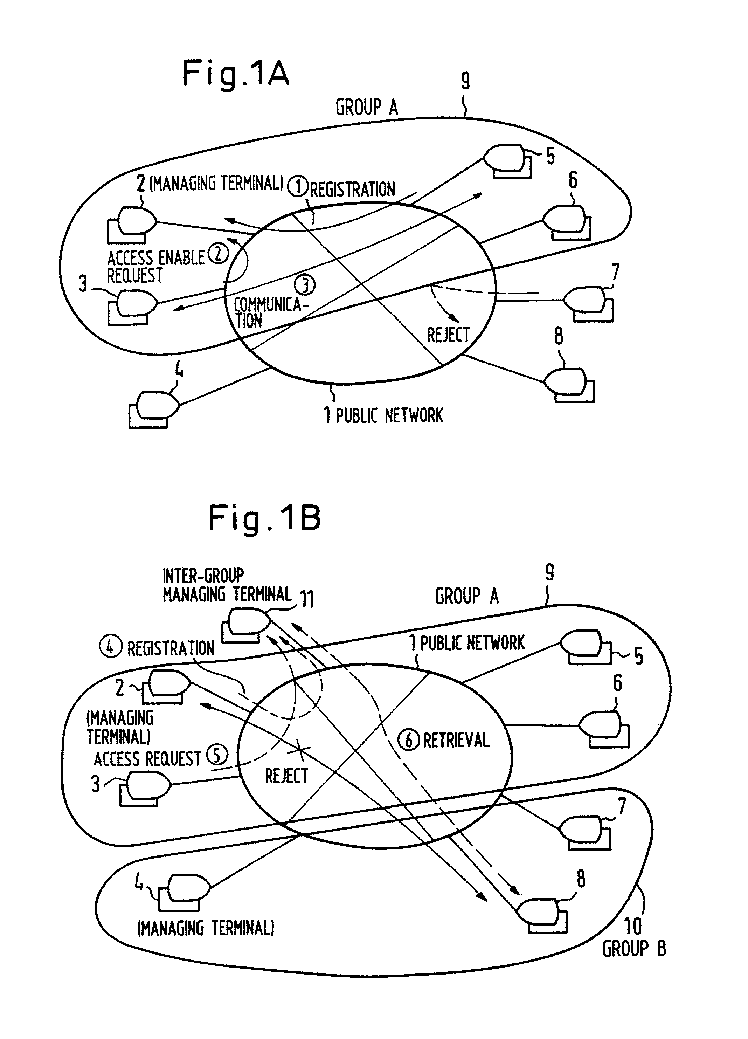

FIG. 1A is a configuration diagram of a distributed database system that performs security control in a group, according to this invention. FIG. 1B is a configuration diagram of a distributed database system that performs security control in a hierarchical structure, according to this invention.

In FIG. 1A, number 1 indicates a public network, each of the numbers 2 to 8 indicate terminals, and number 9 indicates Group A consisting of the terminals 2, 3, 5, and 6. Each of the terminals 2 to 8 consists of an information processing unit provided with a distributed database.

In order to perform security control for the database in the terminals belonging to Group A, the terminal (2) is selected and managing functions are assigned to it. Hereinafter a terminal having the managing functions is called a managing terminal.

Apart from the function to accept or reject a request for accessing the distributed database in the group according to the database type, information type, communication destination and so forth, the managing functions of the managing terminal (2) may include accepting or rejecting an inter-terminal communication request, and managing the distributed database in the group by an index.

In FIG. 1B, Group B consisting of the terminals 4, 7, and 8 is formed in addition to Group A which consists of the terminals 2, 3, 5, and 6 (shown in FIG. 1A). In Group B, the terminal (4) is assigned as the managing terminal and the inter-group managing terminal (11) is also provided to manage the distributed database between Group A and Group B.

The inter-group managing terminal (11) manages, among the distributed database of each group, the information items open to the terminals outside the group and their security information, and sends the requested information item if an access request from a terminal outside the group is acceptable.

In FIG. 1A, the information items which are owned by each terminal belonging to Group A and can be opened to other terminals in Group A are registered in the managing terminal (2) ( ① ). A terminal in Group A must first issue an access enable request to the managing terminal (2) ( ② ) in order to access the distributed database of another terminal in Group A. Managing terminal (2) checks the validity of the request and enables access if the request is valid. If access is enabled, the accessing terminal communicates with the desired terminal and makes an access ( ③ ). Even if a terminal outside Group A issues a request for accessing a terminal in Group A, it cannot communicate with the desired terminal unless managing terminal 2 accepts the request.

Thus, security control within Group A is performed centrally by the managing terminal. For example, the managing terminal may control security, so that the use of the database within the group will be accepted without any restriction while any access request from a terminal outside the group will be rejected.

In the configuration shown in FIG. 1B, managing terminal 2 manages functions within Group A and managing terminal 4 functions within Group B, in the way described in FIG. 1A. The information items that can be opened from group A to group B and these that can be opened from group B to group A are registered in the inter-group managing terminal (11) by each managing terminal ( ④ as an example). For example, if the terminal (3) in Group A wants to access the database of the terminal (8) in Group B, the accessing terminal, in this case the terminal (3), must issue an access enable request to the inter-group managing terminal 11 via the managing terminal (2) ( ⑤ ).

The inter-group managing terminal (11) checks the contents of the access enable request from the accessing terminal (3). If it is found that the access can be enabled as an inter-group access, the inter-group managing terminal (11) retrieves the database of the terminal (8), having the requested information item ( ⑥ ), and sends the information item to the terminal (3) either directly or through the managing terminal (2). Instead of making the inter-group managing terminal 11 send the requested information item, we may also make such an arrangement in which the accessing terminal is notified that it can access the terminal having the information item, if the access request from the accessing terminal is acceptable.

In a large-scale distributed database system, since the number of groups increases and the relationships between groups that share the database becomes complicated, it may be desirable to realize security control in a hierarchical structure.

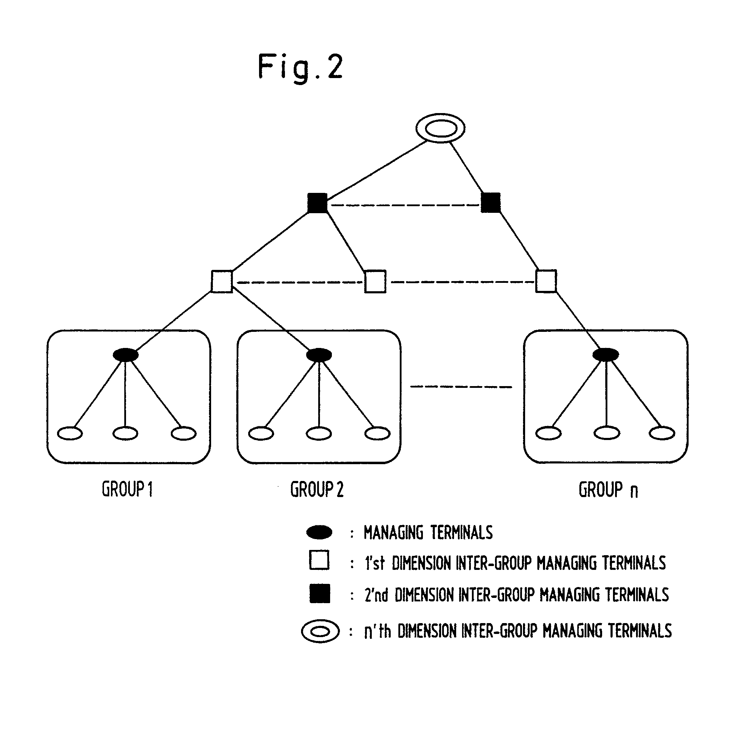

FIG. 2 illustrates the configuration of the inter-group managing terminals for security control in a hierarchical structure. For n number of groups, the inter-group managing terminals of the numbers 1 to n are provided in a hierarchical structure.

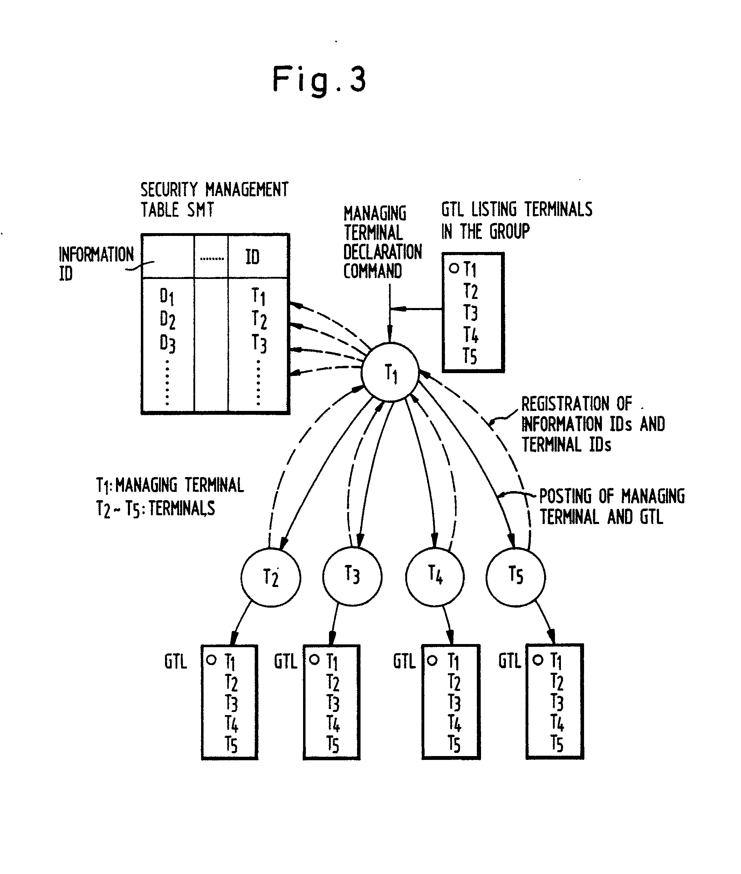

FIG. 3 illustrates the grouping between the managing terminal and terminals under it according to this invention.

In FIG. 3, $T_1$ is the managing terminal and $T_2$ to $T_5$ are the terminals in the group under the control of $T_1$. The GTL lists the terminals in the group.

Initially, terminals $T_1$ to $T_5$ have the same functions. However, $T_1$ can start working as the managing terminal if a managing terminal declaration command is entered into it and a managing program is activated.

When a managing terminal declaration command is entered into $T_1$, the GTL that lists the terminals in the group is also input. In this case, the terminals $T_1$ to $T_5$ are defined in the GTL.

The managing terminal $T_1$ notifies the terminals under it, $T_2$ to $T_5$, that it is now the managing terminal and at the same time transfers the GTL that lists the terminals in the group to each of them. A circle enclosing $T_1$ in each GTL indicates that $T_1$ is the managing terminal.

Each of the terminals $T_2$ to $T_5$ under the control of $T_1$ manages its own GTL. A terminal transfers the information ID (information item) to the managing terminal $T_1$, if its own database contains information that can be shared within the group. The managing terminal $T_1$ registers the information ID transmitted from each terminal in the security management table SMT together with the ID of the transmitting terminal.

After this, if an access enable request is issued from any managed terminal, the managing terminal $T_1$ references the security management table SMT. If an entry that matches the information ID and terminal ID in the request is found, the access request is accepted. Otherwise, the request is rejected.

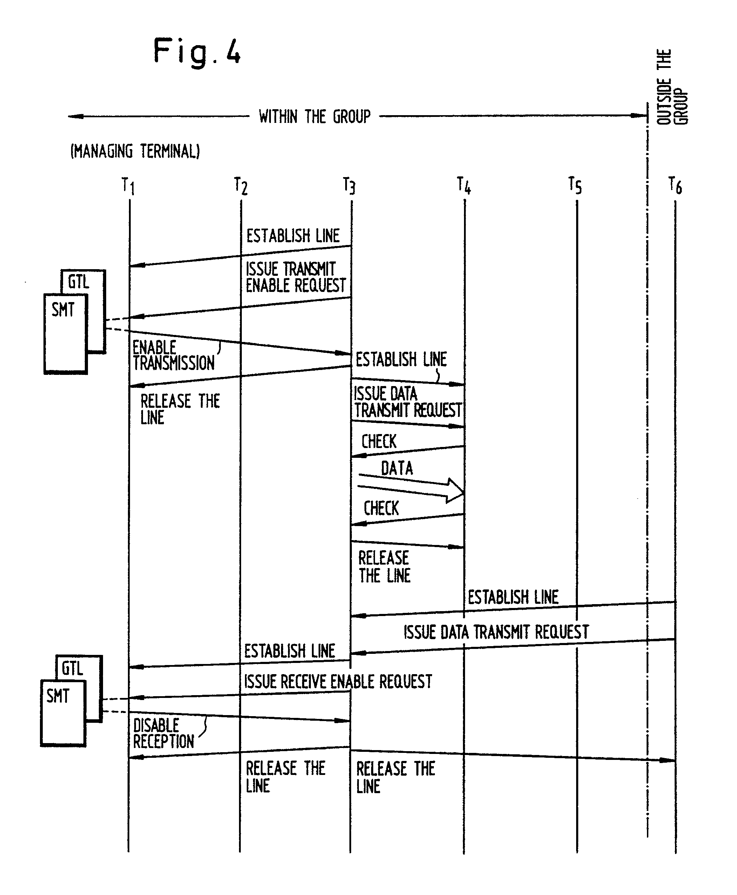

Security control may also be performed by registering the type of information to be opened and the group IDs of the terminals whose access request can be accepted in the security management table SMT instead of registering the information IDs and terminal IDs. FIG. 4 illustrates this.

The illustration in FIG. 4 indicates the inter-terminal communication procedure performed through a public network. In the figure, $T_1$ to $T_5$ are the terminals in the group and $T_6$ is a terminal outside the group. $T_1$ is the managing terminal.

If $T_3$ has an access request for transmitting data to $T_4$, it first establishes a line that connects to $T_1$ and then sends a transmit enable request to $T_1$, specifying $T_4$ as the destination.

At the same time, $T_3$ also specifies the ID of its group to which it belongs and the type of information to be accessed. To confirm that the accessing terminal belongs to own group $T_1$ checks the GTL that lists the terminals in the group. $T_1$ also checks the security management table SMT to see if the requested information type and the group ID are registered, and if so, enables access.

After access is enabled, $T_3$ releases the line connecting to $T_1$ and issues a data transmit request after establishing a line that connects to $T_4$. If an acknowledgment is returned, $T_3$ transmits data and after transmission is over, releases the line.

If $T_6$, which that does not belong to the group, has a request for sending data to $T_3$, it establishes a line that connects to $T_3$, and then issues a data transmit request.

Upon receiving the request, $T_3$ issues a receive enable request to $T_1$ so that data from $T_6$ can be received. $T_1$ references the GTL that lists the terminals in the group to find that $T_6$ does not belong to the group, and returns a negative response. As a result, $T_3$ releases the connecting line to $T_6$ and rejects communication.

By grouping the terminals, centralized control can be performed locally in a distributed database system where many terminals are connected to a public network. This improves the efficiency of database management and retrieval, as well as enabling security control with you chose flexibility and high reliability.

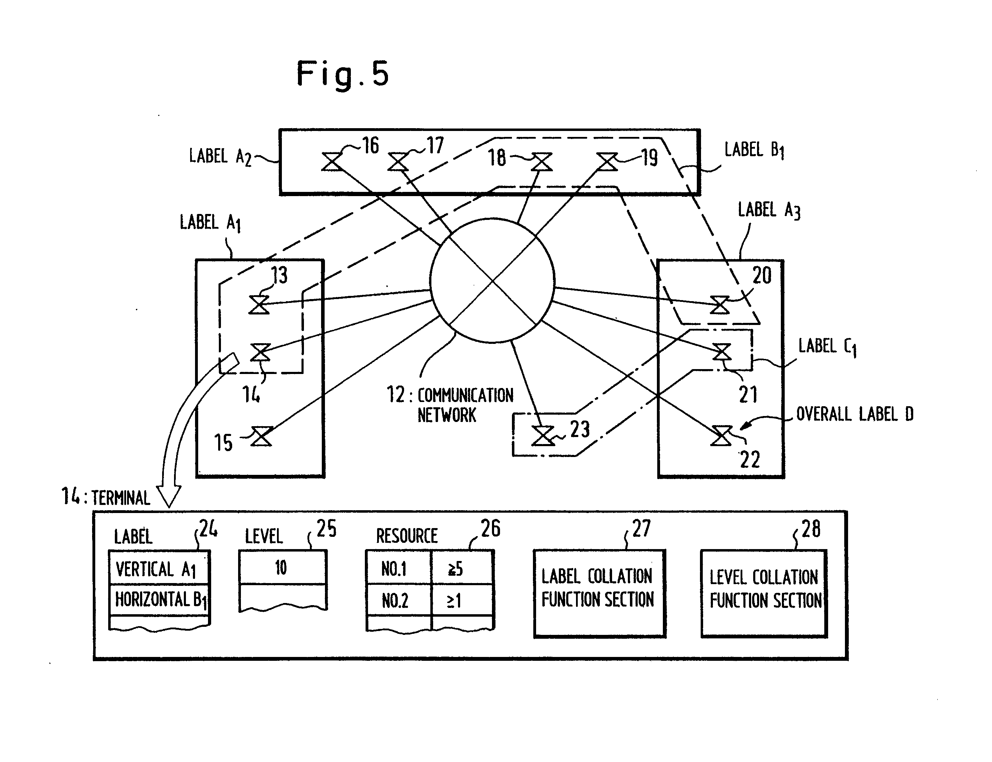

FIG. 5 illustrates security control using label information and level information according to this invention. In FIG. 5 numbers indicate as follows:

| | |
|---|---|
| 12 | communication networks |
| 13, 23 | terminal |
| 24 | label information section |
| 25 | level information holding section |
| 26 | resources |
| 27 | label collation function section |
| 28 | level collation function section |

Each of the terminals 13 to 23 has number information unique to them just like a telephone number. In addition, each terminal may be given the following labels if necessary: (i) Vertical labels such as $A_1$, $A_2$, $A_3$, etc. The vertical labels are assigned to the terminals classified into groups based on the first criterion (such as regional approximation); (ii) Horizontal labels such as $B_1$, $B_2$, $B_3$, etc. The horizontal labels are assigned to the terminals classified into groups based on the second criterion (for example, main office group and branch office group); (iii) Keyword labels such as $C_1$, $C_2$, $C_3$, etc. The keyword labels are assigned to the terminals classified into groups based on the keyword label that enables a terminal to communicate with the terminal 23, which belongs to neither a vertical or a horizontal group: and (iv) Overall label D. Overall label D enables a terminal to communicate with any other terminal freely.

Each terminal is provided with the following: (i) a label information holding section (24) that holds the labels assigned to the terminal; (ii) a level information holding section (25) that holds the levels used to restrict the resources to which the terminal can access; (iii) a resource holding section (26) that stores the access enable conditions corresponding to the resources owned by the terminal (No. 1 and No. 2 in the figure), (iv) a label collation function section (27) that collates the labels of the terminal with those of the accessed terminal; and (v) a level collation function section (28) that checks whether or not access to a resource of the terminal should by enabled.

Before a terminal can communicate with another terminal, label collation function section 27 in the terminal collates its own labels with those of the other terminal. Each terminal can communicate only with a terminal having the same label. Of course a terminal having the overall label D, such as terminal 22, can communicate with any other terminal.

If a resource of the terminal is accessed from another terminal during communication which has been enabled through the above operation, the level collation function section 28 collates the level assigned to the other terminal with the access enable condition assigned to the resource and enables access if the access enable condition is satisfied.

For example, given only the labels $A_1$ and $B_1$, the terminal (14) can communicate with the terminals (13), (15), (18), (19), and (20). In this figure, access to the resource No. 1 is enabled only to the terminals whose level is "5" or above. Access to the resource No. 2 is enabled to the terminals whose level is "1" or above.

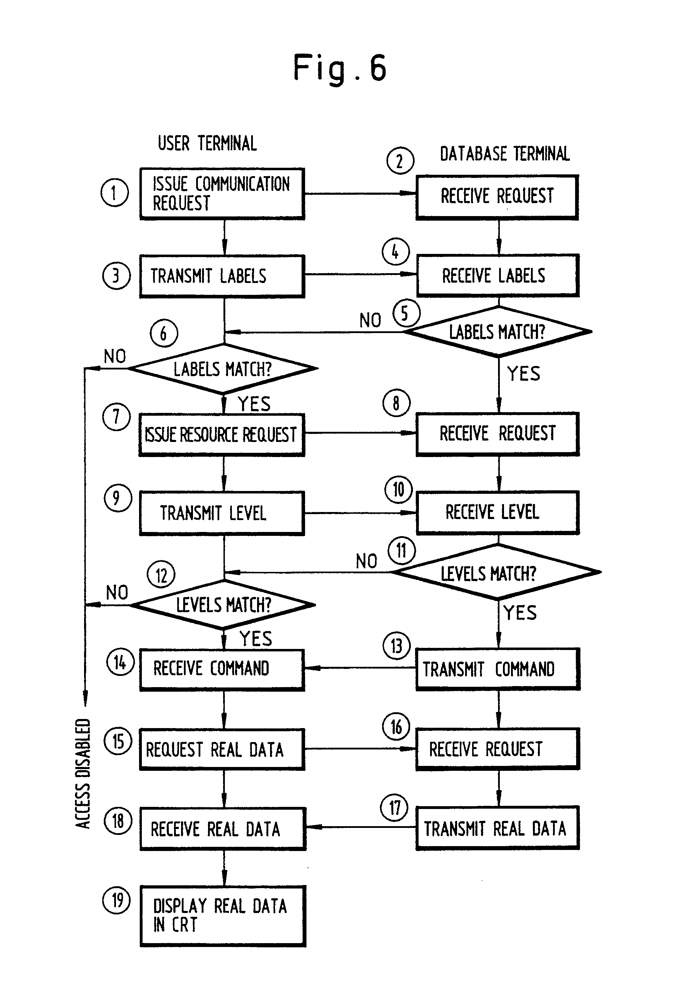

FIG. 6 is a flowchart of the security control illustrated in FIG. 5.

(1) If the user terminal issues a communication request ① and sends its labels ③ , the corresponding database terminal receives the request ② and the labels ④ .

(2) The database terminal that received the labels checks if they match its labels ⑤ . If not, the database terminal posts a label mismatch to the user terminal. If they match, the database terminal waits for a resource request.

(3) The user terminal checks if a label mismatch has been posted ⑥ . If so, the access request is rejected. Otherwise, the user terminal issues a resource request ⑦ and transmits its level ⑨ . The corresponding database terminal receives the request ⑧ and the level ⑩.

(4) The database terminal that received the level checks if it matches its level ⑪. If not, the database terminal posts a level mismatch to the user terminal. If the levels match, the database terminal transmits a command ⑬.

(5) The user terminal checks whether a level mismatch has been posted or not ⑫. If so, the access request is rejected. Otherwise, the user terminal waits for the command sent from the database terminal. If the command is received ⑭, the user terminal issues a real data request ⑮. A real data request may be considered a request for the collection of screen data necessary to display a screen.

(6) Having received the real data request ⑯, the database terminal sends real data ⑰.

(7) If the user terminal receives real data ⑱, the real data is displayed on the CRT.

The label collation function section (27) shown in FIG. 5 works as follows: If a communication request is issued from the terminal (16) to the terminal (14), because the terminal (16) only has label $A_2$, the label collation function section (27) determines that the label of the terminal (16) matches neither label $A_1$ nor label $B_1$ owned by the terminal (13). Therefore, the terminal (14) posts a label mismatch. If any of the terminals (13), (15), (18), (19), (20), and (22) issues a communication request to terminal 14, a label mismatch is never posted because the accessing terminal and the accessed terminal have label $A_1$ or $B_1$ in common or because label D is an overall label.

The level collation function section (28) shown in FIG. 5 works as follows: If the terminal (20) has level 4 and an access request is issued from the terminal (20) to the resource No. 1 owned by the terminal (14), the level collation function section (28) collates the access enable condition of the resource No. 1, which is "$\geq 5$" to the level of the terminal (20), which is four. As a result, the level collation function section (29) posts a level mismatch. If an access enable request is issued by the terminal (20) to the resource No. 2 owned by the terminal (14), because the access request condition of the resource No. 2 is "$\geq 1$," a level mismatch is not posted.

Naturally, the access enable condition may also be specified in the form such as "$8 \geq$ and $\geq 2$."

This system has an advantage with public networks, in which communication is enabled with an optional terminal in a nationwide scale, and with leased lines, in which communication is enabled simultaneously with the specific terminal. In addition, it can check whether access should be enabled or not for each resource because it allows the access enable condition to be specified.

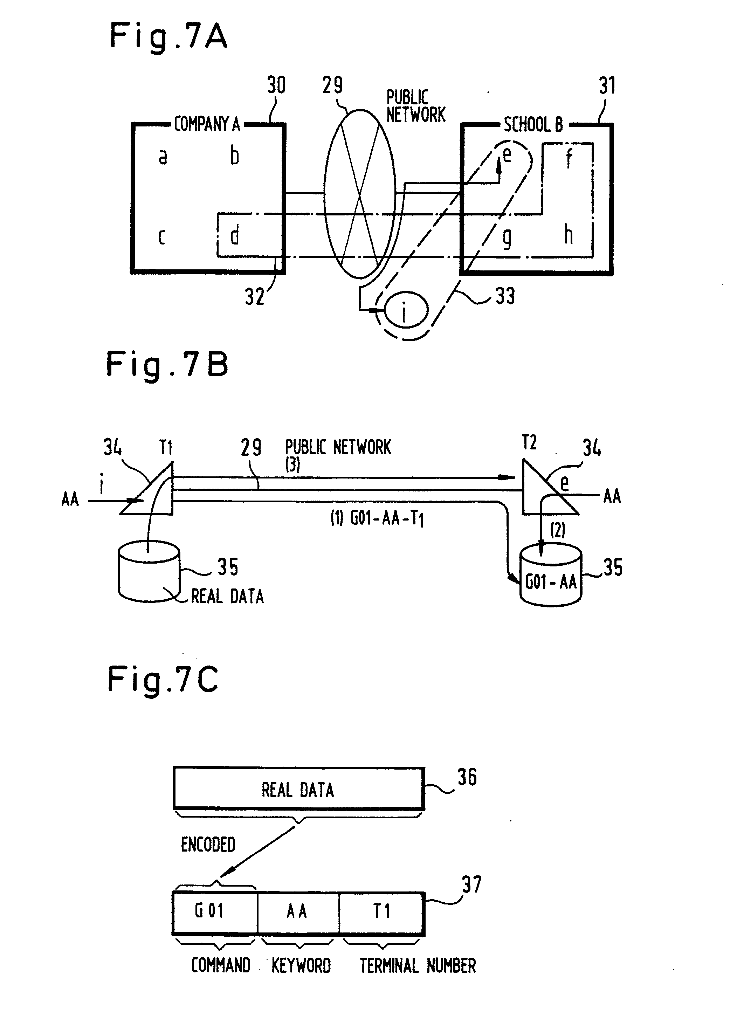

FIG. 7A illustrates the concept of security control with group labels, FIG. 7B illustrates the concept of security control with member labels, and FIG. 7C illustrates the concept of security control with keywords.

The numbers in FIGs. 7A, 7B, and 7C, specify as follows:

1 public network
2, 3 group label
4 member label
5 keyword label
6 terminal
7 the data storing section
8 real data
9 transmission data

Each of the lower-case letters a to i indicates a password or keyword used by a user for security, or the terminal to which the user has entered the password or keyword (called a password hereinafter).

The group label (30) is defined so that access be enabled if one of the passwords a to d is entered; group label (31) is defined so that access be enabled if one of the passwords e to h is entered. This ensures communication security within labels (30) and (31).

The member label (32) is defined so that communication be enabled between group labels (30) and (31) if one of the passwords d f, g, and h is entered. This ensures communication security within the member label (32).

Communication within each of the labels 30, 31, and 32 is performed via the public network (29). Two or more terminals (34) are connected to the public network (29). Communication is performed between the terminals (34) to which the specified password is entered.

Keyword label (33) is defined so that access be enabled between a password not belonging either the group label (30) or (31), or one of the passwords a to h (e, for example) contained in either the group label (30) or (31) if the pre-defined keyword ("AA" for example) is entered.

Communication within the keyword label (33) is performed with a terminal (34) to which the keyword AA is input via the public network (29).

This communication is performed as follows: The keyword "AA" is input to the terminal (34) outside the group labels (30) and (31). This terminal is called T1 (or password i) hereinafter. Terminal T1 transmits transmission data (37) to the other terminal (34) to which the password e, which is a password of the group label (31) of the transmission destination, has been input. This terminal (34) is called the terminal T2 (or password e) hereinafter.

Transmission data (37) is generated by adding the keyword AA and the number T1 of terminal T1 to the command G01, which is obtained by encoding real data (36) in terminal T1.

Upon receiving transmission data (37), terminal T2 compares the keyword AA contained in the data with the keyword input to terminal T2 (AA). If they match, terminal T2 uses the terminal number T1 included in transmission data (37) to request terminal T1 to transmit real data (36).

Upon receiving the request, terminal T1 transmits real data (36) to terminal T2.

As described above, a terminal within the group label (31 and 30) can communicate with a terminal outside the group label (31 and 30) by defining the keyword AA in advance. Since other passwords that do not have (or know) the keyword AA cannot obtain real data (36), security can be ensured.

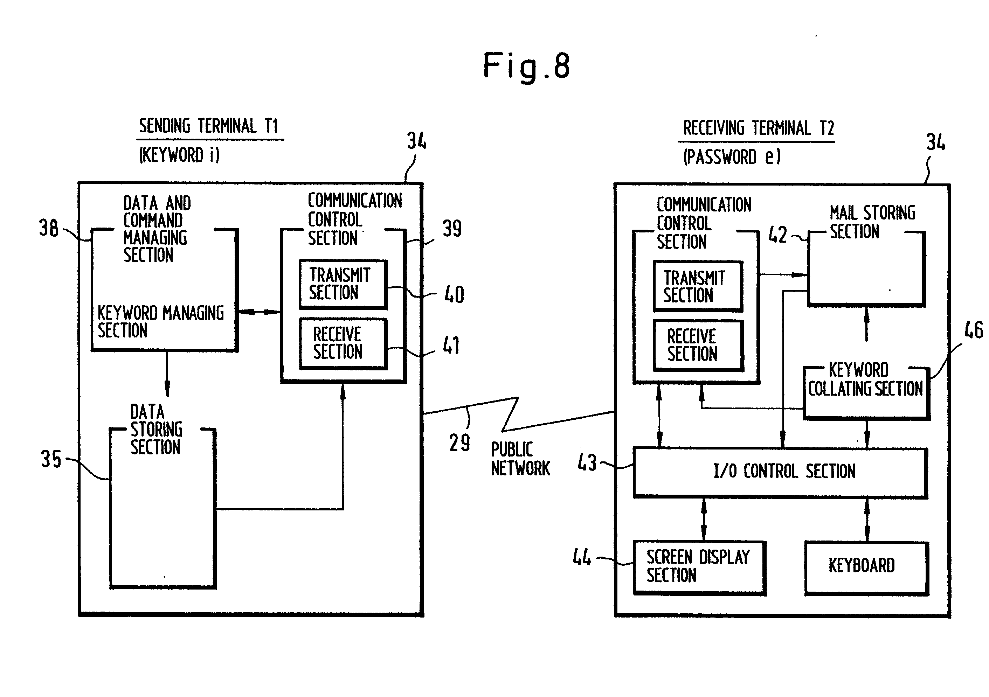

FIG. 8 illustrates in detail the security control illustrated in FIG. 7.

The numbers in FIG. 8 specify as follows:

38 data, command and keyword managing section (called the managing section hereinafter)
39 communication control section
40 transmit section
41 receive section
42 mail storing section
43 I/O control section
44 screen display section
45 keyboard
46 keyword collating section

As described above, terminal T1 is a terminal (34) connected to the public network (29). Terminal T1 can be used by the user (Mr. i) who knows and enters the keyword AA of the keyword (33). Therefore, terminal T1 is the password i that defines the keyword label (33) with the password e. Terminal T1 (or the password i) does not belong to either group label (30) or (31) and does not belong to the member label (32). In other words, terminal T1 does not have (know) the passwords a to h that define these labels and has nothing to do with them.

Terminal T2 is a terminal (6) connected to the public network (29) and can be used by the user (Mr. e) who knows and enters the password e of the group label (31). Terminal T2 is the password e that defines the group label (31) and is also the password that defines the keyword label (5) when the user (Mr. e) who knows the keyword AA enters it.

The managing section (38) manages data, commands, keywords, passwords in the terminal (34).

The managing section (38) also generates the command (G01) that compresses real data (36). "G01" is the name of real data (36). Real data (36) and the command (G01) are stored in the data storing section (35) and their locations are managed by the managing section (38). Upon receiving the request for real data (36), the managing section (38) performs transmission of real data (36).

The communication control section (39) consists of the transmit section (40) and the receive section (41) and performs data transmission between terminals (34). The communication control section (39) in terminal T1 transmits transmission data (37) and real data (36) during communication within the keyword label (33). The communication control section (39) (or managing section (38)) adds the keyword AA and the terminal number to the command G01 to assemble transmission data (37), and then the assembled transmission data is transmitted. During communication within the keyword label (33), the communication control section (39) in terminal T2 stores transmission data (37) in the mail storing section (42) and posts it to the I/O control section (43). It also requests terminal T1 to transmit real data (36).

The communication control section (39) knows that communication is within the keyword label (33) because the keyword AA is input.

The mail storing section (42) is in a specified area of the memory within a terminal (34). This section is provided to store data transmitted from another terminal (34) as mail.

The I/O control section (43) displays the specified screen onto the screen display section (44) and receives an input from the keyboard (45). A message indicating that transmission data (37) has been received and real data (36), etc. are displayed on the screen display section (44). Passwords, the keyword AA are input by the user (Mr. e) from the keyboard 45.

After comparing the keyword (AA) in transmission data (37) stored in the mail storing section (42) with the one (AA) input from the keyboard (45) to the terminal T2, the keyword collating section (46) processes according to the result of the comparison. If the two keywords match, the keyword collating section (46) makes the communication control section (39) request real data (36). Otherwise, the keyword collating section (46) makes the screen display section (44) display a message indicating that display of real data is rejected and disables any subsequent access related to communication in which transmission data (37) or the keyword AA is used.

The terminals T1 and T2 simultaneously function as both the sender and the receiver.

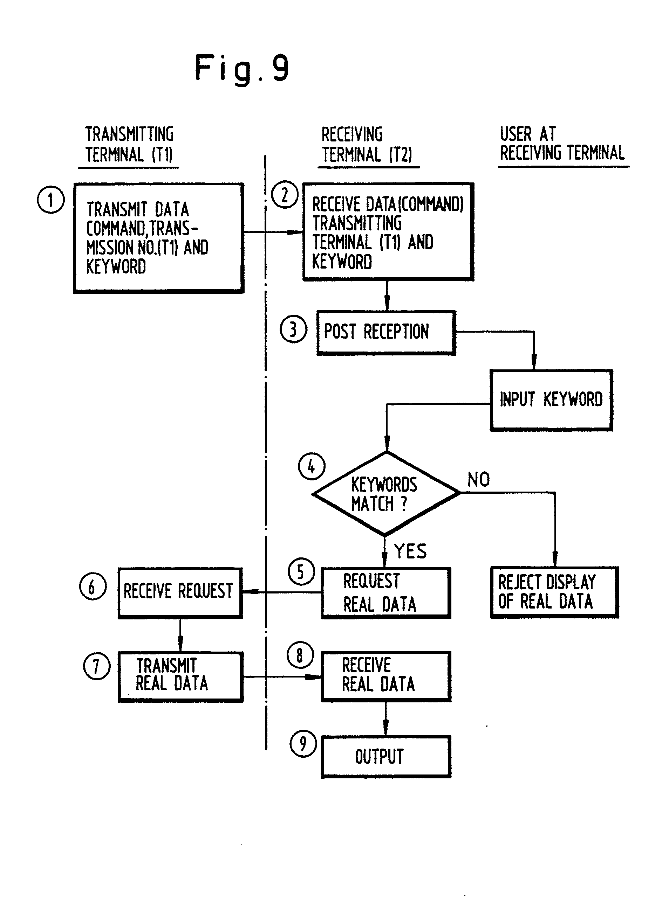

FIG. 9 is a flowchart of the data transmission illustrated in FIG. 8.

① A user who knows the keyword AA (Mr. i) enters the keyword AA at terminal T1 and issues a request to transmit real data (8) with terminal T2 as the destination. Terminal T2 is also used by another user who knows the keyword AA (Mr. e).

The managing section (38) stores real data (36) in the data storing section (35) and generates a command (G01). It also requests the communication control section (39) in terminal T1 to transmit transmission data.

The communication control section (39) adds the keyword AA and the terminal number T1 to the command G01 to generate transmission data (37). It then sends transmission data (37) to terminal T2.

② Upon receiving transmission data (37), the communication control section (39) in terminal T2 determines that received data is mail and stores it in the mail storing section (42).

③ When the user starts using terminal T2, the I/O control section (43) retrieves the mail storing section (42) and outputs a message indicating that mail has been received to the screen display section (44). At this point, the contents of the mail, G01, AA and T1, are not displayed.

Having seen this message, the user (Mr. e) enters the keyword (AA) from the keyboard (45).

④ The keyword entered from the keyboard (45) is received by the I/O control section (43) and is sent to the keyword collating section (46).

The keyword collating section (46) compares the keyword AA of transmission data (37) in the mail storing section (42) with the entered keyword.

If they do not match, the keyword collating section (46) posts the message "access rejected" to the I/O control section (43). The I/O control section (43) displays a message indicating that display of real data (36) is rejected on the screen display section (44) and disables any subsequent access.

Actually, the I/O control section (43) not only displays a message indicating that display of real data is rejected, but also prevents the contents of the mail, G01 and T1 and AA, from being referenced or displayed. Therefore, as long as the keyword AA is not entered, terminal T2 cannot establish connection with terminal T1, thus security of real data (36) can be assured. Even if an unauthorized user tries to get real data (36) through terminal T2, which is normally used by Mr. e, he cannot get it.

⑤ If the two keywords match, the keyword collating section (46) posts a request for real data (36) to the communication control section (39) in terminal T2, assuming that the authorized user (Mr. e) is using terminal T2.

The keyword collating section (46) may also request the I/O control section (43) to display the contents of the mail, G01, and T1, to the screen display section (44). In this case, if the user who has seen them (Mr. e) inputs a request to transmit real data (36) to the terminal T1 from the keyboard (45), the request is posted to the communication control section (39).

Upon receiving the request, the communication control section (39) uses the terminal number T1 contained in transmission data (9) in the mail storing section (42) to establish a data link with terminal T1 via a public network (1) and requests terminal T1 for real data (36).

⑥ Upon receiving the request, the communication control section (39) in terminal T1 sends it to the managing section (38).

The managing section (38) requests the communication control section (39) to transmit real data (36) in the data storing section (35) to terminal T2.

⑦ The communication control section (39) transmits real data (36) to terminal T2.

⑧ Upon receiving real data (36), the communication control section of terminal T2 checks that the received data is real data (36) and then sends it to the I/O control section (43), not to the mail storing section (42).

⑨ The I/O control section (43) outputs real data (36) to the screen display section (44).

According to the above description, the only person who can receive real data (36) at terminal T2 is the authorized user who knows the keyword AA of the keyword label (33) - Mr. e, that is, the password e to which access within the keyword label (33) is enabled.

In terminal T2, real data (36) is stored in the data storing section (35) and is managed by the managing section (38) with the keyword AA. Therefore, the only person who can reference real data (36) read to T2 is the user who knows the keyword AA (password) - Mr. e.

In this flowchart, an example in which the keyword label i is formed between the passwords i and e is described. However, the keyword label (33) may be formed between the password i and any of the passwords a to h. A keyword label (33) may also be formed between the password i and two or more of the passwords a to h. The password i may form a group label or member label with a password other than the passwords a to h. In short, the password i does not form the group label (30) or (31) or the member label (32). The password i exists outside (not belonging to) these labels.

As described above, security for communication inside and outside a group label or member label can be assured by specifying a keyword label that uses a pre-defined keyword in a system connected to a public network. Because of this, only a few user can establish communication through a public network, thereby guaranteeing security.

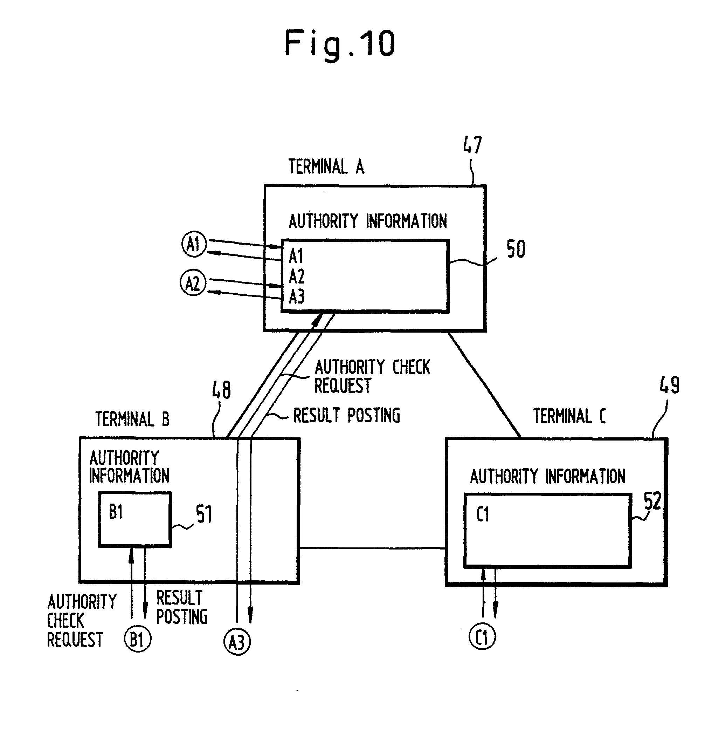

FIG. 10 illustrates the concept of security control in which authority information is distributed and managed according to this invention.

In FIG. 10, numbers 47, 48, and 49 indicate the respective terminals A, B, and C. Numbers 50, 51, and 52 indicate authority information registered in the respective terminals A, B, and C.

Authority information (50) in terminal A contains the authority information of the main users: A1, A2, and A3. Authority information (51) in terminal B contains authority information of user B1, and authority information (52) of terminal C contains authority information of user C1. A request to check the authority of a user is issued to each terminal by the user authority code. A user identification code contains the identification code of the terminal in which authority information of the user is registered.

For example, if a request to check the authority of user A1 or A2 is issued to terminal A, terminal A checks the user identification code and finds that the terminal in which the corresponding authority information is registered. The terminal A then retrieves authority information (50), reads the corresponding information and posts the result to the person who has requested the check. However, if a request to check the authority of user A3 is issued to terminal B, terminal B checks the user identification code and finds that the terminal in which the corresponding authority information is registered is Terminal A. Terminal B then issues a check request to terminal A. Terminal A reads the authority information of A3 from authority information (50) and posts the result to terminal B. Terminal B then costs the received result to the person who has requested the check.

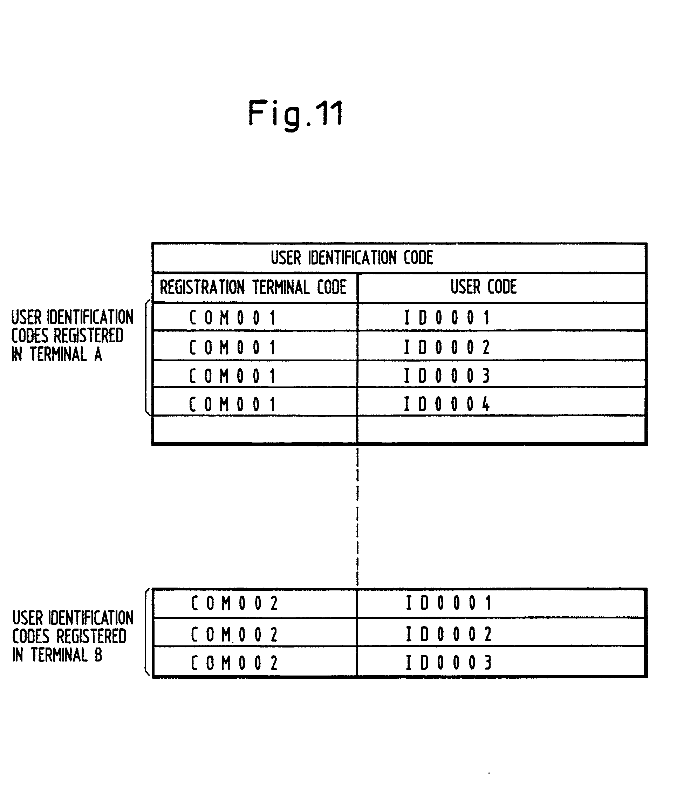

FIG. 11 illustrates of user identification codes. As shown in the figure, each user identification code consists of the identification code of the registration terminal (or computer) and the identification code of the user. In this example, the identification code of terminal A is COM001 and that of the terminal B is COM002. The identification codes of the user start from ID0001.

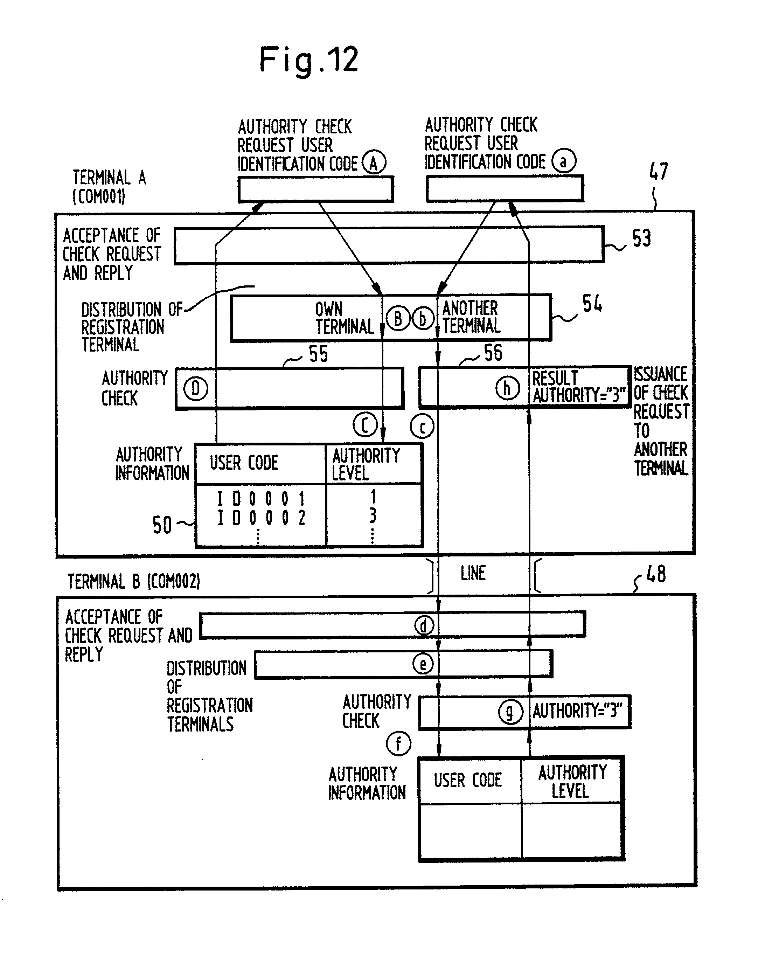

FIG. 12 illustrates processing by a terminal that performs distributed control of authority information.

In FIG. 12, terminal A (COM001) and terminal B (COM002) have the same processing functions. In terminal A, number 53 indicates the check request reception and reply, number 54 indicates the distribution of the registration terminal, number 55 indicates the authority check, and number 56 indicates the issuance of a check request to another terminal.

Processing flow Ⓐ to Ⓓ is performed when a request to check the authority of the user identification code (COM001 - ID0001) is issued. Processing flow ⓐ to ⓗ is performed when a request to check the authority of the user identification code (COM002 - ID0002) is issued.

When a user identification code is input, terminal A accepts it in the check request reception and reply (53). It then checks the registration terminal code in the user identification code to see if the registration terminal is its own terminal or not and distributes subsequent processing accordingly in the distribution of the registration terminal (54). If the registration terminal is its own terminal, terminal A retrieves authority information (50) in the authority check (55), reads the authority level "1" corresponding to the user (ID0001) and returns it to the requester. If the registration terminal is another terminal, terminal A issues an authority check request to terminal B by a check request to another terminal (56). Terminal B performs processing similar to that performed by terminal A described above and as a result, returns the authority level "3" corresponding to the user (ID0002) to terminal A. Terminal A then returns it to the requester.

Since each terminal has to manage and check only the authority information of the users registered with it, and registration of new authority information and change of the registered information can be performed in only one terminal, the work can be simplified and the possibility of errors can be decreased.

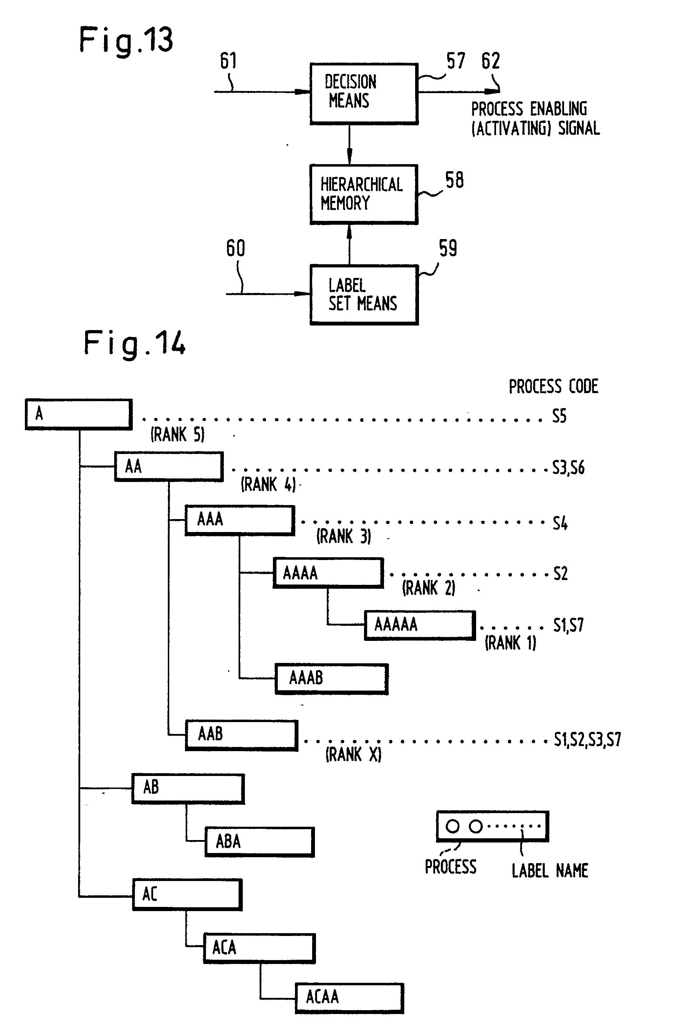

FIG. 13 illustrates the principle of security control of this invention that enable the accessed terminal to be used regardless of the rank of the accessing terminal.

The numbers in FIG. 13 specify as follows:

57    decision means
58    hierarchical memory means (hierarchical memory)
59    label set means
60    label set input
61    user code/process name input
62    process enabling (activating) signal

The hierarchical memory (58) stores the labeled user codes in a hierarchical structure classified by the organization line or stores the labeled process codes in a hierarchical structure arranged according to the importance or security level of the process.

The label set means (59) can set a new labels for a user or process code freely, create a new user label or process label, or change an existing user label or process label so that a process in an upper level can be used by a user set for a lower level.

A new label is set as follows: A new label that specifies the desired process code or codes (group) or the desired user code or codes (group) specified in the label set input (60) is created and the created label is registered (stored) in the label set means (59).

The decision means (57) checks if the user code/process name (process code) input (61) input by the user matches the setting of the label set means (59). If they match, the process enabling signal (62), which determines whether a process should be activated or not, is output.

While users are assigned a labeled user code in a hierarchical structure, processes are also assigned labels. Each process label is set so that the corresponding process can be executed in a terminal if the terminal registers a user of the code belonging to the process label, or a user of the code belonging to any label under the process label.

This enables processes to set the users. In other words, information to be protected can be freely set by processes and the user.

FIG. 14 illustrates the process group labels in a hierarchical structure according to this invention. Each rectangle indicates a process and the upper-case letters inside the rectangle indicate a label (label name: process key).

Label A is the process with the highest level, (highest rank) 5, and has the process code S5.

Label AA is a process with rank 4 and has the process codes S3 and S6.

Label AAA is a process with rank 3 and has the process code S4.

Label AAAA is a process with rank 2 and has the process code S2.

Label AAAAA is a process with rank 1 and has the process codes S1 and S7.

In order to enable the process of process code S3 to be executed as if it was at the same rank as the process of process code S2 (in this case including process codes S1 and S7), a new label AAB is set as the rank X and the process codes S1, S2, S3, and S7 are assigned to it.

By performing this, if the user label, which is described later, matches one of the process names (i.e., process codes) S1, S2, S3, and S7, the process corresponding to the matched process name can be activated.

The following detailed description deals with the relationships between the labels A, AA, AAA, AAAA, and AAAAA in FIG. 14: The users assigned the label AAAAA can execute the processes of process codes S1 and S7. The users assigned the label AAAA can execute the processes of process codes S1 and S7 belonging to AAAAA, and the processes of process code S2.

Similarly, the users assigned the label AAA can execute process codes S1, S2, S4, and S7. The users assigned the label AA can execute process codes S1, S2, S3, S4, S6, and S7, and the users assigned the label A can execute all of process codes S1 to S7.

Therefore, suppose the process codes S1, S2, S3, and S7 are assigned to the label AAB. Those assigned the label AAB can execute process codes S1, S2, S3, and S7.

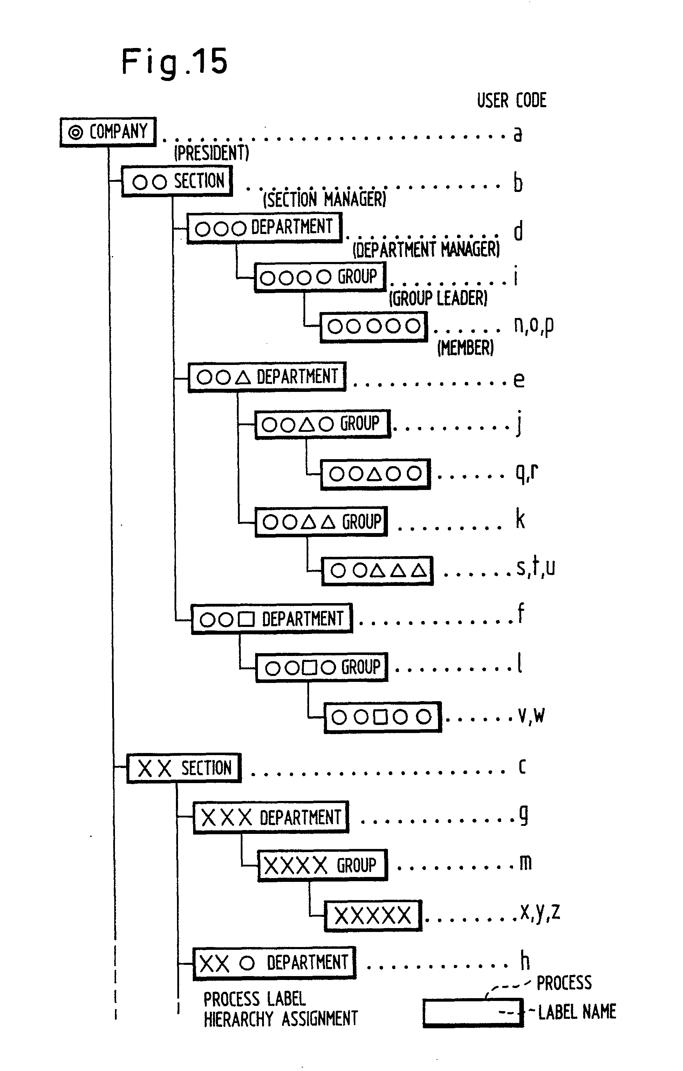

FIG. 15 illustrates the assignment of a user code to each of the process group labels in a hierarchical structure. A rectangle indicates a user and a symbol in the rectangle indicates a user label (user key).

The highest user level has the user code "a" for the company (president) label ⓞ.

The next user level (section manager) is assigned the OO section label and has the user code b.

Similarly, the OOO department (department manager) label has the user code d, the OOOO group (group leader) label has the user code i, and the OOOOO (group member) label has the user codes n, o, and p.

In other words, the lower-case letter a indicates the president, b and c indicate the section managers, d, e, f, g, and h the department managers, i, j, k, l, and m the group leaders, and n to z the members.

If there is a process assigned the label "OOΔΔ group," the leader of the group, k, and its group members s, t, and u can execute the process.

Since a department manager e can execute only the processes whose label is "OOΔ department," he cannot execute any process with a label "OOΔΔ group."

Similarly, neither a section manager b or the president "a" can access any process with a label "OOΔΔ group."

However, if you want to enable the department manager e to execute a process with the label "OOΔΔ group," all that you have to do is to add e to the user codes of "OOΔΔ group" or "OOΔΔΔ."

If a member p of the OOOO group of the OOO department needs to execute a process of the XXXX group of the XXX department, he only has to add p to the user codes of the XXXX group.

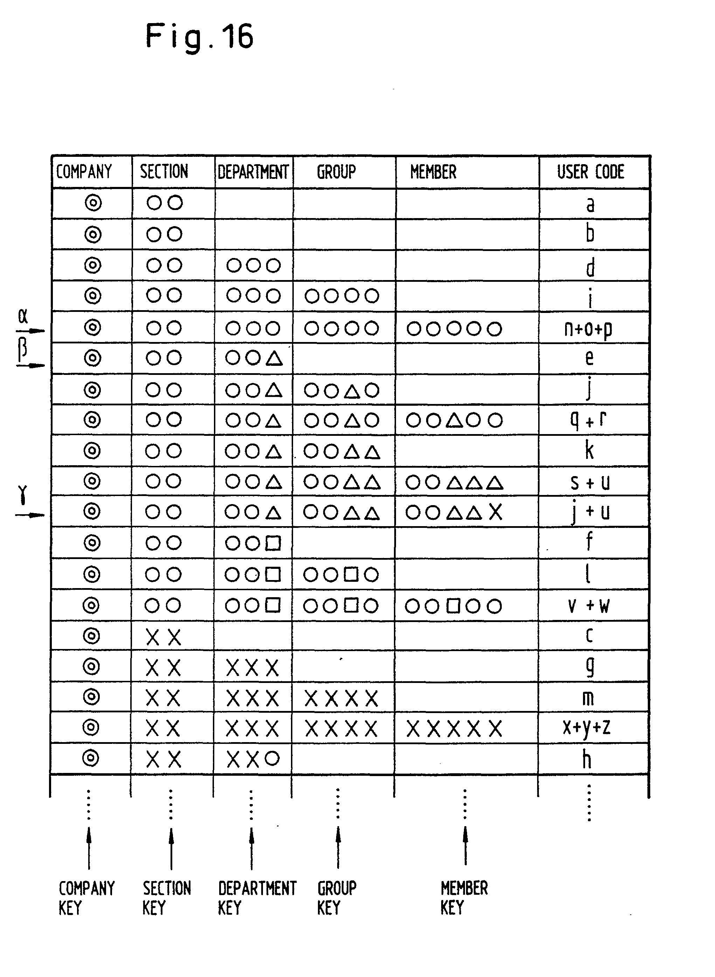

FIG. 16 illustrates a file having the hierarchical structure described for FIG. 15. This file is also a table stored in the hierarchical memory (58) illustrated in FIG. 13.

The file shown in the figure enables retrieval using a key assigned to each company, department, section, group, and member.

For example, the company key (president) is the ⓞ key and the user code "a" is registered to it.

The department keys are assigned as OO and XX, the department keys as OOO, OOΔ, OO◻, XXX, XXO, the group keys as OOOO, OOΔO, and the member keys as OOOOO, OOΔOO. A user code or user code group of the users who are enabled to access the corresponding process is registered in each of these keys.

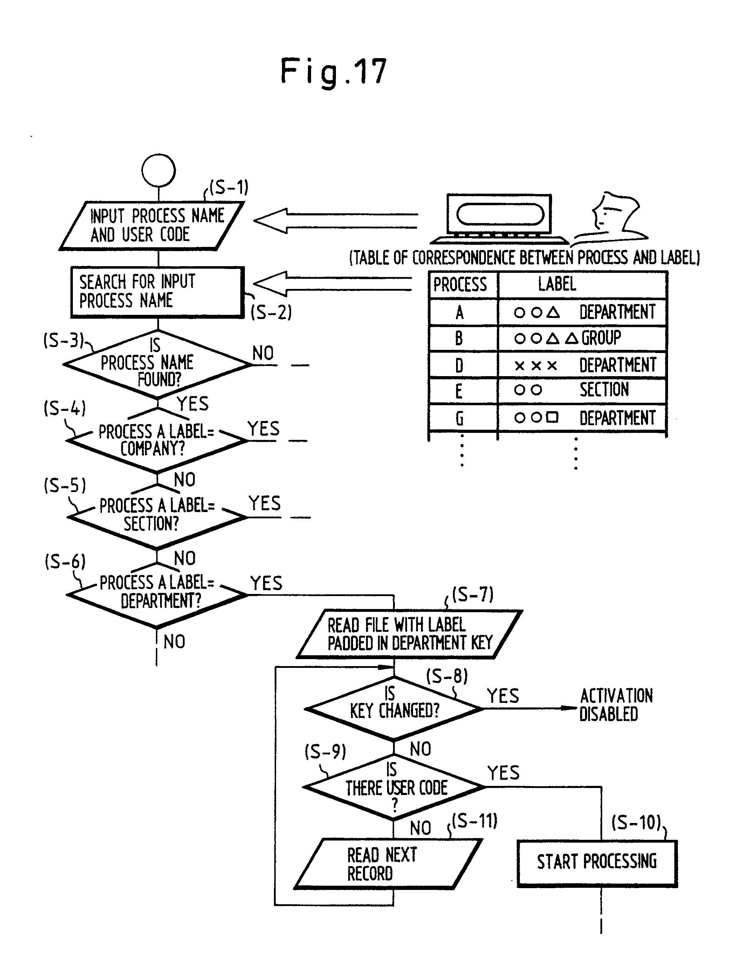

FIG. 17 is a flowchart that describes the operation of a security check. The following describes the security check.

First, the process name and user code are input (S-1). This example assumes that the process name is "A," and the user code is "u."

The table showing the correspondence between the processes and labels registered in the hierarchical memory is searched to find the process name "A" (S-2 and after). Whether the process name exists or not is determined (S-3). If it does, a sequential search is made to see whether the label is a company label (S-4), section label (S-5), or department label (S-6).

In this example, since the label name assigned to the process "A" is "OOΔ department," the file shown in FIG. 16 is read with "OOΔ department" padded in the department key (S-7).

After the file is read, a check is made to see if "u" is defined where the key of the registration (record) is "OOΔ." In other words, whether the user code "u" is defined at the location pointed by the arrow $\alpha$ in FIG. 16 is checked. If not, the contents of "OOΔ department" are repeated as indicated by the arrow $\beta$, until the key changes (until the key is no longer "OOΔ department") (S-8) or until "u" is found (S-8, S-9, and S-11). If the key changes, the process "A" is regarded as activation disabled and protected.

If the user code "u" is found (S-9), the corresponding process "A" is regarded as activation enabled and activated (S-10).

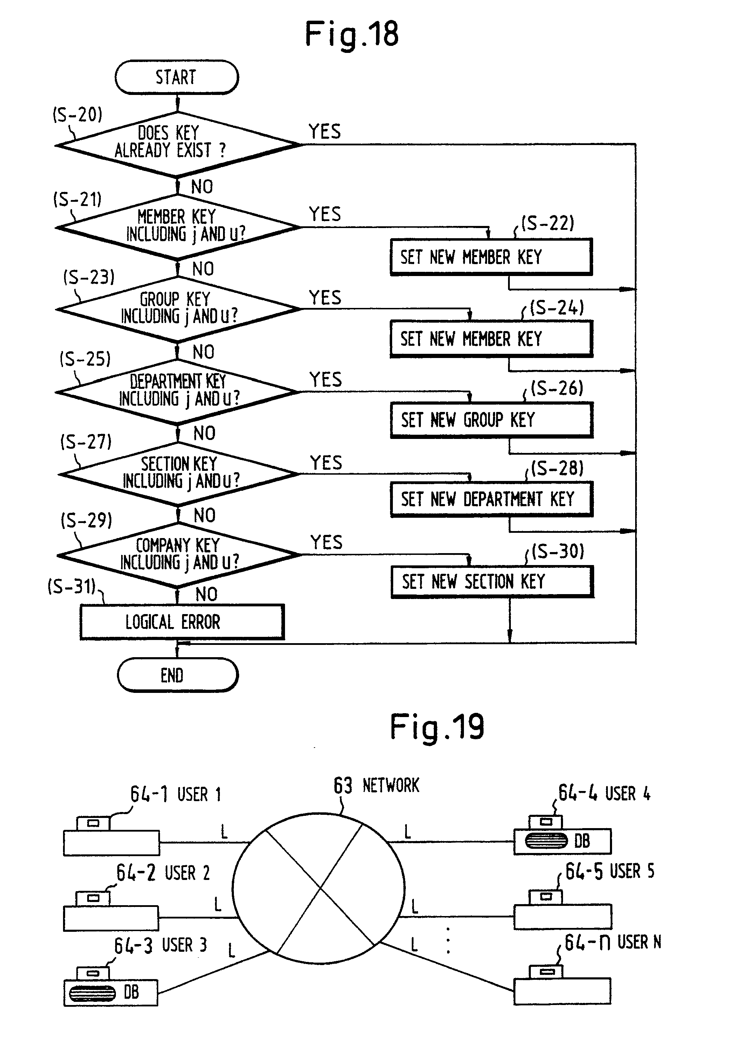

FIG. 18 is a flowchart that describes the procedure for setting a new protect label and registering it in the label set means. The following description deals with an example of the general procedure for determining a protect label that enables two new users with the user codes "j" and "u" to execute a process in the file configuration illustrated in FIG. 16.

In this figure, a check is made to see if the users ("j" and "u") have already been registered for the label of the process (S-20). If so (YES), processing terminates (END) because no new protect label must be set.

If not (NO), a check is made to see if there is a group key that includes both of the user codes ("j" and "u") (S-21). If so, a new group key is set at the location of the corresponding member (S-22). If not, a check is made to see if there is a group key that includes both of the user codes ("j" and "u") (S-23). If so, a new member key is set at the location of the corresponding member (S-24).

After this, a sequential search for the corresponding user code is made beginning at the lowest level (S-24 and after). If the corresponding user code is not found at a certain level, the next level is searched and the new group key (S-26), department key (S-27), and section key (S-30) are set sequentially and registered in the hierarchical memory.

If the corresponding user code is not found even in the label at the highest level, processing terminates because this is a logical error.

By setting a new protect label, even a user at a lower level can execute a specific process at a higher level. For example, if a new executable process must be set for the user codes ("j" and "u") in the case shown in FIG. 16, set a new label having "OO△△X" at the location of the arrow $\gamma$, and assign the user codes ("j" and "u").

FIG. 19 is a network diagram that illustrates an example of the configuration of a system that uses a database utilization system to which this invention is applied. Number 63 indicates a network, numbers 64-1, 64-2, 64-3, 64-4, ..., and 64-n indicate a user and number 10 indicates a network switched line. The upper-case letter L indicates a data line that connects each user terminal to the network switched line. DB indicates database.

In FIG. 19, the database (DB) is shown as only being installed in the terminals used by users 3 and 4. However, the database may be installed for each user terminal independently or only one database may be installed in the entire system.

In a system having the configuration illustrated in the figure, the contents (processes) of the database DB are classified into levels in a hierarchical structure and the users 64-1, 64-2, ..., and 64-n are classified into levels in a hierarchical structure. Moreover, by setting the group labels according to this invention, a database system in which security control that can flexibly change the protection can be established.

In a prior method using a rank assignment, since the process to be protected has been fixed according to the rank, the protect range cannot be specified for each user or process. However, in the group label method of this invention, the protect range can be set freely for each user or process or for each group of users or processes.

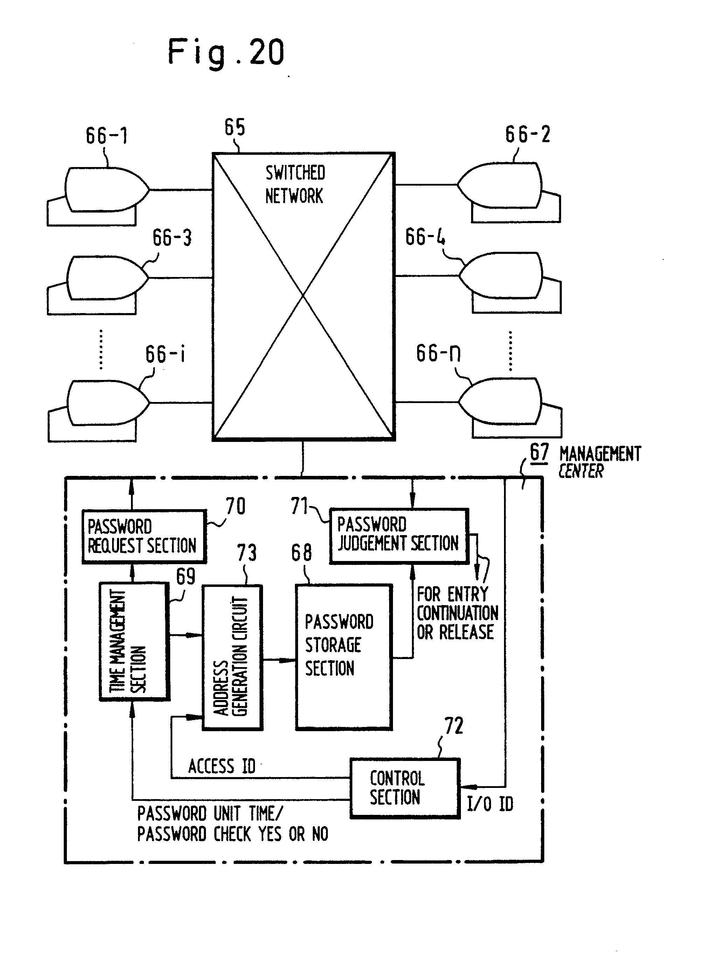

FIG. 20 is the configuration diagram of the present invention in which valid multiple passwords are switched according to the time.

In FIG. 20, the number 65 indicates a switched network. The switched network (65) consists of a line switched network and packet switched network. The numbers 66-1, 66-2, ..., 66-i, ..., and 66-n indicate terminals. Terminals can access a communication network system only when they satisfy prescribed conditions. The number 67 indicates the management center. The management center (67) manages user IDs and passwords, and so forth to be checked when a user attempts to enter or continue connection with the communication network system. The number 68 indicates the password storage section. The password storage section (68) stores passwords linked with IDs. The number 69 indicates the time management section. The time management section (69) requests the password storage section (68) to output the password corresponding to the time when a user attempts to enter the system or to output passwords at arbitrarily set intervals. In addition, the time management section (69) outputs a check signal requesting the user to enter a password in order to continue. The number 70 indicates the password request section. Acting on a check signal input from the time management section (69), the password request section (70) requests password entry when a user attempts to enter the system or continue connection with the communication network system. The number 71 indicates the password judgment section, the number 72 indicates the control section, and the number 73 indicates the address generation circuit.

If the password storage section (68) stores different passwords for each time unit, the ID user is requested to enter the following items: (1) To enter a password corresponding to the time period when the password request section (70) issues a password entry request. (2) To re-enter a password at prescribed time intervals. Since a different password for each time period is read from the password storage section (68) and is set in the password judgment section (71), system entry by an invalid ID user is strictly checked. Also even if an invalid ID user can enter the system, it is difficult for the user to continue connection with the system since the password is changed after the prescribed time interval.

If the password storage section (68) stores terminal numbers, the ID user is requested to re-enter passwords at prescribed time intervals. Since an ID user terminal number which is different from the first password is sent from the password storage section (68) to the password judgment section (71), it is difficult for an invalid ID user to continue connection with the system.

The control section (72) receives a user ID which was input to enter the communication network and was sent to the management center (67) through the switched network (65). Then, the control section (72) outputs three signals:

(1) An access ID control signal to read a password linked with the ID from the password storage section (68). (2) A password time unit control signal to decide time intervals for password entry requests. (3) A password check "yes or no" control signal to decide whether a password check is to be performed at each time period when data access extends over two time periods. The control section (72) outputs signal (1) to the address generation circuit (73), and signals (2) and (3) to the time management section (69).

The address generation circuit (73) receives an access ID control signal from the control section (72) and a check signal from the time management section (69). Then, the address generation circuit (73) generates an address to read previously registered passwords for the input user ID sequentially from the password storage section (68).

The time management section (69) is designed so that it does not generate a check signal when it receives a password check "no" control signal. When it receives a password check "yes" control signal and a password time unit control signal, the time management section (69) outputs two signals: (1) For the password request section (70), it outputs a check signal to make the password request section request password re-entry at every password unit time.

(2) For the address generation circuit (73), it outputs a number which indicates that a time period is output as a check signal. The number, which corresponds to the time period when the check signal in (1) is output, is obtained as follows: (a) to divide a day into time periods the 24 hours of a day are divided by the password time unit. (b) The time periods are numbered starting from 1. (c) Based on the time when the check signal in (1) to be output to the password request section (70) is generated, a number which corresponds to the time period at which the check signal is output is obtained. The time management section (69) can also be specified as follows: (a) to divide a day into time periods the 24 hours of a day are divided by the password time unit. (b) The time periods are numbered from 1. (c) A number corresponding to the time period at which the first check signal is output to the password request section (70) is obtained. (d) The time management section (69) inputs the number as an initial value in the address generation circuit (73). (e) After (d), the time management section (69) outputs a pulse which is incremented by 1 every time a check signal is output to the password request section (70). The pulse is output as a check signal to the address generation circuit (73).

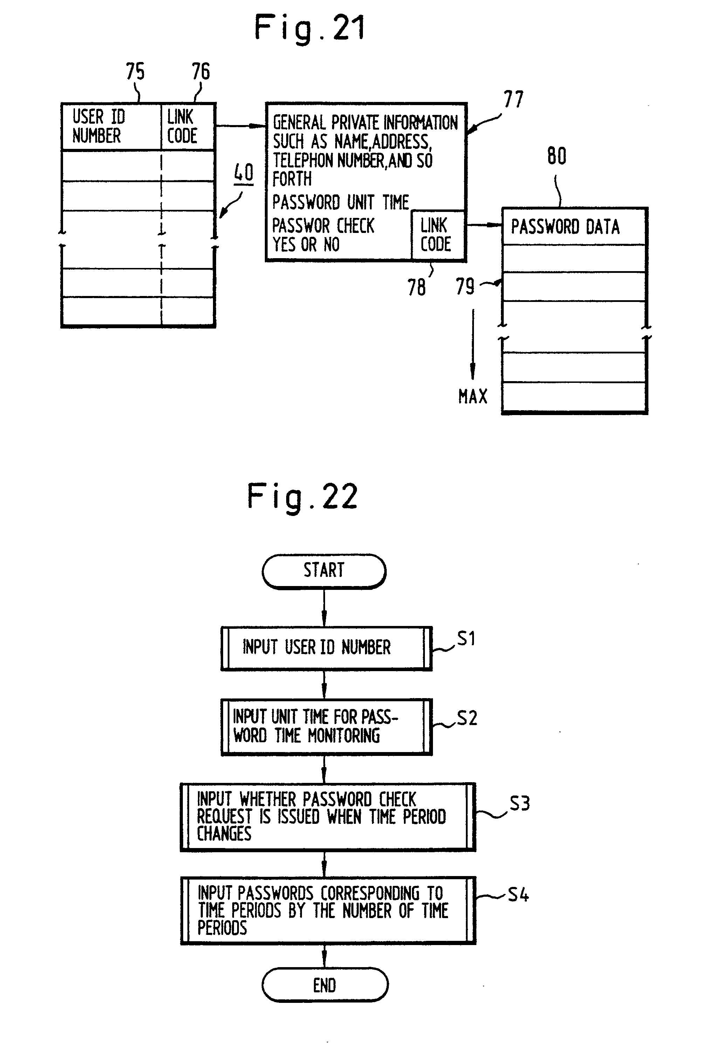

FIG. 21 illustrates the storage file used by this system in FIG. 20.

The user ID number storage file (74) provides the link code field (76) and the user ID number field (75). When a code in the link code field (76) is searched, the private information storage file (77) of the user ID number registered in the corresponding user ID number field (75) is read. In the private information storage file (77), the name, address, telephone number, and other general private information are registered. In addition to those items, the password time unit and password check "yes or no" are registered. The private information storage file (77) also provides the link code field (78). When a code in the link code field (78) is searched, the password storage file (79) is read. The password storage file (79) is stored in the password storage section (68) shown in FIG. 20. The access ID control signal to be output from the control section (72) to the address generation circuit (73) specifies the code in the link code field (78).

The password storage file (79) provides the field (80) in which password data are registered. Password data are registered by time periods (starting at 0:00) using the number obtained after dividing the 24 hours in a day by the password time unit. For example, if the password time unit is 1 hour, 24 password data are registered as follows: The password from 0:00 to 1:00 is set first and the password from 23:00 to 24:00 is set last. If the password time unit is 2 hours, password data are registered as follows: The password from 0:00 to 2:00 is set first and the password from 22:00 to 24:00 is set last.

Password data registered in the password storage file (79) use a character string which is an arbitrary combination of numbers, and symbols.

FIG. 22 is the flowchart for a new registration to access an information communication network system from a terminal (66-i) to the management center (67). First, a user ID number for private identification in the system is input (step 1). Then, the user ID number is registered in a prescribed field in the user ID number storage file (74).

Next, the time unit for password time monitoring is input as check data for time change (step 2) and whether access is continued or password entry is requested when the time period changes during the access is input (step 3). Then, the password time unit and password check "yes or no" are registered in the private information storage file (77).

Furthermore, passwords arbitrarily created by the registration applicant are input by the number obtained after dividing the 24 hours in a day by the password time unit (step 4). Then, the passwords are registered in the password storage file (79), (that is, the password storage section (68)) each time a password is input. The passwords are registered by time periods starting from 0:00 to 12:00 and then 12:00 to 24:00.

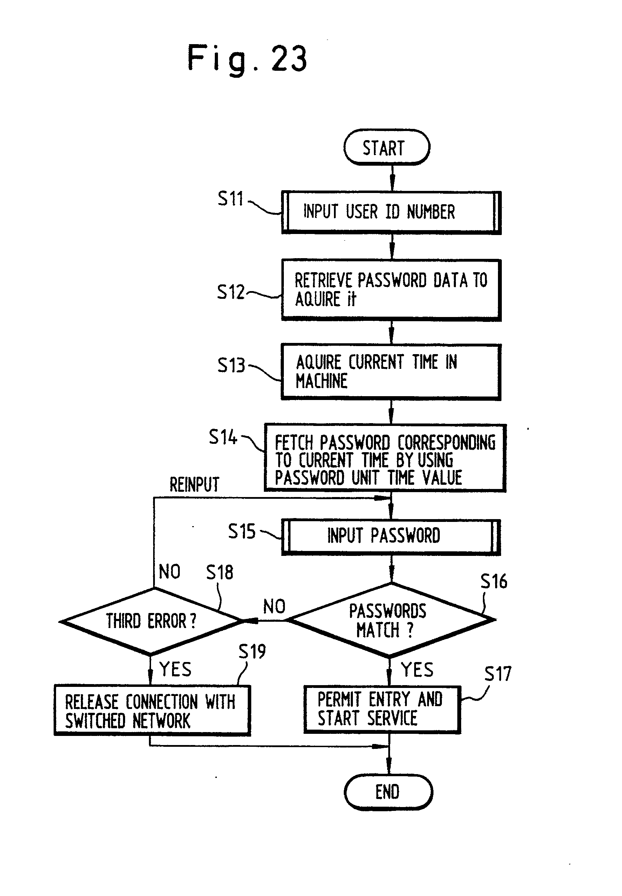

As mentioned above, for one user ID, a different password for each time period is registered in the password storage section (68). Fig. 23 is a flowchart explaining the operation when a user ID is used to enter the information communication network system.

For example, assume that the terminal (66-i) is connected to the management center (67) through the switched network (65). To enter the information communication network system, a user ID is input from terminal (66-i) to the management center (67). The user ID is judged valid or invalid by another circuit device not illustrated. If the user ID is invalid, the management center (67) uses another device to immediately release connection with the switched network (65).

With this invention, however, a user ID sent to the management center (67) is input to the control section (72) (step 11). Then, the control section (72) references the user ID number storage file (74) and obtains the link code in the link code field (76) corresponding to the user ID number field (75). The control section (72) uses the link code to read the private information storage file (77) of the user ID number. It obtains the password time unit and password check "yes or no" control signal stored in the private information storage file (77). It also obtains the access ID control signal assigned to the user ID from the link code field (78) (step 12). Next, the control section (72) sends the access ID control signal to the address generation circuit (73). At the same time, it also sends the password time unit and password check "yes or no" control signal to the time management section (69).

Upon receiving the password time unit and other control signal (yes or no), the time management section (69) obtains the current time in the 24 hour system (step 13). Then, it uses the password time unit to obtain the current time periods number and sends the number to the address generation circuit (73) as a check signal. The time management section (69) also outputs a check signal to the password request section (70) to make it request password entry.

The address generation circuit (73) receives: (1) an access ID control signal from the control section (72) and (2) a check signal (indicating a number to which the time period belongs) from the time management section (69). Then, the address generation circuit (73) generates an address which specifies a user ID field in the password storage section (68) based on the access ID control signal. It also generates an address which specifies a stored password corresponding to the time period of the check signal number. Thereby, the user ID password for the current time is read from the password storage section (68) (step 14).

This password is set in the password judgment section (71).

For example, if the password time unit is 1 hour and the management center (67) receives a system entry request at 10:15, the 11th password stored in the password storage file (79) is set in the password judgment section (71). This is because 10:15 belongs to the 11th time period.

The password request section (70) receives a check signal from the time management section (69). Then, it issues a password entry request to the terminal (66-i), and a password for the password entry request is sent from the terminal (66-i) to the management center (67). The password is input to the password judgment section (17) (step 15) and is compared with the password that corresponds to the time period read from the password storage section (68) (step 16).

Since a valid user ID user can enter the correct password for the current time period, the user is allowed to enter the system and service starts (step 17). If a valid user enters an incorrect password (step 16), the user can enter the correct password for the subsequent password re-entry (steps 15 and 16). Then, the user is allowed to enter the system.

When an unauthorized user cannot enter the correct password by the third password entry, or when a valid user does not enter the correct password by the third password entry (step 18), the password judgment section (71) releases connection with the switched network (65) through another circuit device not illustrated (step 19). In other words, system entry from the terminal (66-i) is not allowed.

Since passwords change according to time periods as explained above, invalid access is strictly prevented.

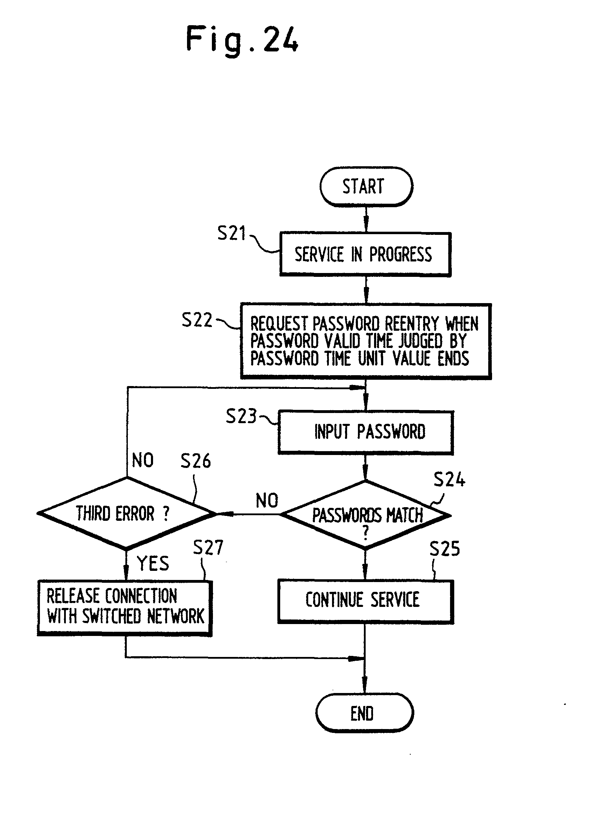

FIG. 24 is a flowchart of the system after entry.

For example, assume that the terminal (66-i) enters the system at 10:15 and the password time unit is 1. While service is in progress (step 21), a check signal is output from the time management section (69) to the password request section (70) at 11:00 (to be precise, after 11 o'clock). Then, the password request section (70) requests the terminal (66-i) to re-enter the password (step 22).

At this time, the 12th password stored in the password storage file (79) is set in the password judgment section (71).

If the valid password for the current time period (corresponding to 11:00) is entered from the terminal (66-i) for the password re-entry request (steps 23 and 24), service is continued (step 25).

If the valid password for the current time period is not entered by the third password re-entry (step 26), connection with the switched network (65) is released (step 27) and service is stopped.

When password check "no" is registered in the private information storage file (77), the above password re-entry request is not issued even when the time period changes while service is in progress. Thereby, suspension of service, such as data transfer, can be avoided.

Setting methods other than the above can also be employed. By setting a value in the time management section (69), a password re-entry request can be issued at fixed time intervals. For example, a password re-entry request can be issued at 11:15, 12:15, etc.

Passwords that change according to time are registered in the password storage section (68). However, an ordinary password and terminal number may also be stored in the password storage section (68).

In the latter case, the address that reads the ordinary password is specially set and previously registered. The address generation circuit (73) is designed so that it generates the special address when the management center (67) receives a system entry request.

If the terminal number is registered for each time period, system entry is permitted when the first password entered matches the ordinary password. Thereafter, every time the time period changes, or at fixed time intervals, password re-entry is requested. Thereby, service can be continued only for the terminal (66-i).

In addition to the above-mentioned examples, arbitrary passwords can be registered in the password storage section (68) according to various principles and rules. Since passwords to be checked at different times can be arbitrarily changed, it is difficult for an invalid ID user to enter the system. Also, since re-entry of passwords which change according to time is requested, it is difficult for an invalid ID user to continue connection with the system.

To clarify explanation, the circuit devices, such as the password storage section (68), of this invention are set in the management center (67). They can also be set in each terminal (66-1) to (66-n).

As mentioned above, valid passwords change according to time and re-entry of different passwords is requested at fixed times or at fixed intervals. Therefore, it is difficult for an invalid user to enter the system and to continue connection. Thus, unauthorized system entry or unauthorized system connection continuation can be strictly prevented.

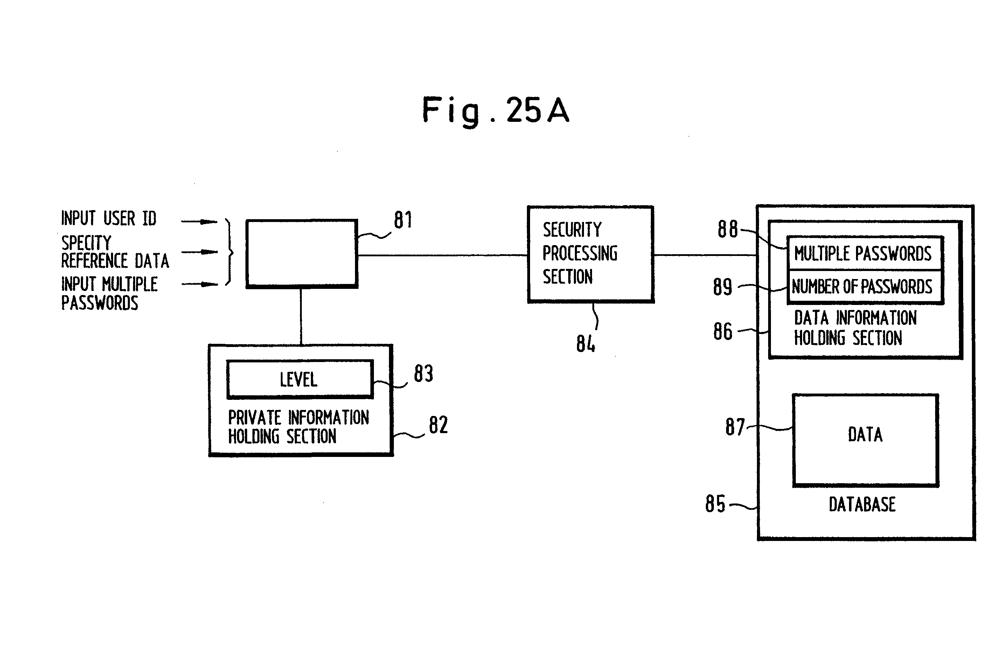

FIG. 25A is the configuration diagram of a security control in which the number of passwords required differs according to data importance levels.

In FIG. 25A, 81 is a terminal, 82 is the private information holding section, 83 is a level, 84 is the security processing section, 85 is a database, 86 is a data information holding section, 87 is data, 88 is multiple passwords, and 89 is the number of passwords.

A user who attempts to use the database (85) uses the terminal (81) to enter the user ID and password, and to specify data (87) to be referenced.

The private information holding section (82) stores a level (83) for each user ID. The greater the level (83) value, the higher the level of the user ID.

The database (85) includes data (87) and the data information holding section (86). The data information holding section (86) stores multiple passwords (88) by number according to the importance level of the data (87) and by the number of passwords 89 according to the importance level for each data (87). The more important the data (87), the greater the number of passwords 89.

The security processing section (84) judges whether referencing of the data (87) is permitted. When a valid user ID and password are input from the terminal (81), the security processing section (84) permits referencing of the data (87) specified from the terminal (81).

To reference the data (87) in the database (85), the data (87) to be referenced is specified by inputting the user ID and the name of data (87) (data name) to the terminal (81). Then, the level (83) corresponding to the input user ID is retrieved from the private information holding section (82), and the number of passwords (89) corresponding to the specified data (87) is retrieved from the data information holding section (86).

Based on the fetched level (83) and number of passwords (89), the security processing section (84) obtains the number of passwords to be input to reference the data. For example, the number of passwords can be obtained by subtracting the level (83) from the number of passwords (89).

When passwords are input to the terminal (81) by the obtained number of passwords, the security processing section (84) checks whether each cf the input passwords matches one of multiple passwords (88) stored in the data information holding section (86). When all the input passwords match multiple passwords (88), the security processing section (84) permits the user ID to reference the specified data (87).

By increasing or decreasing the number of passwords (89) according to the importance of the data (87) security for the entire database (85) can be improved. For example, even when someone finds the user ID and password of a beginning user who has only one password, the security of important data (87) (high level) can be protected.

On the other hand, when the number of passwords (89) for extremely important data (87) is large, a high-grade user can easily reference the data (87) by setting high value for the level (83). In this case, the user is required to input only a few passwords to reference the data (87). Thus, security can be improved without increasing user load, especially high-grade users.

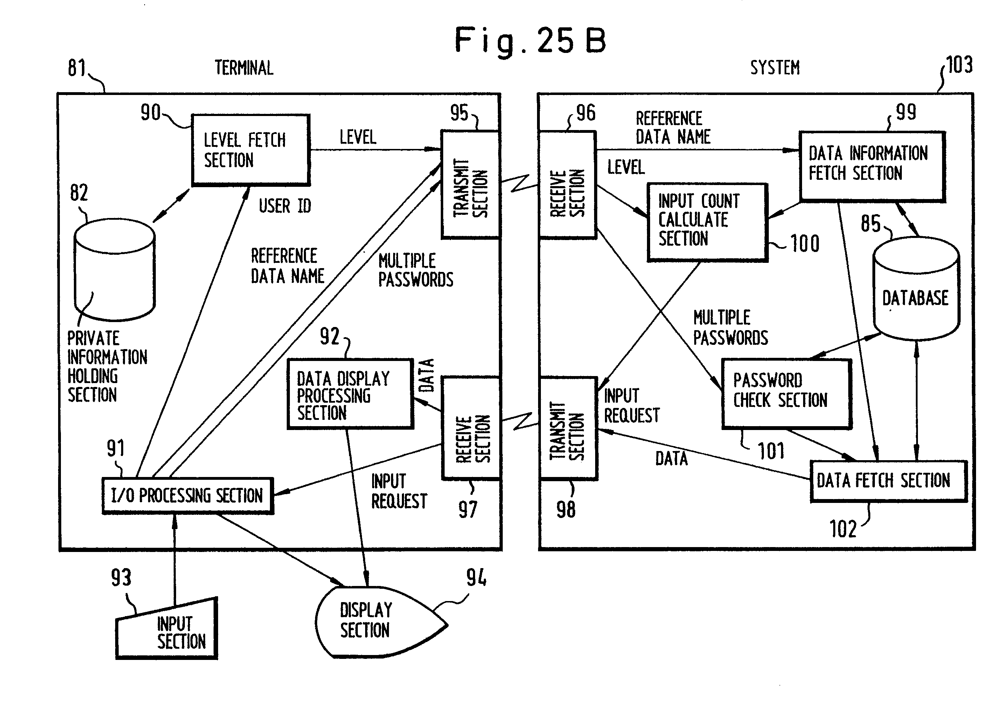

FIG. 25B is the configuration diagram of the security control illustrated in FIG. 25A. The diagram illustrates a database system.

In Fig. 25B; 90 is the level fetch section, 91 is the I/O processing section, 92 is the data display processing section, 93 is the input section, 94 is the display section, 95 and 98 are transmit sections, 96 and 97 are receive sections, 99 is the data information fetch section, 100 is the input count calculate section, 101 is the password check section, 102 is the data fetch section, and 103 is the system or computer center.

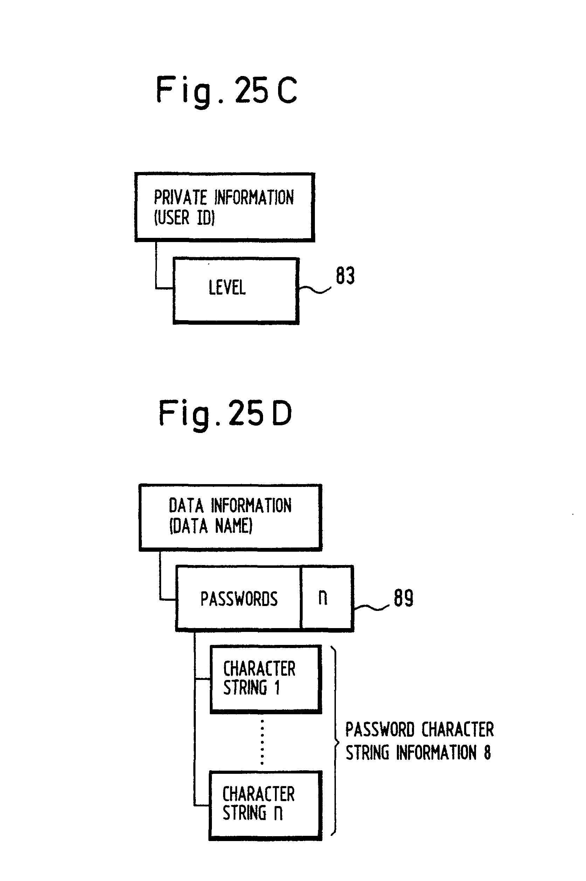

Based on the user ID from the I/O processing section (91), the level fetch section (90) retrieves the private information holding section (82) in order to fetch the corresponding level (83), and sends it to the transmit section (95). FIG. 25C illustrates the configuration of the private information holding section (82). As illustrated, the private information holding section (82) stores the corresponding level (83) for each user ID.

The I/O processing section (91) receives input from the input section (93) and displays prescribed information on the display section (94). The input section (93) is an input device like a keyboard. It is used to input items such as user IDs, reference data names, and passwords. The display section (94) is a display device like a CRT. It is used to display items such as password input requests, and data 87. The I/O processing section (91) sends the received user ID to the level fetch section (90). It also sends the received reference data name (input of specification of data to be referenced) and multiple passwords to the transmit section (95). When receiving the number of passwords to be input (password input request) from the receive section (97), the I/O processing section (91) displays the password input request on the display section (94).

When the data display processing section (92) receives data (87) from the receive section (97), it displays the data (87) on the display section (94).

The transmit section (95) in the terminal (81) sends the level, reference data name, and passwords to the receive section (96) in the system (103). The receive section (96) sends the reference data name to the data information fetch section (99), the level to the input count calculate section (100), and the passwords to the password check section (101).

The receive section (97) in the terminal (81) sends the received password input request to the I/O processing section (91) and the received data (87) to the data display processing section (92). The transmit section (98) in the system (103) sends the password input request and data (87) to the receive section (97).

Based on the reference data from the receive section (96), the data information fetch section (99) retrieves the data information holding section (86) in order to fetch the corresponding number of passwords (89) and sends it to the input count calculate section (100). FIG. 25D illustrates the configuration of the data information holding section (86). As illustrated, the data information holding section (86) stores the corresponding number of passwords (89) for each data name (data). It also stores character strings as passwords. When the number of passwords (89) is "n," it stores n character strings, (character string 1 to character string n).

When the number of passwords (89) is 0 (when no password is set), the data information fetch section (99) reports it to the data fetch section (102).

Based on the level (83) and the number of passwords (89), the input count calculate section (100) obtains the number of passwords to be input. For example, if the level (83) is L and the number of passwords (89) is n, the number of passwords to be input (m) is, m = n - L. The input count calculate section (100) sends a request to input m passwords to the transmit section (98).

For example, for data (87) which can be referenced by anybody, the parameters n = 0 (L = 0) or n = 1 (L = 1) are set. In this case, reference of the data is permitted when only the user ID is input. Even if "n" is large, and "L" is 1 less than "n," the user ID of the rank can reference the important data (87) by inputting only one password.

The password check section (101) checks passwords from the receive section (96). That is, it checks whether the number of the passwords is previously obtained by the input count calculate section (100) was m. It also checks whether each of the input passwords matches one of the character strings stored as passwords in the data information holding section (86) (see FIG. 25D). When all the input passwords match the character strings stored as passwords, the password check section (101) reports it to the data fetch section (102).

The data fetch section (102) receives a report from the data infor mation fetch section (99) or password check section (101). Then, based on the reference data name, the data fetch section retrieves the database (85) to fetch data (87) of the applicable data name and sends the data to the transmit section (98). For this operation, the above-mentioned report includes the reference data name.

The security processing section (84) consists of the data information fetch section (99), input count calculate section (100), and password check section (101), or it includes the level fetch section (90) in addition to the above sections.

The level fetch section (90) may be provided in the system (103). If so, information on the level (83) may also be provided in the system (103).

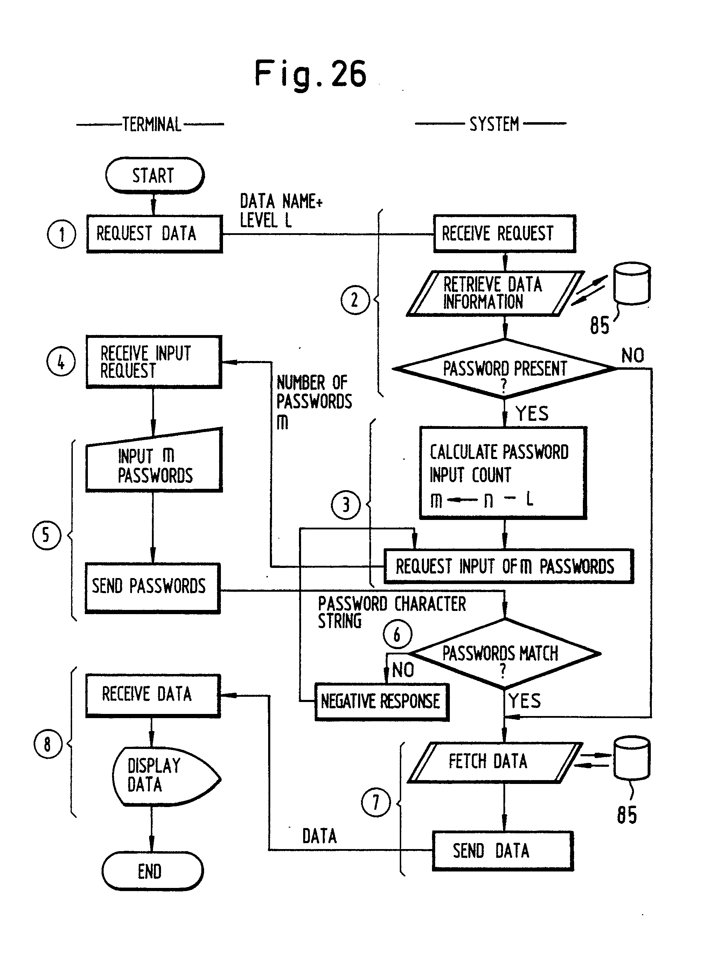

FIG. 26 is the flowchart of data reference processing for FIG. 25B.

① A user inputs the user ID and reference data name from the input section 93.

For this input, the level fetch section (90) obtains the corresponding level L based on the user ID. By attaching the level L to the reference data name, the terminal (81) issues a data request to the system (103).

② The system (103) receives the data request. Then, the data information fetch section (99) retrieves the data information holding section (86) of the database (85).

If no password is present, the data information fetch section (99) reports it to the data fetch section (102).

③ If passwords are present, the input count calculate section (100) obtains the number of passwords to be input m.

Based on the obtained number, the system (103) issues a request to input m passwords to the terminal (81).

④ The terminal (81) receives the input request. Then, the I/O processing section (91) displays the request to input m passwords on the display section (94).

⑤ The user inputs (m) passwords from the input section (93).

For this input, the terminal (81) sends the input passwords to the system (103).

⑥ The system (103) receives the input passwords. Then, the password check section (101) references the data information holding section (86) to check whether the input passwords match the previously stored (defined) passwords (88).

If even one of the m input passwords does not match the defined passwords (88), processing items ③ and later are repeated. If the processing items are repeated the prescribed number of times, the data request is not accepted.

⑦ If all the m input passwords match the passwords (88), the password check section (101) reports it to the data fetch section (102).

When receiving a report from the data information fetch section (99) or password check section (101), the data fetch section (102) retrieves the data (87) corresponding to the reference data name. Then, the data (87) is sent from the system (103) to the terminal (81).

⑧ The terminal (81) receives the data (87). Then, the data display processing section (92) displays the data (87) on the display section (94).

Using the user ID level and multiple passwords according to the importance of data can realize the following: (1) Even if someone finds the user ID and a password, referencing of important data importance can be prevented. (2) High-level user IDs can reference important data with less load.

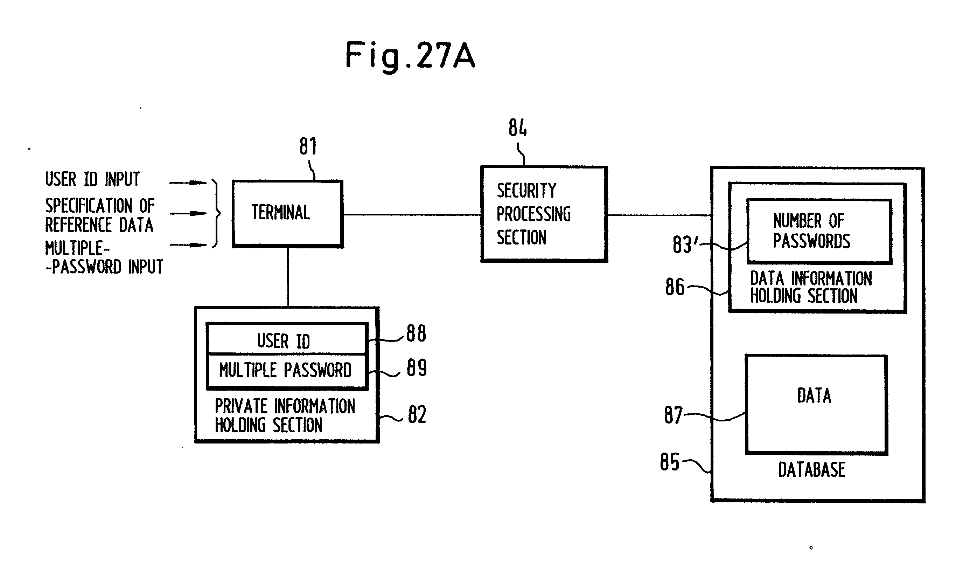

FIG. 27A illustrates security control in which the number of passwords held is determined according to user rank.

The numbers in FIG. 27A indicate as follows:

81      Terminal
82      Private information holding section
83'     Number of passwords
84      Security processing section
85      Data base
86      Data information holding section
87      Data
88      User ID
89      Multiple passwords

The reference numbers in FIG. 25A excluding number 83' are assigned to the same elements in FIG. 27A as those in FIG. 25A.

The user using the data base (85) enters his (her) user ID (88) and passwords from the terminal (81) to specify referenced data (87).

The private information holding section (82) holds two or more passwords (89) corresponding to each user ID (88)(user). The higher the user ID (88) rank becomes, the larger the number of passwords (89) becomes. (That is, the user is allowed to have more passwords.)

The data base (85) contains data (87) and the data information holding section (86). This section stores the number of passwords according to the importance of each data (87). The higher data (87) importance is, the larger the number of passwords (83) is.

The security processing section (84) determines whether data (87) reference is accepted. When a user ID (88) and a password previously determined are entered from the terminal (81), this section enables reference of the specified data (87). The security processing section (84) sets the number of passwords (89) corresponding to the rank of a user ID (88) when the passwords are stored.

When a user ID (88) and the referenced data name (87) are specified from the terminal (81) to reference data (87) in the data base (85), the number of passwords (83') corresponding to the specified data (87) is retrieved from the data information holding section (86).

The security processing section checks if the number of passwords entered from the terminal (81) is the same as the number of passwords (83'). If so, the security processing section (84) checks if the entered passwords match passwords (89) corresponding to the entered user ID (88) stored in the private information holding section (82). When all entered passwords match the passwords (89), the user ID (88) is enabled to reference the specified data (87).

Thus, security of high-level data (87) can be protected by controlling the number of passwords according to the importance of the data (87). For example, even if an ID (88) or password of a low rank user who can have only one password is known by another user, the high-level importance data (87) can be protected. As a result, the security of the entire data base (85) can be increased.

Even if the number of high-level passwords (83) is greatly increased, the high-level user can reference the data (87). This is because he (she) can hold many passwords corresponding to his (her) rank.

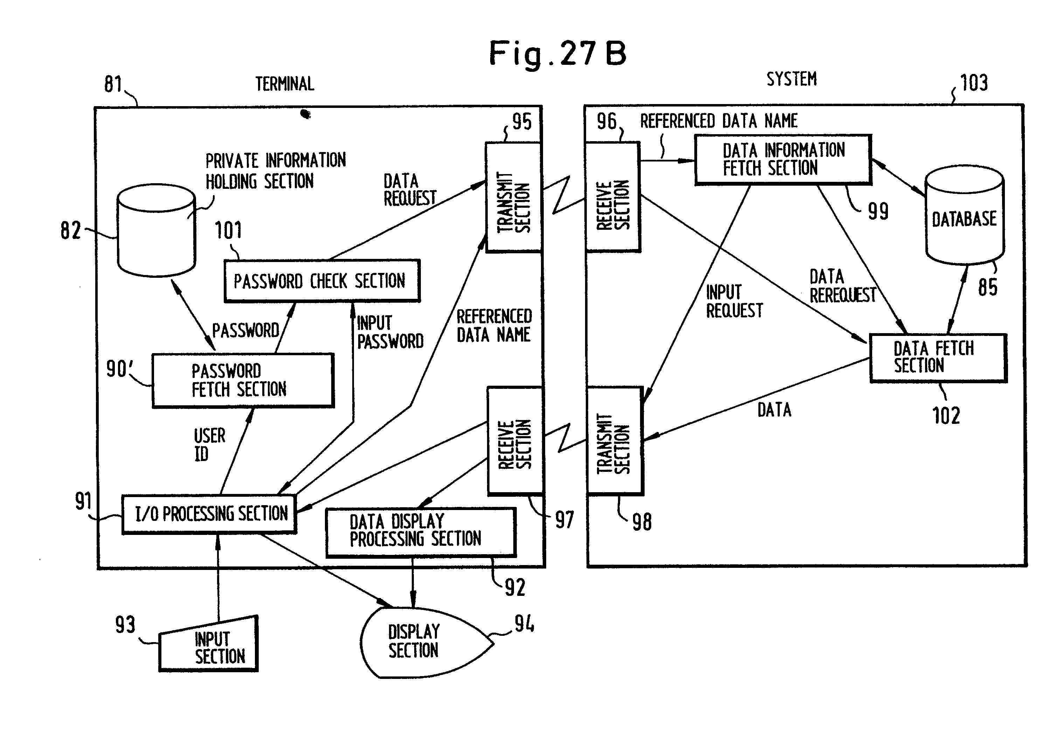

FIG. 27B illustrates the detailed configuration diagram of FIG. 27A.

The numbers in FIG. 27B indicate as follows:

90'     Password fetch section
91      I/O processing section
92      Data display processing section
93      Input section
94      Display section
95/98   Transmit section
96/97   Receive section
99      Data information fetch section
101     Password check section
102     Data fetch section
103     System or computer center

The reference numbers in FIG. 25B, excluding number 90', are assigned to the same elements in FIG. 27B as those in FIG. 25B.

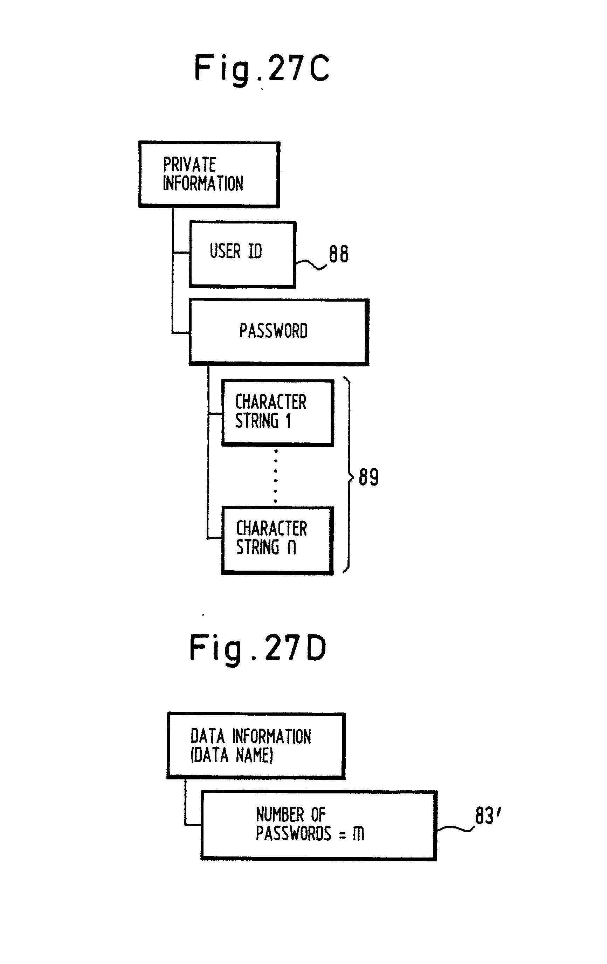

The password fetch section (90') retrieves the private information holding section (82) according to the user ID (88) from the I/O processing section (91) and retrieves two or more corresponding passwords (89) and transfers them to the password check section (101). FIG. 27C illustrates the configuration of data in the private information holding section (82). As illustrated, two or more passwords (89) (character string 1, ..., character string n) corresponding to each user ID (88) are stored. These character strings are previously set by the user corresponding to the user ID (88). The number of character strings is limited by the security

22

EP 0 460 216 A1

processing section (84). The private information holding section (82) can store information about the rank of each user ID (for example, the possible number of passwords (89)). When passwords are set, the security processing section (84) references the information in the private information holding section (82) and determines the maximum number of character strings.

Two or more passwords (89) are retrieved after passwords are sent from the input section (93).

The I/O processing section (91) receives input from the input section (93) and displays data in the display section (94). The input section (93) is an input device similar to a keyboard through which user IDs (88), referenced data names, passwords, etc. are entered. The display section (94) is a display unit similar to a CRT which displays a password input request and displays data (87). The I/O processing section (91) transfers the received user ID (88) to the password fetch section (90). The I/O processing section transfers the received referenced data name (specification of data to be referenced) to the transmit section (95), and the password which was input from the input section (93) and accepted to the password check section (101). When receiving the number of passwords (83) to be entered (password input request) from the receive section (97), this I/O processing section displays the password input request in the display section (94).

When receiving the data (87) from the receive section (97), the data display section (92) displays the data in the display section (94).

The transmit section (95) of the terminal (81) sends the referenced data name (data request) and data re-request to the receive section (96) of the system (103). The receive section (96) sends the referenced data name to the data information fetch section (99) and sends the data to the re-request to the data fetch section (102).

The receive section (97) of the terminal (81) transfers the received password input request to the I/O processing section (91) and transfers the received data (87) to the data display processing section (92). The transmit section (98) of the system (103) sends the password input request and data (87) to the receive section (97).

The data information fetch section (99) retrieves the data information holding section (86) for the number of passwords (83) according to the referenced data name. The data information fetch section retrieves and sends the number to the transmit section (98). FIG. 27D illustrates the data configuration in the data information holding section (86). The number of passwords (83) (for example, m) is stored for each data name (data).

When the number of passwords (83) is 0 (no passwords are set), the data information fetch section (99) informs the data fetch section (102). For example, when data (87) can be referenced by any user only by entering his (her) user ID, m is 0.

A low-level user ID (88) having passwords (89) fewer than the number of passwords (83) (m) cannot reference the data (87).

The password check section (101) checks the passwords entered from the I/O processing section (91). That is, it checks that as many passwords as the number of passwords (m) fetched by the data information fetch section (99) is entered. The password check section (101) checks if each entered password matches any one of the character strings (passwords (89)) in the private information holding section (82) (see FIG. 27C). When all entered passwords are equal to character strings (passwords (89)), the password check section (101) informs the system (103) of the data (87) re-request through the transmit section (95).

Upon receiving notification from the data information fetch section (99) or password check section (101), the data fetch section (102) retrieves the data base (85) for the data (87) associated with the referenced data name. The data information fetch section retrieves the data (87) and sends it to the transmit section (98). The notification includes the referenced data name.

The security processing section (84) contains the data information fetch section (99) and password check section (101). In some cases the password fetch section (90') is added.

The password fetch section (90') may be installed in the system (103). If this happen, the password check section (101) can also be installed in the system (103).

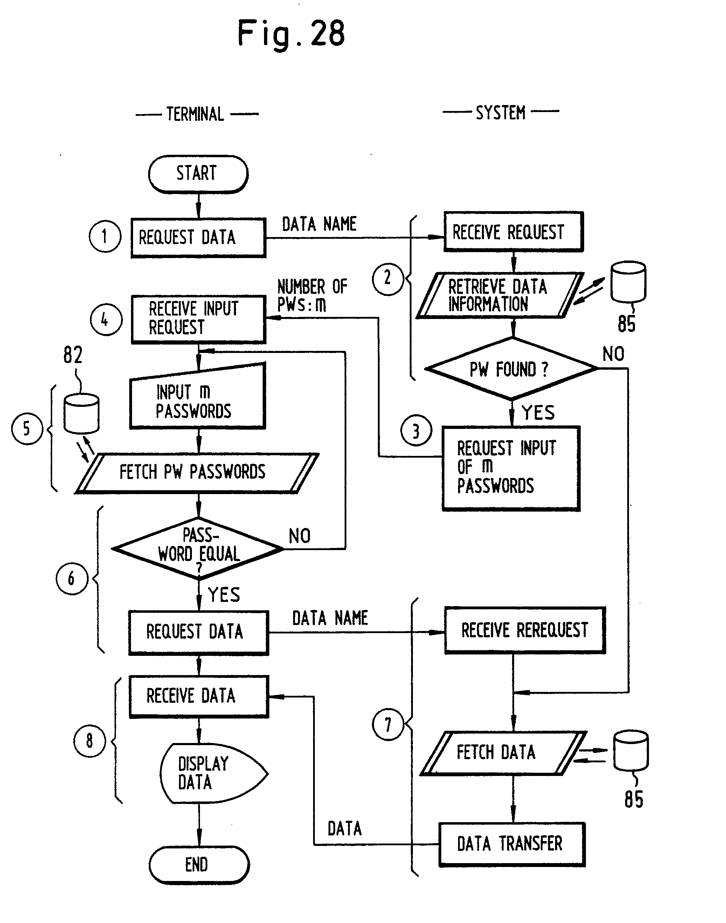

FIG. 28 illustrates the data reference processing flow in the embodiment of FIG. 27B.

① The user enters the user ID (88) and referenced data name from the input section (93).

Upon receiving these data items, the terminal (81) sends a data request with the referenced data name to the system (103).

② When the system (103) receives this data request, the data information fetch section (99) retrieves the data information holding section (86) in the data base (85).

When the number of passwords (83) is 0 (that is, there is no password), the data fetch section (102) is notified.

③ When the number of passwords (83) is not 0 (that is, there are passwords), the data information fetch section (99) retrieves the number of passwords (83). Then, the system (103) requests the terminal (81) to enter m passwords.

④ When the terminal (81) receives this request, the I/O processing section (91) displays an input request of m passwords in the display section (94).

⑤ The user enters m passwords from the input section (93).

Then, the password fetch section (90) retrieves all passwords (89) corresponding to the user ID (88) and sends them to the password check section (101).

⑥ The password check section (101) checks if the entered passwords are equal to previously stored (defined) passwords (89).

If they are not, processing steps ⑤ and after are repeated. If all entered passwords do not match the stored ones even after the steps are repeated as many times as predetermined, the request of the user ID (88) is rejected.

When all entered passwords match (m), the password check section (101) informs the system (103) of the second request of the data (87).

⑦ Upon receiving the notification from the data information fetch section (99) or the password check section (101) (the system (103) receives the second request of the data (87)), the data fetch section (102) retrieves the data (87) corresponding to the referenced data name. The data (87) is sent to the terminal (81) from the system (103).

⑧ When the terminal (81) receives the data (87), the data display section (92) displays the data (89) in the display section (94).

Thus, by assigning a number of passwords based on the degree of data importance and checking these passwords, referencing of high-level data can be protected even if a user ID or a password is revealed. High-level users can reference high-level data without any trouble.

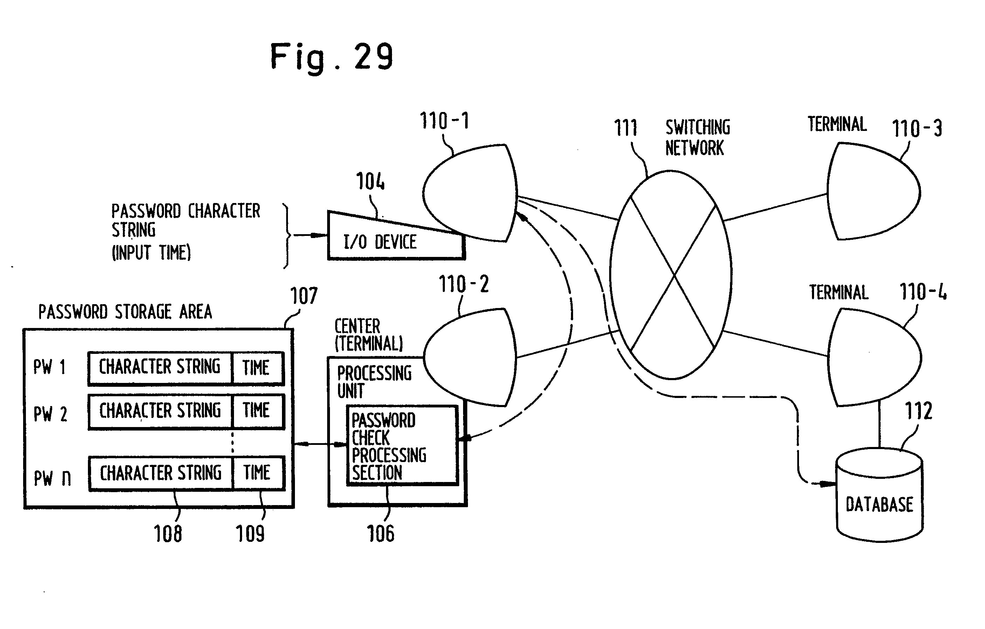

FIG. 29 illustrates embodiment of the security control in which the input time allowed for passwords.

The numbers in FIG. 29 indicate the following items:

104 I/O unit
105 Processing unit
106 Password check processing section
107 Password storage area
108 Password character string
109 Password input time
110 (110-1 to 110-4) Terminal
111 Switching network (or public network)
112 Data base (resources)

The password check section (106) is installed in the processing unit (105) consisting of the central processing unit and memory. This section checks user authority by comparing passwords entered by a user with predetermined passwords.

The I/O unit (104) is used for entering passwords.

The password storage area (107) stores predetermined passwords (password character strings) (108) and information about input time of the passwords (password input time) (109).

The password check section (106) performs processing when a user enters passwords from the I/O unit (104) as follows:

The password check section (106) stores the entered passwords (character strings) and retrieves and saves information about input time of the passwords. This information contains input time intervals between characters of character strings.

Then, the password check section (106) reads password character strings (108) and password input time (109) from the password storage area (107). The password check section (106) compares the entered (saved) passwords (character strings) with the password character strings (108). The password check section (106) compares the retrieved (saved) password input time with the password input time (109).

After this double comparison, the user has authority only when both the character string and the input time match. Otherwise, the user has no authority.

By applying the multicheck to one password, the user authority can be checked completely and easily.

Terminals (110-1 to 110-4) are independent computers, each having an I/O device (104), processing unit (105), and other units. The terminals are connected each other through the switching network (111) to form a computer network.

Each of these terminals installs the data base (112) or, if necessary, distributes its resources. These terminals are connected through the switching network (111) to form a distributed database system.

In the distributed database system, terminal (110-2) functions as the center for management of the data

EP 0 460 216 A1

base (112). That is, this terminal checks passwords in order to verify the authority of a user who accesses the protected data base (112). The password storage area (107) of terminal (110-2) stores password character strings (108) and their corresponding password input time (109) of all passwords (PW1 to PWn) in the system or group. The password storage area (107) is allocated only to terminal (110-2) (center).

The password check processing section (106) is also installed in terminals (110-1 to 110-4). Entered passwords (character strings) are saved and the input time of the passwords is retrieved and saved in terminals (110-1 to 110-4). Character strings and information about their input time saved in each of terminals (110-1, 110-3, and 110-4) (excluding the center) are sent to the password check processing section (106) in terminal (110-2) through the switching network (111). The password check processing section (106) in terminal (110-2) uses the passwords and information to check the user authority. Therefore, only terminal (110-2) has the password storage area (107).

The password check processing section (106) stores passwords (character strings) (108) and password input time (109) in the password storage area (107). That is, passwords (character strings (108)) and password input time (109) the user or system manager enters from terminals (110-1 to 110-4) are registered in the password storage area (107) in order to set the passwords.

The password check section (106) in each of the terminals (110-1 to 110-4) saves the character strings of the entered passwords and input time. The character strings and input time saved in each of terminals (110-1, 110-3, and 110-4) (excluding the center) are sent to terminal (110-2) through the switching network (111). The password check processing section (106) in terminal (110-2) registers the passwords entered from each of the terminals (110-1 to 110-4) in the password store area (107).

In addition to the password, the center (terminal 110-2) may also check user authority by private ID, or keyword. Installing the data base (112) may be omitted.

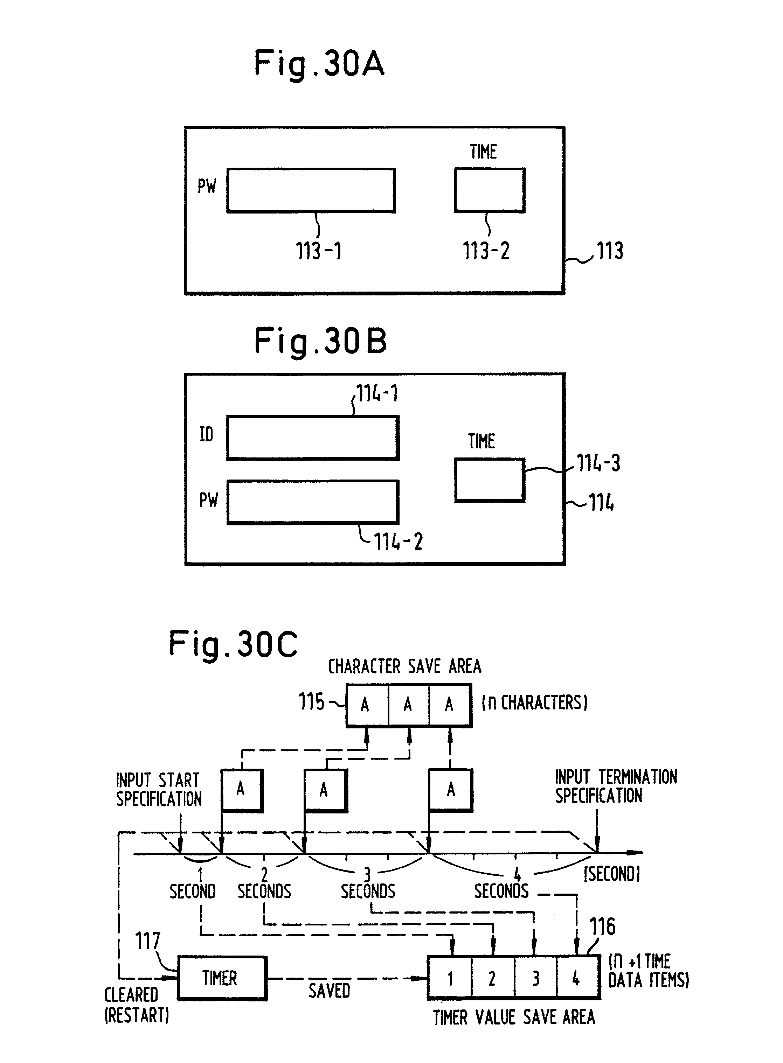

FIGs. 30A, 30B, and 30C illustrate password input.

The numbers in FIGs. 30A and 30C indicate the following items:

| 113 | Input screen |
| 113-1 | PW input area |
| 113-2 | Time display area |
| 114 | Initial screen |
| 114-1 | ID input area |
| 114-2 | PW input area |
| 114-3 | Time display area |
| 115 | Character save area |
| 116 | Timer value save area |
| 117 | Timer |

When a user enters the password registration specification from the I/O unit (104), the password check processing section (106) of terminal (110) displays the (password) input screen (113) in (FIG. 30A) in the I/O unit (104). The I/O screen (113) displays the PW input area (113-1) and time display area (113-2). The user enters a password (character strings) in the PW input area (113-1). The user can check how the password input time is set by referencing the time display area.

During operation of the data base (112), when a user specifics access to the data base (112) with passwords from the I/O unit (104) of the terminal (110), the initial screen (114) in FIG. 30B is displayed in the I/O unit (104). The password check processing section (106) of the terminal (110) performs this. The initial screen (114) displays the ID (private ID) input area (114-1), PW input area (114-2), and time display area (114-3). The user enters his (her) private ID in the ID input area (114-1) and a password (character string) of the data base (112) to be accessed in the PW input area (114-2). By referencing the time display area (114-3), the user can enter the password in consideration with the password input time.

Setting the time display areas (113-2 and 114-3) enables definition according to the computer time (local or global) in addition to definition according to ordinary time. If these time display areas are omitted, unauthorized users cannot know the input time is also checked, thus increasing the security.

Passwords are entered in the PW input areas (113-1 and 114-2) as illustrated in FIG. 30C.

When the user specifies the start of an input, the timer (117) is cleared and restarted.

It is assumed that the first character, for example A, (character, numeric character, or symbol) of a character string consisting of one or more characters is entered one second after this specification. Accordingly, character A is saved in the predetermined location in the character save area (115). The value of the timer (117) (one second) is saved in the predetermined location in the timer value save area (116). The timer (117) is cleared and restarted.

This processing is performed each time a character of the character string is entered.

When input termination is specified, the value of the timer (117) (for example, four seconds) is saved in the timer value save area (116) and the timer (117) is cleared.

Then the number of characters is n, as many time data items as n + 1 are saved in the timer value save area (116).

In this embodiment, input time intervals between characters of character strings are used as the password input time (109). However, other time data, for example, time elapsed from specification of an input start can be used. Specification of an input start and that of an input termination can be ignored. In this case, as many time data items as n - 1 are saved. When the timer indicates 1 ±0.5 seconds, one second is saved with input errors by a human taken into consideration.

This processing is performed by the password check processing section (106). Therefore, the password check processing section (106) prepares the character save area (115), timer value save area (116), and timer (117).

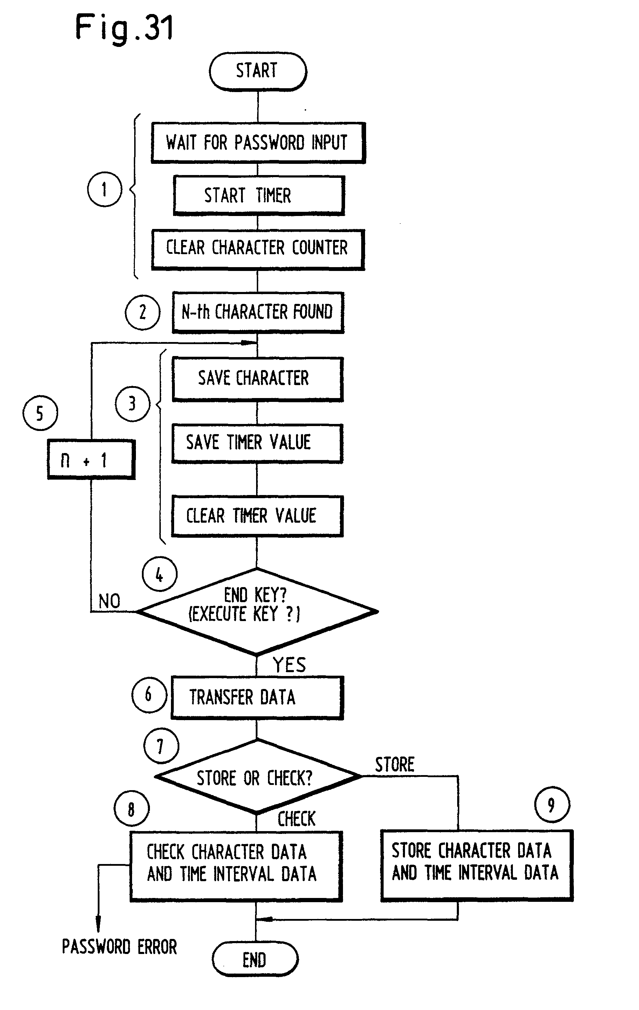

FIG. 31 illustrates the password input processing flow in the embodiment of FIG. 29.

① When an input start of a password into the input screen (113) or the initial screen (114) is specified from a terminal (110) (110-1 in this figure), the password check processing section (116) of the terminal (110-1) in the password input wait status starts the timer (117) and resets the character counter to 0.

② A character of the password is input in the PW input area (113-1 or 114-2).

③ The password check processing section (116) saves the character in the character save area (115) and the timer value in the timer value save area (116). Then, this section clears (restarts) the timer. The character and timer value are saved in locations corresponding to a value indicated by the character counter.

④ The password check processing section (106) checks if the next input is an input termination specification (END key, EXECUTE key, or enter key).

⑤ If not, this section advances the character counter by one and repeats processing steps ③ and after.

⑥ If so, this section advances the character counter by one, saves the timer value in the timer value save area (116), and clears the timer (117). Thus, the password character string (108) is saved in the character save area (115) and password input time is saved in the timer value save area (116).

The password check processing section (106) sends the input password character string (108) and password input time (109) to the password check processing section (106) of the center terminal (110-2) through the switching network (111).

⑦ The password check processing section (3) of terminal (110-2) checks the received data to determine whether the data is stored (registered) in the password storage area (4) or password checked. That is, whether the data is entered from the input screen (113) or initial screen (114) is checked,

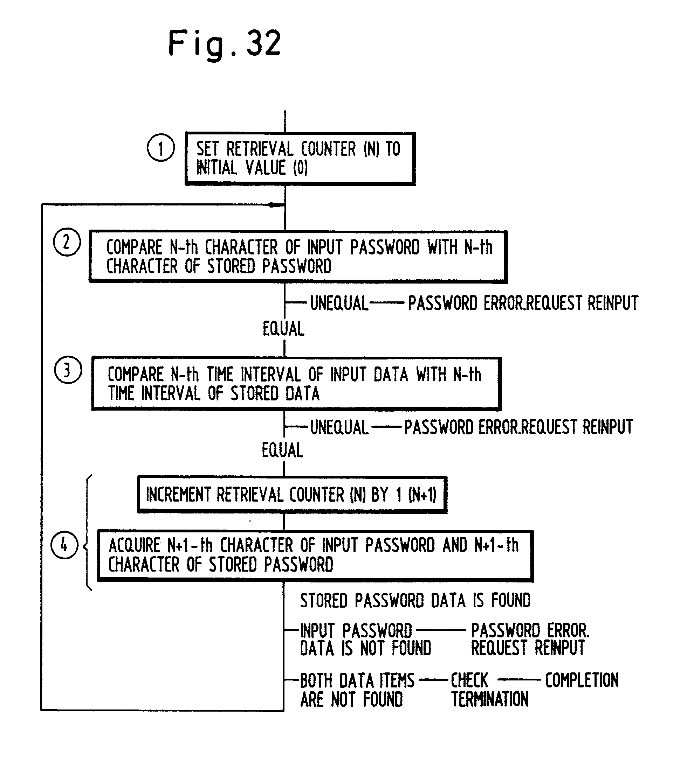

⑧ When the data is to be password checked, it is checked by the password storage area (107). (See FIG. 32.)

⑨ When the data is to be registered, it is registered in the password storage area (107).

FIG. 32 illustrates the password check processing flow performed by the password check processing section (106) of terminal (110-2).

① The retrieval counter value (N) is set to the initial value (0).

② The N-th character of the entered character string (5) is checked to see if it is equal to the N-th character of the character string in the password storage area (107).

If they are not equal, a password error is assumed and a reinput request is made. This request is sent from the password check processing section (106) of terminal (110-2) to the password check processing section (106) of accessing terminal (110-1) through the switching network (111).

③ If they are equal, the N-th time data of the entered password input time interval is compared with the N-th time data of the input time interval in the password store area (107).

If they do not match, a password error is assumed and a reinput request is made (processing step ② ).

④ If they match, the retrieval counter value (N) is incremented by 1. The N + 1-th character of the entered password and its input time and the corresponding data in the password storage area (107) are acquired.

If there is no more entered data and there is data in the password storage area (107), a password error is assumed and a reinput request is made (processing step ② .)

If both data items are not found, the check terminates normally.

If both data items are found, processing stem ② and after are performed.

When the check terminates normally, the user is assumed to have the access authority and enabled to reference the data base (112). In this example, terminal (110-2) (center) knows that the data base (112) is allocated in terminal (110-4) (storage location) according to the password. Accordingly, terminal (110-1) (accessing terminal) or terminal (110-2) accesses terminal (110-4) through the switching network (111).

Then, the contents in the data base (112) are sent to terminal (110-1) from terminal (110-4) through the switching network (111) and displayed (for example, in the I/O unit (104)).

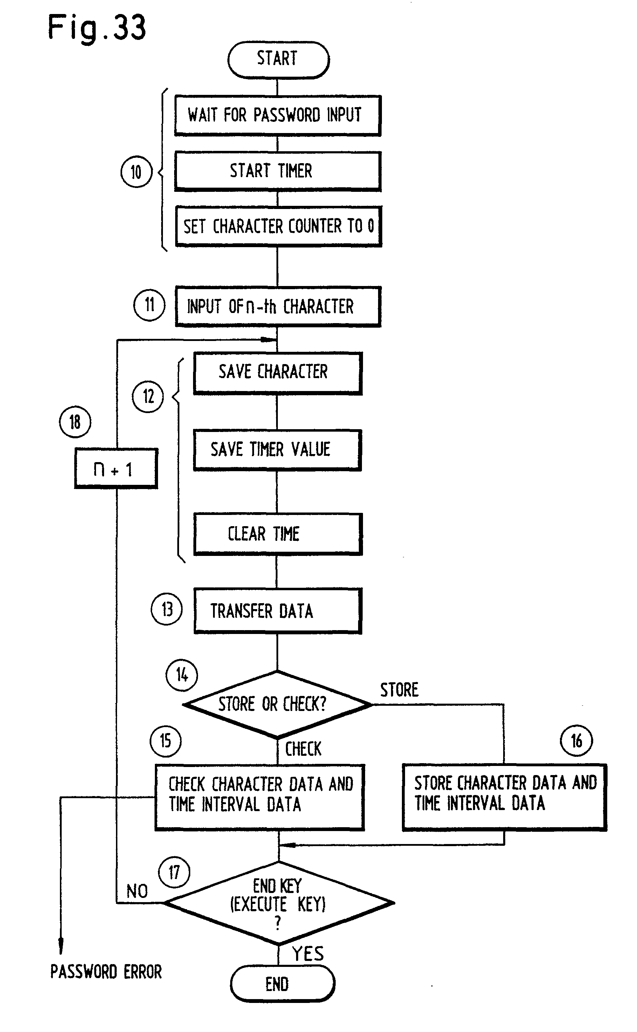

In this system, password storage/check (processing step ⑦ ) is performed after one password character string is entered. However, this processing step can be performed for each character as shown in FIG. 33.

FIG. 33 illustrates the password input processing flow for each character and corresponds to FIG. 31.

In FIG. 33, after processing steps ⑩ to ⑫ (corresponding to ① to ③ ) are performed, data (one character and one timer value) is transferred to terminal (110-2) (center) through the switching network (111) (processing step ⑬). Then, processing steps ⑭ to ⑯ (corresponding to ⑦ to ⑨ ) are performed. If a password error is detected, reinput is requested immediately. Then, processing steps ⑰ and ⑱ (corresponding to ④ and ⑤ ) are performed. In processing step ⑰, the timer value is saved according to input termination specification as with processing step ⑯.

This invention is effective when passwords are checked in a system which has no switching network (111), such as an independent data processing system.

The existing password check (which checks only password character strings) and the multicheck used by this invention (which checks both password characters and input time) can be applied together. Which check is to be applied can be predetermined by the system manager or the user creating the data base (112).

This system can be applied to security checks using keywords, in addition to the password check. Security can be increased by applying multicheck of data and input time to a system in which resources are protected by comparing input data and previously registered data in order to check the authority of a requesting user.

As explained above, both input passwords and input time can be checked by registering passwords and input time for password check processing. Therefore, the authority of the user can be checked by a simple configuration and system security can be increased. In particular, the database security can be increased in a distributed database system connecting database terminals through a switching network. In this system, even when a large a number of unspecified users access the network authority can be checked easily and the database security can be increased.

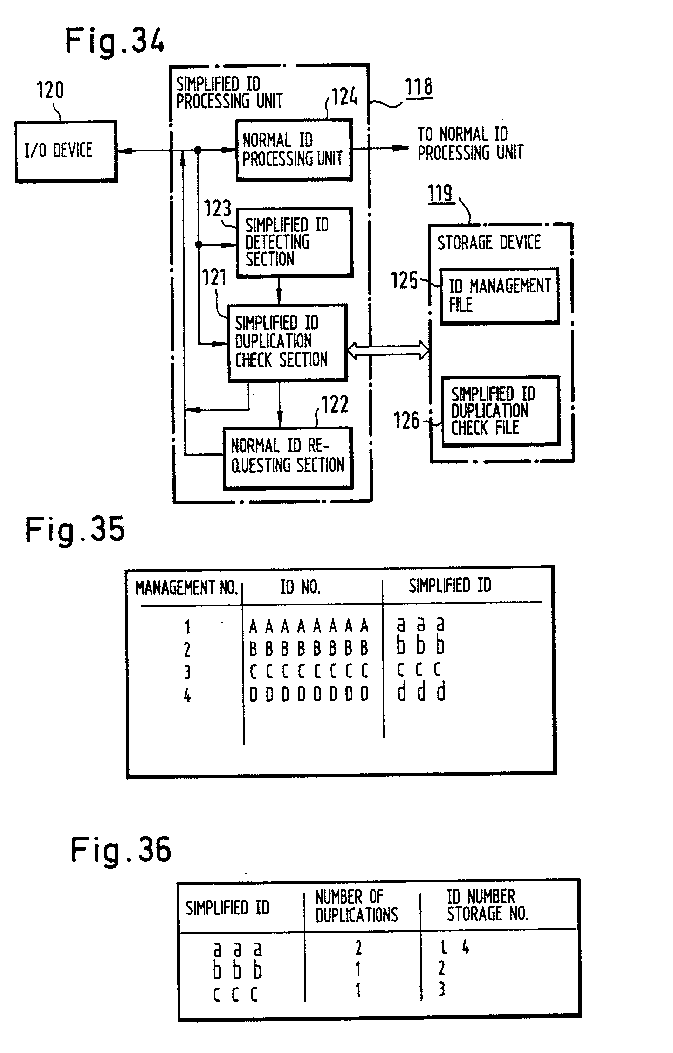

FIG. 34 is the configuration diagram of this invention having the function to deal with duplicate registration of simplified IDs.

In FIG. 34, the number 118 indicates the simplified ID processor to register a new simplified ID and check duplicate registration of simplified IDs in use. The number 119 indicates the storage device storing the information by which an authorized user can enter the system with his or her simplified ID. The number 120 indicates the simplified IDs or ID numbers are entered in the I/O device. The number 121 indicates the simplified ID duplication checking section to check the duplication of a simplified ID entered from the I/O device (120) during registration of a simplified ID or an entry to the system. The number 122 indicates the normal ID request section not to approve a simplified ID user to enter the system when the simplified ID is duplicate and requests the user to enter the normal ID. The number 123 indicates the simplified ID detecting section. The number 124 indicates the normal ID detecting section. The number 125 indicates the ID management file which is the memory area to store the normal and simplified IDs in order of the application of simplified ID registration. The number 126 indicates the simplified ID duplication check file which is the memory area to store duplication of simplified IDs which may occur because the simplified IDs are registered depending on the registration applications by users without change.

The I/O device (120) is divided into two parts; one is used when a user enters a computer system that includes a switched network and the other is used when a user enters the system directly.

When a new simplified ID registration is requested from the I/O device (120), an arbitrarily determined simplified ID and the normal ID number are registered in the ID management file (125) in registration application order. The registration in the ID management file (125), and the duplication of the simplified ID are checked by the simplified ID duplication checking section (121) by referring to the simplified ID duplication check file (126). If the simplified ID is duplicated, the number of duplications in the field is incremented by one. Then, the new duplication number, the ID number, and the duplicate are stored into the simplified ID duplication check file (126).

When a simplified ID for system entry is entered from the I/O device (120) to the simplified ID processor (118), the simplified ID duplication checking section (121) refers to the simplified ID duplication check file (126) and checks whether the simplified ID is duplicate. If the simplified ID is not duplicate, the simplified ID duplication checking section (121) performs the processing to approve system entry. If it is duplicate, the simplified ID duplication checking section (121) notifies the normal ID request section (122) of the duplication to make and asks the I/O device (120) to execute the normal ID input request.

27

The simplified ID detecting section (123) detects simplified IDs entered from the I/O device (120). The normal ID detecting section (124) detects normal IDs by identifying the number of bits in the entered ID.

When a normal ID is detected by the normal ID detecting section (124), the ID is assumed to be used for entry to the system and transmitted to the normal ID processing unit (not illustrated). After it is confirmed that the ID number matches the password, entry to the system is approved.

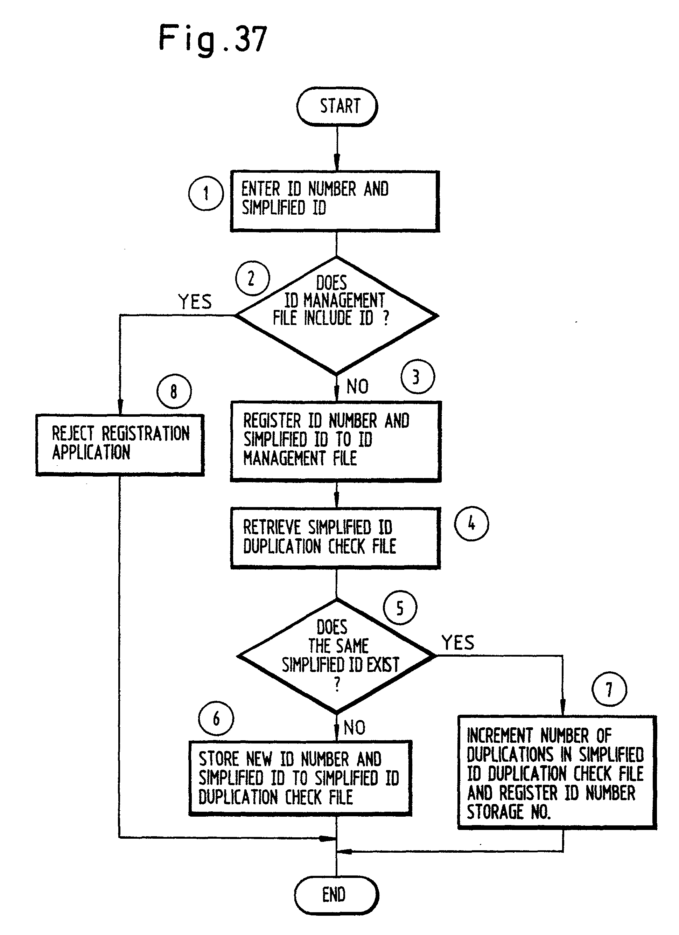

When a new simplified ID registration is requested from the I/O device (120), the simplified ID duplication checking section (121) saves the simplified ID to the storage device (119). The simplified ID may be described as follows. The operation refers to the flowchart of the simplified ID registration shown in FIG. 37. The simplified ID duplication checking section (121) receives the ID number of a simplified ID registration applicant and an arbitrarily selected simplified ID (step ① in FIG. 37), retrieves the ID management file (125), and checks whether the combination of the ID number and its simplified ID is already registered (step ② ). If the combination is already registered, the simplified ID duplication checking section rejects the registration application to avoid duplicate registration (step ⑧ ). If the combination is not registered, the ID number and its simplified ID are registered to the ID management file (125) in the registration application order shown in FIG. 35 (step ③ ).

When a user having the ID number of DDDDDDDD applies for registration with the simplified ID of aaa, the ID number and the simplified ID are registered in management field number 4 as shown in FIG. 35. This is because the combination of the ID number and its simplified ID are not registered.

The simplified ID duplication checking section (121) then retrieves the simplified ID duplication check file (126) (step ④ ) and checks whether the simplified ID is registered or not (step ⑤ ). If the simplified ID is not registered, the simplified ID, the duplication number "1" (indicating no duplication), and the ID number storage number registered in the ID management file (125) are newly registered into the simplified ID duplication check file (126) (step ⑥ ). If the simplified ID is already registered, the duplications number in the simplified ID field is incremented by one and the storage number is entered in the ID number storage no. field (step ⑦ ). In the above example (registration application of the simplified ID aaa), the duplication number 1 in the aaa field is replaced with 2, and the ID number storage No. 4 is entered as shown in FIG. 36.

When the registration of an existing simplified ID is applied for with a normal ID number, the ID is stored into the storage device (119) in spite of the duplication of the simplified ID. However, the application for duplication registration with the same normal ID and the existing simplified ID are excluded.

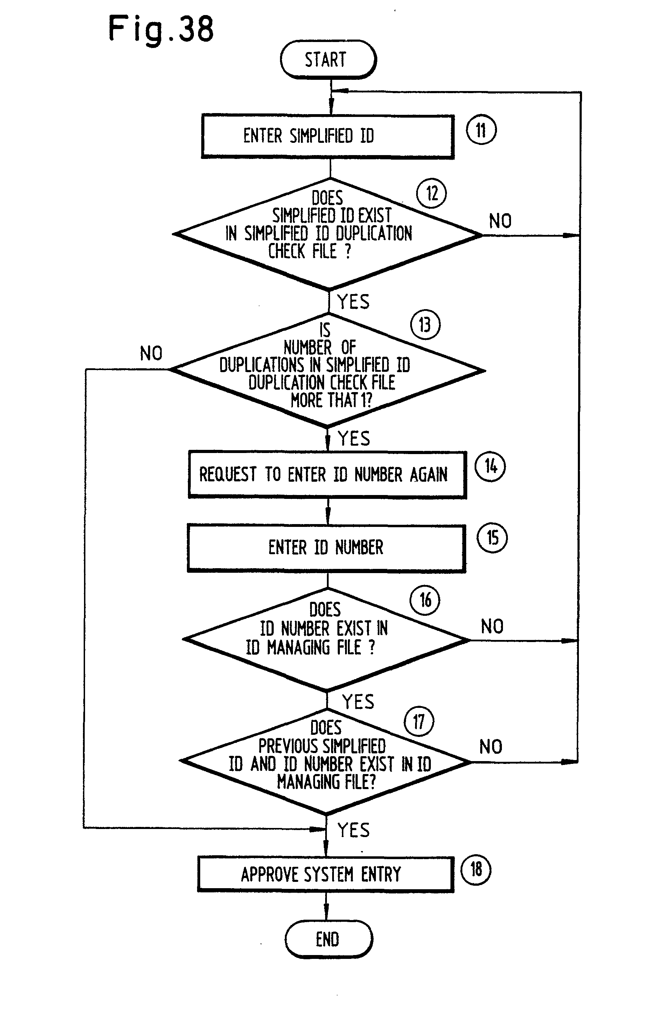

When an entry request from the I/O device (120) to the system with a simplified ID is entered in the simplified ID processor (118), the simplified ID processor (118) performs processing as described in the flowchart of system entry illustrated in FIG. 38. The simplified ID entered from the I/O device (120) is detected at the simplified ID detecting section (123) in order to enter the simplified ID to the simplified ID duplication checking section (121) (step ① in FIG. 38). The simplified ID duplication checking section (121) retrieves the simplified ID duplication check file (126) and checks whether the simplified ID is included in the simplified ID duplication check file (126) (step ⑫). If the simplified ID does not exist, or the simplified ID is not registered in the storage device (119), the simplified ID duplication checking section (121) requests the I/O device (120) to enter the simplified ID again. If the ID exists, it is checked to see if the duplication number on the simplified ID is more than 1 (step ⑬). That is, it judges whether entry to the svstem is requested with a duplicate simplified ID. When the duplication number of the simplified ID is 1, entry to the system with the simplified ID is approved (step ⑱). When the duplication number of the simplified ID is more than 1, the simplified ID duplication checking section (121) requests the I/O device (120) to re-enter the normal ID through the ID request section (122) (step ⑭). If the simplified ID is registered in the storage device (119) by duplication, the ID looses the effectiveness of the simplified ID.

When a re-input of a normal ID is sent from the I/O device (120) (step ⑮), the simplified ID duplication checking section (121) retrieves the ID management file (125) to check whether the ID number exists (step ⑯), and to check whether the combination of the ID number and simplified ID are suitable (step ⑰). When the combination of the ID number and simplified ID are registered in the ID management file (125), entry to the system is approved (step ⑱). When the ID number does not exist in the ID management file (125) and the combination of the ID number and simplified ID are not registered, the simplified ID duplication checking section (121) requests re-entry starting from steps ⑯ and ⑰ simplified ID to the I/O device (120).

The procedure above prevents unauthorized access when simplified IDs are used.

When a normal ID is re-entered from the I/O device (120) instead of the simplified ID, the normal ID is detected in the normal ID detecting section (124) and then sent to the normal ID processor that checks the conditions to enter the system.

An example of simple ID duplication is explained below. When a user having the normal ID number "DDDDDDDD" enters his or her simplified ID aaa from the I/O device (120), the simplified ID detecting

EP 0 460 216 A1

section (123) of the simplified ID processor (118) detects a request for approval to enter the system. The simplified ID detecting section (123) receives the simplified ID aaa and sends it to the simplified ID duplication checking section (121) to request a check of the simplified ID. The simplified ID duplication checking section (121) checks if the simplified ID aaa and the duplication number are registered in the simplified ID duplication check file (126). In this example, because the simplified ID "aaa" is registered in the simplified ID duplication check file (126) and the duplication number is 2, its entry to the system cannot be immediately approved. Instead, the simplified ID duplication checking section (121) requests the I/O device (120) to enter the normal ID again through the normal ID request section (122). When the ID number "DDDDDDDD" is entered again from the I/O device (120), the simplified ID duplication checking section (121) approves entry to the system after confirming that both the ID number and the combination of the ID number and the previous simplified ID aaa exist.

If more than one simplified ID are registered, change or deletion of the duplicate simplified ID is not accepted. Even though a duplicate simplified ID is registered in the storage device (119), re-entry of the normal ID is requested as explained above. Thus, entry to the system with a duplicate simplified ID is not approved.

Because the duplicate simplified ID is not a simplified ID any more, it cannot readily enter the system. The embodiment can be easily realized in a network system which includes a switching network.

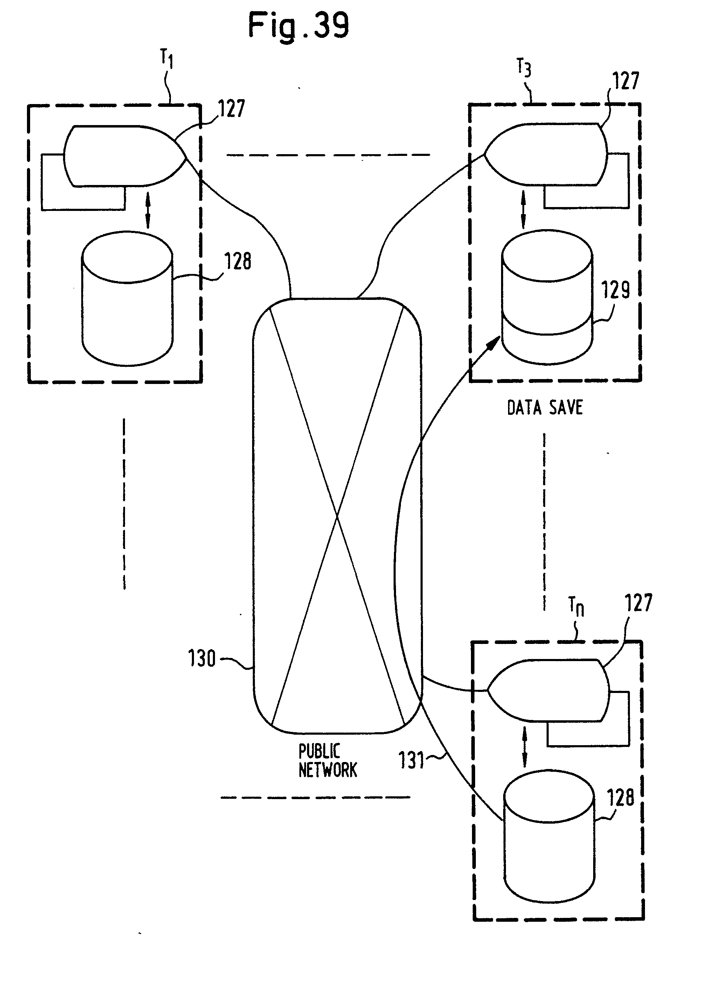

FIG. 39 illustrates the security management procedure which enables storage files to be provided during data saving between terminals in the network.

In FIG. 39, (T₁) to (Tₙ) are terminals (information processing devices) constituting the network system. The number 127 indicates the data processing section consisting of application programs, the file management program, the database management system, the operating system, and other systems. The number 128 indicates the file device constituting databases. The number 129 indicates the empty file. The number 130 indicates the public network to which terminals are connected. The number 131 indicates the data flow when file data is saved from a file in the terminal (Tₙ) to the empty file 129 in the terminal (T₃).

When a request to save file data in the terminal (Tₙ) occurs, the terminal (Tₙ) checks the file capacity required to save the file data and sends the file capacity and the request to save the file data. A terminal receiving the saving request through the public network (130) checks its empty file capacity and compares the empty file capacity with the saving file capacity to determine whether it can accept the saving request from the terminal (Tₙ). Then the terminal replies to the requesting terminal (Tₙ) through the public network (130). If the response is yes, the requesting terminal (Tₙ) sends the file data to the terminal that issued the response through the public network (130) and the file data is saved in the file device. If the response is no, the requesting terminal (Tₙ) selects the response from another terminal that can perform the processing.

In FIG. 39, the terminal can confirm its empty file capacity. At receipt of a save request, the terminal compares its empty file capacity with the saved file capacity to determine whether the saving request can be accepted. In addition, the file managing program in each terminal confirms and stores the information about the file saved. In this way, files in the terminals connected to the public network are effectively used.

The present invention includes information processing units which have independent distributed databases. Thus the processing units can be also used in a distributed data base system having multiple terminals distributed geographically and/or functionally and connected to a public network.

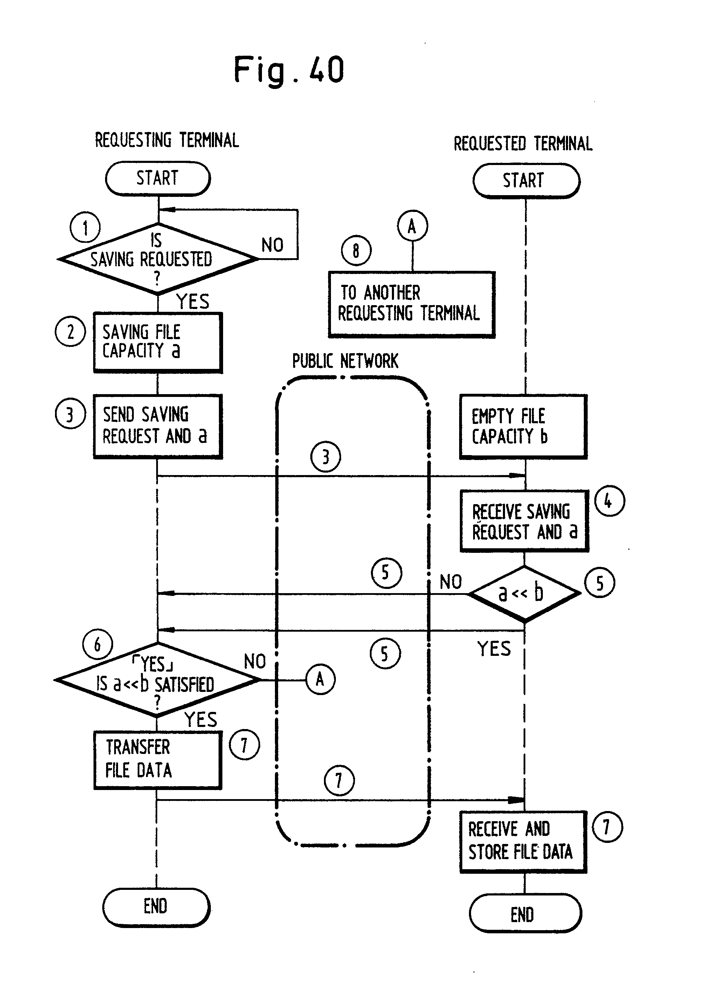

FIG. 40 illustrates the procedure to save file data in the embodiment in FIG. 39.

① Judges whether a request to save file data is generated in a terminal T. If so, advances to step ② and, if not, repeats the judgment.

② The requesting terminal (T) checks the file capacity required to save the file data.

③ The requesting terminal (T) sends the saved file capacity (a) and the saving request to other terminals.

④ Other terminals receive the saved file capacity (a) and the saving request through the public network.

⑤ The requested terminal receiving the saving request and other information compares its empty file capacity (b) with the saved file capacity (a) to judge whether a < b is satisfied. Then the terminal responds to the requesting terminal (T).

⑥ The requesting terminal (T) checks the response satisfies a < b. If so, the terminal (T) advances to step ⑦ .

If not, the terminal (T) advances to step ⑧ .

⑦ The requesting terminal (T) transfers its own file data to the requested terminal. The requested terminal receiving the file data stores the file data to its own file device. In addition, the requesting terminal (T) and the requested terminal confirm their terminal numbers and associated file areas so the file data can be stored using the file management programs.

⑧ The requesting terminal (T) tries to save the file data to another requested terminal. File data is saved

29

by the procedure descried above.

To process step ⑧ , it is possible to either return to step ③ or to receive responses from multiple requested terminals in step ⑥ , create response lists in requested terminals, and search for requested terminals according to the lists.

As described above, in a network system in which a number of terminals are connected to a public network, the public network searches for a terminal containing the empty file capacity required to save file data. Thus, it is possible to use the files in each terminal effectively and since duplication of the files in each terminal is not required the entire cost of the distributed database system is reduced.

FIG. 41 illustrates the concept cf security control by deleting or corrupting a program provided for a user from a database at the end of its use in order to make the program unavailable again.

In FIG. 41, the number 132 indicates the public network and the numbers 133 to 136 indicate terminals constituting a group of terminals in the distributed database system. Especially, the number 133 indicates the requesting terminal, the number 134 indicates the program storage terminal, the number 135 indicates the group managing terminal having the functions of managing resources in the group such as programs and the security and directing deletion or corruption of programs, and the number 130 indicates another general terminal.

The operation consists of the procedures ① to ⑦ as follows:

① If a request to use a program is generated in the program requesting terminal (133), the group managing terminal (135) is notified.

② The group managing terminal (135) has the program resource managing information and notifies the program requesting terminal (133) of the ID (134) of the terminal that has the requested program.

③ The program requesting terminal (133) asks the reported program saving terminal (134) for use of programs.

④ The program saving terminal (134) sends the requested program to the program requesting terminal (133).

⑤ The group managing terminal (135) attaches the deletion program or the automatically corrupting program to the requested program.

⑥ The program requesting terminal (133) executes the requesting program and after processing termination notifies the group managing terminal (135).

⑦ The group managing terminal (135) makes the program requesting terminal (133) delete or corrupt the requested program.

FIG. 42A and FIG. 42B are the detailed flowcharts of the entire operation shown in FIG. 41. The operation is explained below in steps (S-1) to (S-19).

(S-1) An arbitrary terminal requests a program which it wants to use.

(S-2) The program requesting terminal is connected to the group managing terminal.

(S-3) The group managing terminal retrieves the requested program from the program resource managing information.

(S-4) If the requested program is not found, step (S-9) is executed. If found, step (S-5) is executed.

(S-5) The group managing terminal notifies the program requesting terminal of the program saving terminal ID and makes the program requesting terminal ask the program saving terminal for the program. The program saving terminal executes storage of the requested program to its own secondary storage device. This makes installation unnecessary in the program requesting terminal.

(S-6) The program saving terminal sends the requested program to the program requesting terminal.

(S-7) If the requested program is used temporarily, step (S-8) is executed. If it is used permanently, step (S-11) is executed.

(S-8) The group managing terminal checks the destination terminal address of the program transmitted in (S-6).

(S-9) The group managing terminal notifies the program requesting terminal that the program is not found.

(S-10) Processing returns to step (S-1) if it is necessary to retrieve the program again and terminates if it is unnecessary.

(S-11) If the requested program is used temporarily, the group managing terminal also sends the deleting program or the automatically corrupting program to the program requesting terminal.

(S-12) The program requesting terminal performs processing using the requesting program.

(S-13) After terminating use of the program, the program requesting terminal notifies the group managing terminal of the termination.

(S-14) The group managing terminal checks whether use of the requested program terminated is temporary or permanent. The group managing terminal ends the processing if the program is used permanently and executes step (S-15) if the program is used temporarily.

(S-15) The group managing terminal checks whether the deleting program or the automatically corrupting program is attached to the requested program. The group managing terminal executes step (S-16) if attached, or step (S-19) if not.

(S-16) The group managing terminal executes step (S-17) if the deleting program is attached to the requested program, or step (S-18) if the automatically corrupting program is attached.

(S-17) The group managing terminal executes the deleting program to delete the requested program located in the program requesting terminal, and then terminates processing.

(S-18) The group managing terminal executes the automatically corrupting program to corrupt the requested program located in the program requesting terminal, which makes the program unavailable again and then terminates processing.

(S-19) The group managing terminal changes the installation table and secondary storage device in the program requesting terminal to make the requested program unavailable again.

As described above, any program requested to be used temporarily by a terminal in the network cannot be used again, because it is erased or changed in the requesting terminal. This is very beneficial when accounting is performed according to the number of times used.

## Claims

1. In a distributed database system in which multiple terminals (including distributed and independent databases) are connected to a communication network, security control comprising the steps of:

    (a) dividing said multiple terminals into groups,
    (b) including terminals controlling the groups, and
    (c) allowing the terminals managing said groups to provide the security control of the databases included in the terminals of the groups.

2. The security control in a distributed database system according to claim 1, comprising terminals having security control functions in a hierarchical structure for security control extending over multiple groups.

3. In a distributed database system in which multiple terminals (including distributed and independent databases) are connected to a communication network, security control comprising the additional steps of,

    (a) constituting said terminals so that each of the terminals has label information holding section saving labels for identifying remote terminals with which the terminal is allowed to communicate at least under a certain conditions, and level information holding section saving levels for defining the authority of the terminal to access resources possessed by the remote terminal with which the terminal communicate and
    (b) providing said terminals with communication with each other under the conditions that the communication is permitted on said labels and accesses permitted on said levels.

4. Security control in a distributed database system according to claim 3, comprising the additional steps of:

    (a) defining multiple group labels maintaining security by enabling accesses with passwords,
    (b) defining member labels maintaining security by enabling accesses with passwords included in different group labels,
    (c) allowing terminals to which proper passwords in said group or member labels are entered to communicate with each other through said communication network,
    (d) defining keyword labels enabling access to passwords included in the group label from said group label with predefined keywords,
    (e) allowing terminals to which keywords in said keyword labels are entered to communicate with each other through said communication network, and
    (f) allowing the terminal to which said keyword is entered to send the keyword and the terminal receiving the keyword to compare the received keyword with that entered to said terminal and provide actual data communication when they match in the communication through keywords in said keyword label.

5. Security control in a distributed database system according to claim 3, comprising the additional steps of:

(a) determining a single terminal in which the authority information defining the authority of a specific user to access resources for distributed control of the user authority information at terminals without duplication and providing a user with a specific user ID code, which includes the terminal code indicating the terminal in which the authority information of the user is stored; and

(b) providing each terminal with a authority information holding section saving the authority information of users specifying their own terminals with user ID codes and allowing each terminal to identify the terminal in which the authority information of the user is registered from the user ID code of the user when it is requested to check the authority of the use; to find the authority information from its own authority information holding section when the terminal saves the authority information and notify the requesting terminal of the information, or request another terminal to get the authority information if the different terminal saves the authority information of the user and notify the requesting terminal of the information.

6. Security control in a distributed database system according to claim 3, comprising additional steps of:

(a) providing either or both of accessing and accessed terminals with labels in a hierarchical structure and key codes corresponding to the labels and a hierarchical memory storing the table of group labels correlating the key code of the accessing user with that of the accessed user with an arbitrary combination,

(b) providing means for setting labels to newly established said labels; and

(c) providing means for judging whether the key code entered by the accessing terminal matches the key code corresponding to the label stored in said hierarchical memory and generate the activation enables signal to execute the access to the accessed terminal when they match, and enabling group labels registered to said hierarchical memory by said label setting means to be newly established and also the data in the hierarchical memory to be indexed by said judging means for security judgment.

7. Security control in a distributed database system according to claim 3, further comprising

(a) a password storage section storing user ID codes and multiple passwords,

(b) a time managing section outputting check signals at every set time,

(c) a password request section requesting input of a password depending on the check signal output from the time managing section,

(d) a password judging section checking that the password entered for a password entry request from the password request section matches the password read from said password storage section at the password request; and

(e) means for approving access continuation under the condition of the agreement of passwords requested every set time or period.

8. Security control in a distributed database system according to claim 3, further comprising

(a) means for allowing a terminal to refer to specified data in the database when a proper user ID code and password are entered from the terminal,

(b) a private information holding section storing the level for each of said user ID codes in the terminal,

(c) a data information holding section storing said passwords by the number depending on the importance and the number of passwords for each of said data,

(d) a security processing section checking whether the said data reference is allowed; and

(e) means for enabling said security processing section to determine the number of passwords to be entered based on the level corresponding to the entered user ID code and the number of passwords corresponding to the specified data and to allow the specified data reference when each of the entered passwords matches any of the passwords stored in said data information holding section.

9. Security control in a distributed database system according to claim 3, further comprising

(a) means for allowing a terminal to refer to specified data in the database when a proper user ID code and password is entered from the terminal,

(b) a private information holding section storing multiple passwords for each of said user ID codes in the terminal,

(c) a data information holding section storing said passwords by the number depending on the importance and the number of passwords for each of said data,

(d) a security processing section checking whether the said data reference is allowed; and

32

(e) means for enabling said security processing section to allow said specified data reference when passwords are entered by said number of passwords corresponding to the specified data and said each of the entered passwords matches any of the multiple passwords stored in said data information holding section and corresponding to said entered user ID code.

10. Security control in a distributed database system according to claim 3, further comprising
    (a) terminals each of which include
        (1) an I/O device for password input,
        (2) a password check processing section for data checking with the said passwords, and
        (3) a password storage area storing the information on character strings constituting said passwords and the character string input periods; and
    (b) means for allowing said password check processing section to extract the information on the period required to enter said password depending on the input of the password from said I/O device and collate the information on the entered password and the extracted input period with the information on the character string constituting said stored password and the input period.

11. Security control in a distributed database system according to claim 3, further comprising
    (a) means for allowing use of a simplified ID to access to the distributed database system,
    (b) storage device including an ID managing file storing the normal and simplified IDs of the registration applicant for registration of the simplified ID and a simplified ID duplication check file storing at least the number of duplications of the simplified ID and the normal ID of the duplicate registration applicant when the simplified ID is duplicate,
    (c) a simplified ID duplication check section checking the duplication of each entered simplified ID,
    (d) a normal ID request section requesting the normal ID instead of an entered simplified ID when it is judged in said simplified ID duplication check section that the simplified ID is duplicate in accessing system entry; and
    (e) means for constituting system entry based on the normal ID instead of the simplified ID when the registration of the simplified ID is duplicate.

12. Security control in a distributed network system according to claims 1, 2, and 3, further comprising
    (a) means for allowing a terminal in which the file device storing databases is requested to save file data to check the saved file capacity required to save the file data and send the saved file capacity and the saving request to other terminals,
    (b) means for allowing the terminals receiving the saving request to check their own empty file capacity, compare the empty file capacity with said saved file capacity to determine whether said saving request can be accepted, and reply the results to the requesting terminal; and
    (c) means for allowing the requesting terminal to find the terminal accepting the saving request from the responses and save the file data to the accepting terminal through the communication network.

13. Security control in a distributed database system according to claims 1 and 2, further comprising means for allowing the group managing terminal for a terminal requesting to access the database data of a program to attach the deleting or automatically corrupting program to said requested program passed to the access requesting terminal and execute said deleting or automatically corrupting program to delete or corrupt the requested program when the access requesting terminal terminates to process said requested program.

# Fig.1A

GROUP A 9

2 (MANAGING TERMINAL) ① REGISTRATION

5

6

ACCESS ENABLE ② REQUEST

3

③ COMMUNICA-TION

7

REJECT

8

4

1 PUBLIC NETWORK

# Fig.1B

INTER-GROUP MANAGING TERMINAL 11

④ REGISTRATION

GROUP A 9

1 PUBLIC NETWORK

5

6

2

(MANAGING TERMINAL)

⑥ RETRIEVAL

ACCESS REQUEST ⑤

3

REJECT

7

8

4

(MANAGING TERMINAL)

10

GROUP B

# Fig.2

GROUP 1       GROUP 2       GROUP n

● : MANAGING TERMINALS

□ : 1'st DIMENSION INTER-GROUP MANAGING TERMINALS

■ : 2'nd DIMENSION INTER-GROUP MANAGING TERMINALS

◎ : n'th DIMENSION INTER-GROUP MANAGING TERMINALS

# Fig.3

SECURITY MANAGEMENT
TABLE SMT

MANAGING
TERMINAL
DECLARATION
COMMAND

GTL LISTING TERMINALS
IN THE GROUP

INFORMATION
ID

| | ........ | ID |
|---|---|---|
| $D_1$ | | $T_1$ |
| $D_2$ | | $T_2$ |
| $D_3$ | | $T_3$ |
| ⋮ | | ⋮ |

○ $T_1$
$T_2$
$T_3$
$T_4$
$T_5$

REGISTRATION OF
INFORMATION IDs AND
TERMINAL IDs

$T_1$

$T_1$: MANAGING TERMINAL
$T_2 \sim T_5$: TERMINALS

POSTING OF MANAGING
TERMINAL AND GTL

$T_2$   $T_3$   $T_4$   $T_5$

GTL | ○ $T_1$
$T_2$
$T_3$
$T_4$
$T_5$

GTL | ○ $T_1$
$T_2$
$T_3$
$T_4$
$T_5$

GTL | ○ $T_1$
$T_2$
$T_3$
$T_4$
$T_5$

GTL | ○ $T_1$
$T_2$
$T_3$
$T_4$
$T_5$

# Fig. 4

# Fig.5

LABEL $A_2$

LABEL $B_1$

LABEL $A_1$

LABEL $A_3$

13

16  17  18  19

20

LABEL $C_1$

14

21

12 : COMMUNICATION NETWORK

OVERALL LABEL D

15

23

22

14 : TERMINAL

| LABEL 24 | | LEVEL 25 | RESOURCE 26 | | 27 | 28 |
|---|---|---|---|---|---|---|
| VERTICAL $A_1$ | | 10 | NO.1 | $\geq 5$ | LABEL COLLATION FUNCTION SECTION | LEVEL COLLATION FUNCTION SECTION |
| HORIZONTAL $B_1$ | | | NO.2 | $\geq 1$ | | |

EP 0 460 216 A1

# Fig. 6

USER TERMINAL

DATABASE TERMINAL

(1) | ISSUE COMMUNICATION REQUEST | → | (2) RECEIVE REQUEST

(3) | TRANSMIT LABELS | → | (4) RECEIVE LABELS

(5) LABELS MATCH? — NO →

(6) LABELS MATCH? — NO →

YES (5→YES)

(7) | ISSUE RESOURCE REQUEST | → | (8) RECEIVE REQUEST

(9) | TRANSMIT LEVEL | → | (10) RECEIVE LEVEL

(11) LEVELS MATCH? — NO →

(12) LEVELS MATCH? — NO →

YES

(14) | RECEIVE COMMAND | ← | (13) TRANSMIT COMMAND

(15) | REQUEST REAL DATA | → | (16) RECEIVE REQUEST

(18) | RECEIVE REAL DATA | ← | (17) TRANSMIT REAL DATA

(19) | DISPLAY REAL DATA IN CRT

ACCESS DISABLED

# Fig.7A

COMPANY A 30    29    PUBLIC NETWORK    SCHOOL B 31

a    b

c    d    32

e    f

g    h

i    33

# Fig.7B

34    T1    29    PUBLIC NETWORK    T2    34
(3)
i
AA    e    AA

(1) G01-AA-T1

(2)

35    G01-AA    35
REAL DATA

# Fig.7C

REAL DATA    36

ENCODED

G 01    A A    T1    37

COMMAND    KEYWORD    TERMINAL NUMBER

# Fig.8

SENDING TERMINAL T1
(KEYWORD i)

RECEIVING TERMINAL T2
(PASSWORD e)

DATA AND COMMAND MANAGING SECTION — 38

COMMUNICATION CONTROL SECTION — 39

TRANSMIT SECTION — 40

KEYWORD MANAGING SECTION

RECEIVE SECTION — 41

DATA STORING SECTION — 35

34

29 PUBLIC NETWORK

COMMUNICATION CONTROL SECTION

MAIL STORING SECTION — 42

TRANSMIT SECTION

RECEIVE SECTION

KEYWORD COLLATING SECTION — 46

I/O CONTROL SECTION — 43

SCREEN DISPLAY SECTION — 44

KEYBOARD

34

EP 0 460 216 A1

# Fig.9

TRANSMITTING
TERMINAL (T1)

RECEIVING
TERMINAL (T2)

USER AT
RECEIVING TERMINAL

① TRANSMIT DATA
COMMAND, TRANS-
MISSION NO.(T1) AND
KEYWORD

② RECEIVE DATA (COMMAND)
TRANSMITTING
TERMINAL (T1) AND
KEYWORD

③ POST RECEPTION

INPUT KEYWORD

④ KEYWORDS MATCH ? — NO

YES

⑤ REQUEST REAL DATA

⑥ RECEIVE REQUEST

REJECT DISPLAY OF REAL DATA

⑦ TRANSMIT REAL DATA

⑧ RECEIVE REAL DATA

⑨ OUTPUT

42

# Fig.10

# Fig.11

| USER IDENTIFICATION CODE | |
|---|---|
| REGISTRATION TERMINAL CODE | USER CODE |
| C O M 0 0 1 | I D 0 0 0 1 |
| C O M 0 0 1 | I D 0 0 0 2 |
| C O M 0 0 1 | I D 0 0 0 3 |
| C O M 0 0 1 | I D 0 0 0 4 |
| | |

USER IDENTIFICATION CODES REGISTERED IN TERMINAL A

| | |
|---|---|
| C O M 0 0 2 | I D 0 0 0 1 |
| C O M 0 0 2 | I D 0 0 0 2 |
| C O M 0 0 2 | I D 0 0 0 3 |

USER IDENTIFICATION CODES REGISTERED IN TERMINAL B

# Fig.12

AUTHORITY CHECK REQUEST USER IDENTIFICATION CODE (A)

AUTHORITY CHECK REQUEST USER IDENTIFICATION CODE (a)

47

TERMINAL A (COM001)

ACCEPTANCE OF CHECK REQUEST AND REPLY — 53

DISTRIBUTION OF REGISTRATION TERMINAL

OWN TERMINAL (B)(b) ANOTHER TERMINAL — 54

55 56

AUTHORITY CHECK (D)

(h) RESULT AUTHORITY="3"

ISSUANCE OF CHECK REQUEST TO ANOTHER TERMINAL

(C) (c)

AUTHORITY INFORMATION

| USER CODE | AUTHORITY LEVEL |
|---|---|
| I D 0 0 0 1 | 1 |
| I D 0 0 0 2 | 3 |
| ⋮ | ⋮ |

50

TERMINAL B (COM002)

LINE

48

ACCEPTANCE OF CHECK REQUEST AND REPLY (d)

DISTRIBUTION OF REGISTRATION TERMINALS (e)

AUTHORITY CHECK (g) AUTHORITY="3"

(f)

AUTHORITY INFORMATION

| USER CODE | AUTHORITY LEVEL |
|---|---|
|  |  |

# Fig.13

# Fig.14

# Fig.15

USER CODE

◎ COMPANY ......................................... a
(PRESIDENT)

○○ SECTION ................................. b
(SECTION MANAGER)

○○○ DEPARTMENT ......................... d
(DEPARTMENT MANAGER)

○○○○ GROUP ......................... i
(GROUP LEADER)

○○○○○ ........... n,o,p
(MEMBER)

○○△ DEPARTMENT ............... e

○○△○ GROUP ........... j

○○△○○ ...... q,r

○○△△ GROUP ......... k

○○△△△ ......s,t,u

○○□ DEPARTMENT ............ f

○○□○ GROUP ........... l

○○□○○ ......v,w

X X SECTION ...................... c

X X X DEPARTMENT ............ g

X X X X GROUP ........... m

X X X X X .........x,y,z

X X ○ DEPARTMENT ............ h

PROCESS LABEL
HIERARCHY ASSIGNMENT

╴╴╴ PROCESS

▭ ╴╴ ~ LABEL NAME

# Fig.16

| COMPANY | SECTION | DEPARTMENT | GROUP | MEMBER | USER CODE |
|---------|---------|------------|-------|--------|-----------|
| ◉ | ○○ | | | | a |
| ◉ | ○○ | | | | b |
| ◉ | ○○ | ○○○ | | | d |
| ◉ | ○○ | ○○○ | ○○○○ | | i |
| ◉ | ○○ | ○○○ | ○○○○ | ○○○○○ | n+o+p |
| ◉ | ○○ | ○○△ | | | e |
| ◉ | ○○ | ○○△ | ○○△○ | | j |
| ◉ | ○○ | ○○△ | ○○△○ | ○○△○○ | q + r |
| ◉ | ○○ | ○○△ | ○○△△ | | k |
| ◉ | ○○ | ○○△ | ○○△△ | ○○△△△ | s + u |
| ◉ | ○○ | ○○△ | ○○△△ | ○○△△X | j + u |
| ◉ | ○○ | ○○□ | | | f |
| ◉ | ○○ | ○○□ | ○○□○ | | l |
| ◉ | ○○ | ○○□ | ○○□○ | ○○□○○ | v + w |
| ◉ | X X | | | | c |
| ◉ | X X | X X X | | | g |
| ◉ | X X | X X X | X X X X | | m |
| ◉ | X X | X X X | X X X X | X X X X X | x+y+z |
| ◉ | X X | X X○ | | | h |

α →
β →
γ →

COMPANY KEY   SECTION KEY   DEPARTMENT KEY   GROUP KEY   MEMBER KEY

EP 0 460 216 A1

# Fig.17

(TABLE OF CORRESPONDENCE BETWEEN PROCESS AND LABEL)

| PROCESS | LABEL |
|---------|-------|
| A | ○ ○ △ DEPARTMENT |
| B | ○ ○ △ △ GROUP |
| D | × × × DEPARTMENT |
| E | ○ ○ SECTION |
| G | ○ ○ □ DEPARTMENT |

49

EP 0 460 216 A1

# Fig.18

START

(S-20) DOES KEY ALREADY EXIST ? — YES

NO

(S-21) MEMBER KEY INCLUDING j AND u? — YES → (S-22) SET NEW MEMBER KEY

NO

(S-23) GROUP KEY INCLUDING j AND u? — YES → (S-24) SET NEW MEMBER KEY

NO

(S-25) DEPARTMENT KEY INCLUDING j AND u? — YES → (S-26) SET NEW GROUP KEY

NO

(S-27) SECTION KEY INCLUDING j AND u? — YES → (S-28) SET NEW DEPARTMENT KEY

NO

(S-29) COMPANY KEY INCLUDING j AND u? — YES → (S-30) SET NEW SECTION KEY

NO

(S-31) LOGICAL ERROR

END

# Fig.19

64-1 USER 1

64-2 USER 2

64-3 USER 3    DB

63 NETWORK    L    L

64-4 USER 4    DB

64-5 USER 5

64-n USER N

50

# Fig.20

66-1    65    66-2

SWITCHED NETWORK

66-3    66-4

66-i    66-n

67   MANAGEMENT CENTER

70   PASSWORD REQUEST SECTION

71   PASSWORD JUDGEMENT SECTION

73   ADDRESS GENERATION CIRCUIT

68   PASSWORD STORAGE SECTION

69   TIME MANAGEMENT SECTION

FOR ENTRY CONTINUATION OR RELEASE

72   CONTROL SECTION

ACCESS ID

I/O ID

PASSWORD UNIT TIME/ PASSWORD CHECK YES OR NO

# Fig.21

| USER ID NUMBER | LINK CODE |
|---|---|
| | |
| | |
| | |
| | |
| | |

_40_

```
GENERAL PRIVATE INFORMATION
SUCH AS NAME,ADDRESS,
TELEPHON NUMBER,AND SO
FORTH
PASSWORD UNIT TIME
PASSWOR CHECK
YES OR NO
```
77

| | LINK CODE |
|---|---|

78   79

80

| PASSWORD DATA |
|---|
| |
| |
| |
| |
| |
| |

↓ MAX

# Fig.22

START

INPUT USER ID NUMBER — S1

INPUT UNIT TIME FOR PASS-WORD TIME MONITORING — S2

INPUT WHETHER PASSWORD CHECK REQUEST IS ISSUED WHEN TIME PERIOD CHANGES — S3

INPUT PASSWORDS CORRESPONDING TO TIME PERIODS BY THE NUMBER OF TIME PERIODS — S4

END

# Fig. 23

```
                    START

S11 ──  INPUT USER ID NUMBER

S12 ──  RETRIEVE PASSWORD DATA TO
        AQUIRE it

S13 ──  AQUIRE CURRENT TIME IN
        MACHINE

S14 ──  FETCH PASSWORD CORRESPONDING
        TO CURRENT TIME BY USING
        PASSWORD UNIT TIME VALUE

REINPUT

S15 ──  INPUT PASSWORD

        NO   S18                NO        S16
     THIRD ERROR ?  ◄───────   PASSWORDS
                                MATCH ?

        YES   S19                  YES    S17
S19  RELEASE CONNECTION WITH    PERMIT ENTRY AND
     SWITCHED NETWORK           START SERVICE

                                   END
```

# Fig.24

START

S21 — SERVICE IN PROGRESS

S22 — REQUEST PASSWORD REENTRY WHEN PASSWORD VALID TIME JUDGED BY PASSWORD TIME UNIT VALUE ENDS

S23 — INPUT PASSWORD

S26 — THIRD ERROR ? NO

S24 — PASSWORDS MATCH ?

NO

YES — S27 — RELEASE CONNECTION WITH SWITCHED NETWORK

S25 — CONTINUE SERVICE

END

# Fig.25A

# Fig. 25 B

TERMINAL

SYSTEM

81

103

90 LEVEL FETCH SECTION

LEVEL

95 TRANSMIT SECTION

96 RECEIVE SECTION

REFERENCE DATA NAME

99 DATA INFORMATION FETCH SECTION

82

USER ID

LEVEL

INPUT COUNT CALCULATE SECTION

100

85

REFERENCE DATA NAME

MULTIPLE PASSWORDS

DATABASE

PRIVATE INFORMATION HOLDING SECTION

92 DATA DISPLAY PROCESSING SECTION

DATA

MULTIPLE PASSWORDS

PASSWORD CHECK SECTION

91

97 RECEIVE SECTION

98 TRANSMIT SECTION

INPUT REQUEST

101

I/O PROCESSING SECTION

INPUT REQUEST

DATA

DATA FETCH SECTION

102

93 INPUT SECTION

94 DISPLAY SECTION

EP 0 460 216 A1

56

# Fig. 25 C

```
┌─────────────────────┐
│ PRIVATE INFORMATION │
│ (USER ID)           │
└─────────────────────┘
        │
        └──┌─────────────┐
           │   LEVEL     │ ～ 83
           └─────────────┘
```

# Fig. 25 D

```
┌─────────────────────┐
│ DATA INFORMATION    │
│ (DATA NAME)         │
└─────────────────────┘
        │
        └──┌────────────────┬─────┐
           │  PASSWORDS     │  n  │ ～ 89
           └────────────────┴─────┘
              │
              ├──┌────────────┐
              │  │ CHARACTER  │
              │  │ STRING 1   │
              │  └────────────┘
              │       ⋮
              │
              └──┌────────────┐
                 │ CHARACTER  │
                 │ STRING n   │
                 └────────────┘
```

PASSWORD CHARACTER
STRING INFORMATION 8

# Fig.26

— TERMINAL —     — SYSTEM —

START

(1) REQUEST DATA → DATA NAME+ LEVEL L → RECEIVE REQUEST

(2) RETRIEVE DATA INFORMATION ← 85

PASSWORD PRESENT ? → NO

YES

CALCULATE PASSWORD INPUT COUNT
$m \leftarrow n - L$

(4) RECEIVE INPUT REQUEST ← NUMBER OF PASSWORDS m

(5) INPUT m PASSWORDS

SEND PASSWORDS

(3) REQUEST INPUT OF m PASSWORDS

PASSWORD CHARACTER STRING

(6) PASSWORDS MATCH ?

NO → NEGATIVE RESPONSE

YES

(8) RECEIVE DATA ← DATA

DISPLAY DATA

END

(7) FETCH DATA ← 85

SEND DATA

# Fig.27A

USER ID INPUT

SPECIFICATION OF
REFERENCE DATA

MULTIPLE-
-PASSWORD INPUT

81

TERMINAL

84

SECURITY
PROCESSING
SECTION

83'

86

NUMBER OF
PASSWORDS

DATA INFORMATION
HOLDING SECTION

USER ID ~ 88

MULTIPLE PASSWORD ~ 89

PRIVATE INFORMATION
HOLDING SECTION ~ 82

87

DATA

85

DATABASE

EP 0 460 216 A1

# Fig.27 B

TERMINAL

SYSTEM

81

103

PRIVATE INFORMATION
HOLDING SECTION

82

101

95

96

REFERENCED DATA NAME

DATA INFORMATION
FETCH SECTION

99

DATABASE

85

DATA
REQUEST

TRANSMIT SECTION

RECEIVE SECTION

PASSWORD CHECK SECTION

PASSWORD

INPUT
PASSWORD

REFERENCED
DATA NAME

INPUT
REQUEST

DATA
REREQUEST

90'

PASSWORD
FETCH SECTION

DATA FETCH
SECTION

102

USER
ID

91

I/O PROCESSING SECTION

DATA DISPLAY
PROCESSING SECTION

RECEIVE SECTION

97

TRANSMIT SECTION

98

DATA

92

93

INPUT
SECTION

DISPLAY
SECTION

94

60

EP 0 460 216 A1

# Fig.27C

```
┌─────────────────┐
│ PRIVATE         │
│ INFORMATION     │
└────┬────────────┘
     │
     │   ┌──────────────┐
     ├───│ USER ID      │──── 88
     │   └──────────────┘
     │
     │   ┌──────────────────┐
     └───│    PASSWORD      │
         └──────┬───────────┘
                │
                │   ┌──────────────┐  ┐
                ├───│ CHARACTER    │  │
                │   │ STRING 1     │  │
                │   └──────────────┘  │
                │          ·          ├ 89
                │          ·          │
                │   ┌──────────────┐  │
                └───│ CHARACTER    │  │
                    │ STRING n     │  │
                    └──────────────┘  ┘
```

# Fig.27D

```
┌─────────────────────┐
│ DATA INFORMATION    │
│ (DATA NAME)         │
└────┬────────────────┘
     │   ┌──────────────────────┐
     └───│   NUMBER OF          │──── 83'
         │   PASSWORDS = m      │
         └──────────────────────┘
```

# Fig. 28

— TERMINAL —          — SYSTEM —

START

① REQUEST DATA —— DATA NAME → RECEIVE REQUEST

② RETRIEVE DATA INFORMATION ← 85

NUMBER OF PWS: m

④ RECEIVE INPUT REQUEST

PW FOUND ? —— NO

82

⑤ INPUT m PASSWORDS

YES

③ REQUEST INPUT OF m PASSWORDS

FETCH PW PASSWORDS

PASS-WORD EQUAL ? —— NO

⑥

YES

REQUEST DATA —— DATA NAME → RECEIVE REREQUEST

⑦

RECEIVE DATA

FETCH DATA ← 85

⑧

DISPLAY DATA

DATA

DATA TRANSFER

END

# Fig. 29

PASSWORD CHARACTER STRING (INPUT TIME) → I/O DEVICE 104

110-1

111 SWITCHING NETWORK

TERMINAL 110-3

PASSWORD STORAGE AREA 107

| PW 1 | CHARACTER STRING | TIME |
| PW 2 | CHARACTER STRING | TIME |
| ⋮ | | |
| PW n | CHARACTER STRING | TIME |

108  109

110-2

CENTER (TERMINAL)

PROCESSING UNIT

PASSWORD CHECK PROCESSING SECTION

106

TERMINAL 110-4

112

DATABASE

EP 0 460 216 A1

# Fig.30A

TIME

PW

113-1

113-2

113

# Fig.30 B

114-1

ID

TIME

114-3

114-2

114

PW

# Fig.30C

CHARACTER SAVE AREA

115

| A | A | A |

(n CHARACTERS)

INPUT START
SPECIFICATION

| A |    | A |    | A |

INPUT TERMINATION
SPECIFICATION

[SECOND]

1
SECOND

2
SECONDS

3
SECONDS

4
SECONDS

117

TIMER

SAVED

CLEARED
(RESTART)

116

| 1 | 2 | 3 | 4 |

(n +1 TIME
DATA ITEMS)

TIMER VALUE SAVE AREA

# Fig.31

START

① WAIT FOR PASSWORD INPUT

START TIMER

CLEAR CHARACTER COUNTER

② N-th CHARACTER FOUND

③ SAVE CHARACTER

SAVE TIMER VALUE

CLEAR TIMER VALUE

⑤ n + 1

④ END KEY? (EXECUTE KEY ?) — NO / YES

⑥ TRANSFER DATA

⑦ STORE OR CHECK? — STORE / CHECK

⑧ CHECK CHARACTER DATA AND TIME INTERVAL DATA

⑨ STORE CHARACTER DATA AND TIME INTERVAL DATA

PASSWORD ERROR

END

# Fig.32

① SET RETRIEVAL COUNTER (N) TO INITIAL VALUE (0)

② COMPARE N-th CHARACTER OF INPUT PASSWORD WITH N-th CHARACTER OF STORED PASSWORD

— UNEQUAL —— PASSWORD ERROR.REQUEST REINPUT

EQUAL

③ COMPARE N-th TIME INTERVAL OF INPUT DATA WITH N-th TIME INTERVAL OF STORED DATA

— UNEQUAL —— PASSWORD ERROR.REQUEST REINPUT

EQUAL

INCREMENT RETRIEVAL COUNTER (N) BY 1 (N+1)

④ ACQUIRE N+1-th CHARACTER OF INPUT PASSWORD AND N+1-th CHARACTER OF STORED PASSWORD

STORED PASSWORD DATA IS FOUND

— INPUT PASSWORD —— PASSWORD ERROR.
DATA IS NOT FOUND    REQUEST REINPUT

— BOTH DATA ITEMS —— CHECK —— COMPLETION
ARE NOT FOUND    TERMINATION

66

# Fig.33

START

(10) WAIT FOR PASSWORD INPUT

START TIMER

SET CHARACTER COUNTER TO 0

(11) INPUT OF n-th CHARACTER

(12) SAVE CHARACTER

SAVE TIMER VALUE

CLEAR TIME

(18) $n + 1$

(13) TRANSFER DATA

(14) STORE OR CHECK? — STORE

(15) CHECK — CHECK CHARACTER DATA AND TIME INTERVAL DATA

(16) STORE CHARACTER DATA AND TIME INTERVAL DATA

(17) NO — END KEY (EXECUTE KEY) ?

PASSWORD ERROR

YES

END

## Fig.34

120

SIMPLIFIED ID
PROCESSING UNIT        124        118

I/O DEVICE

NORMAL ID
PROCESSING UNIT

TO NORMAL ID
PROCESSING UNIT

123

SIMPLIFIED ID
DETECTING
SECTION

119

STORAGE DEVICE

121

125

ID MANAGEMENT
FILE

SIMPLIFIED ID
DUPLICATION
CHECK SECTION

122

126

SIMPLIFIED ID
DUPLICATION
CHECK FILE

NORMAL ID RE-
QUESTING SECTION

## Fig.35

| MANAGEMENT NO. | ID NO. | SIMPLIFIED ID |
|---|---|---|
| 1 | A A A A A A A | a a a |
| 2 | B B B B B B B | b b b |
| 3 | C C C C C C C | c c c |
| 4 | D D D D D D D | d d d |

## Fig.36

| SIMPLIFIED ID | NUMBER OF DUPLICATIONS | ID NUMBER STORAGE NO. |
|---|---|---|
| a a a | 2 | 1. 4 |
| b b b | 1 | 2 |
| c c c | 1 | 3 |

68

# Fig.37

START

(1) ENTER ID NUMBER AND
SIMPLIFIED ID

(2) DOES
ID MANAGEMENT
FILE INCLUDE ID ?

YES

NO

(3) REGISTER ID NUMBER AND
SIMPLIFIED ID TO ID
MANAGEMENT FILE

(8) REJECT REGISTRATION
APPLICATION

(4) RETRIEVE SIMPLIFIED ID
DUPLICATION CHECK FILE

(5) DOES
THE SAME
SIMPLIFIED ID EXIST
?

YES

NO

(6) STORE NEW ID NUMBER AND
SIMPLIFIED ID TO SIMPLIFIED ID
DUPLICATION CHECK FILE

(7) INCREMENT NUMBER OF
DUPLICATIONS IN SIMPLIFIED
ID DUPLICATION CHECK FILE
AND REGISTER ID NUMBER
STORAGE NO.

END

# Fig.38

START

ENTER SIMPLIFIED ID (11)

DOES SIMPLIFIED ID EXIST IN SIMPLIFIED ID DUPLICATION CHECK FILE ? (12) — NO

YES

IS NUMBER OF DUPLICATIONS IN SIMPLIFIED ID DUPLICATION CHECK FILE MORE THAT 1? (13) — NO

YES

REQUEST TO ENTER ID NUMBER AGAIN (14)

ENTER ID NUMBER (15)

DOES ID NUMBER EXIST IN ID MANAGING FILE ? (16) — NO

YES

DOES PREVIOUS SIMPLIFIED ID AND ID NUMBER EXIST IN ID MANAGING FILE? (17) — NO

YES

APPROVE SYSTEM ENTRY (18)

END

# Fig.39

DATA SAVE

PUBLIC
NETWORK

# Fig. 40

REQUESTING TERMINAL

START

① IS SAVING REQUESTED ? — NO

YES

② SAVING FILE CAPACITY a

③ SEND SAVING REQUEST AND a

⑥ ┌YES┐ IS a<<b SATISFIED ? — NO — Ⓐ

YES

⑦ TRANSFER FILE DATA

END

⑧ Ⓐ TO ANOTHER REQUESTING TERMINAL

PUBLIC NETWORK

③

⑤

⑤

⑦

REQUESTED TERMINAL

START

EMPTY FILE CAPACITY b

④ RECEIVE SAVING REQUEST AND a

⑤ a<<b ⑤ — NO

YES

⑦ RECEIVE AND STORE FILE DATA

END

# Fig.41

PROGRAM
REQUESTING
TERMINAL

PUBLIC NETWORK

132

133

PROGRAM
MANAGING
TERMINAL

⑦ ⑥ ⑤ ①

135

ANOTHER
TERMINAL

130

PROGRAM
SAVING
TERMINAL

③ ④

134

① NOTIFICATION OF PROGRAM USE
② NOTIFICATION OF PROGRAM SAVING TERMINAL
③ REQUEST OF PROGRAM USE
④ PROGRAM TRANSMISSION
⑤ ADDITION OF DELETING OR AUTOMATICALLY CORRUPTING PROGRAM
⑥ NOTIFICATION OF TERMINATION OF PROGRAM USE
⑦ DIRECTION OF PROGRAM DELETION OR CORRUPTION

# Fig.42A

START

①

TERMINAL REQUESTS
PROGRAM TO BE USED   (S-1)

CONNECT TERMINAL TO
GROUP MANAGING
TERMINAL   (S-2)

GROUP MANAGING
TERMINAL RETRIEVES
PROGRAM   (S-3)

(S-4)   DOES
PROGRAM EXIST ?   NO

YES

REFORM INSTALLATION
IN PROGRAM SAVING
TERMINAL   (S-5)

YES

(S-6)   PROGRAM SAVING TERMINAL
SENDS REQUESTED PROGRAM
TO REQUESTING TERMINAL

(S-9)   NOTIFY REQUESTING
TERMINAL OF NO
EXISTENCE OF PROGRAM

(S-7)   IS
PROGRAM
USED PERMANENTLY OR
TEMPORARILY
?

PERMANENT USE

(S-10)   IS
PROGRAM
RETRIEVED AGAIN
?   YES

①

NO

②

(S-8)   TEMPORARY USE

GROUP MANAGING TERMINAL
CHECKS DESTINATION ADDRESS
OF TRANSMITTED PROGRAM

④

③

# Fig. 42 B

③ TEMPORARY USE

(S-11) GROUP MANAGING TERMINALS ATTACHES DELETING OR AUTOMATICALLY CORRUPTING PROGRAM

④ →

(S-12) PROGRAM IS USED

(S-13) AFTER TERMINATION OF USE, REQUESTING TERMINAL NOTIFIES GROUP MANAGING TERMINAL OF TERMINATION

(S-14) IS PROGRAM USED TEMPORARILY OR PERMANENTLY ? — PERMANENT USE → ②

TEMPORARY USE

(S-15) IS DELETING OR AUTOMATICALLY CORRUPTING PROGRAM ATTACHED ? — NO

(S-19) GROUP MANAGING TERMINAL MANIPULATES INSTALLATION TABLE AND SECONDARY STORAGE DEVICE IN REQUESTING TERMINAL

YES

(S-16) IS DELETING OR AUTOMATICALLY CORRUPTING PROGRAM USED ?

DELETING PROGRAM

AUTOMATICALLY CORRUPTING PROGRAM

(S-17) EXECUTE ERASING PROGRAM

EXECUTE AUTOMATICALLY CORRUPTING PROGRAM (S-18)

②

END

75

# Fig.43A

# Fig.43B

# Fig.44

# INTERNATIONAL SEARCH REPORT

International Application No PCT/JP90/01163

## I. CLASSIFICATION OF SUBJECT MATTER (if several classification symbols apply, indicate all) [6]

According to International Patent Classification (IPC) or to both National Classification and IPC

Int. Cl$^5$   G06F12/00

## II. FIELDS SEARCHED

Minimum Documentation Searched [7]

| Classification System | Classification Symbols |
|---|---|
| IPC | G06F12/00, G06F15/16 |

Documentation Searched other than Minimum Documentation
to the Extent that such Documents are Included in the Fields Searched [8]

| | |
|---|---|
| Jitsuyo Shinan Koho | 1971 - 1989 |
| Kokai Jitsuyo Shinan Koho | 1971 - 1989 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | JP, A, 63-278161 (Mitsubishi Electric Corp.), 15 November 1988 (15. 11. 88), (Family: none) | 1 |
| A | JP, A, 63-201747 (Fujitsu Ltd.), 19 August 1988 (19. 08. 88), (Family: none) | 1 |
| A | JP, A, 58-208861 (Fujitsu Ltd.), 5 December 1983 (05. 12. 83), (Family: none) | 1 |
| A | JP, A, 63-100562 (Hitachi, Ltd.), 2 May 1988 (02. 05. 88), (Family: none) | 1, 3 |
| A | JP, A, 64-70860 (Fujitsu Ltd.), 16 March 1989 (16. 03. 89) | 3 |
| A | JP, A, 64-66768 (Fujitsu Ltd.), 13 March 1989 (13. 03. 89) | 1, 2 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| November 26, 1990 (26. 11. 90) | December 10, 1990 (10. 12. 90) |

| International Searching Authority | Signature of Authorized Officer |
|---|---|
| Japanese Patent Office | |

Form PCT/ISA/210 (second sheet) (January 1985)